# EUROPÄISCHE PATENTANMELDUNG

(11) **EP 4 019 195 A1**
(43) Veröffentlichungstag der Anmeldung: **29.06.2022**
(21) Anmeldenummer: 21214297.0
(22) Anmeldetag: 14.12.2021
(51) Int. Cl.: B25F 5/02, A01G 3/00, A01G 3/025

(54) **VERBINDUNGSVORRICHTUNG FÜR EINE WERKZEUGMASCHINE, UND WERKZEUGMASCHINENSYSTEM MIT DER VERBINDUNGSVORRICHTUNG**

(30) Priorität: 23.12.2020 DE 102020216564
(71) Anmelder: Robert Bosch GmbH, 70442 Stuttgart (DE)
(72) Erfinder: Harris, Alex, Suffolk (GB); Zador, Endre, Ipswich (GB)

(57) **Zusammenfassung**

Die Erfindung geht aus von einer Verbindungsvorrichtung für eine Werkzeugmaschine (12a; 12b) und/oder für ein Werkzeugmaschinensystem (10a; 10b), mit zumindest einem ersten Verbindungsstück (68a, 70a; 68b) und mit zumindest einem zweiten Verbindungsstück (72a, 74a; 74b), mit zumindest einer Befestigungseinheit (76a), die dazu vorgesehen ist, das zweite Verbindungsstück (72a, 74a; 74b) über eine Bewegung entlang einer zumindest im Wesentlichen geradlinigen Verbindungsrichtung (78a; 78b) an dem ersten Verbindungsstück (68a, 70a; 68b) zu befestigen, und mit zumindest einer Koppeleinheit (80a; 80b), die zumindest in einem gekoppelten Zustand dazu vorgesehen ist, eine Antriebskraft zumindest im Wesentlichen parallel zur Verbindungsrichtung (78a; 78b) von dem ersten Verbindungsstück (68a, 70a; 68b), insbesondere einem Koppelelement (87a, 88a; 87b) der Koppeleinheit (80a; 80b), das als Teil des ersten Verbindungsstücks (68a, 70a; 68b) ausgebildet ist, an das zweite Verbindungsstück (72a, 74a; 74b), insbesondere ein weiteres Koppelelement (89a, 90a) der Koppeleinheit (80a; 80b), das als Teil des zweiten Verbindungsstücks (72a, 74a; 74b) ausgebildet ist, zu übertragen.

Es wird vorgeschlagen, dass die Befestigungseinheit (76a) dazu vorgesehen ist, das erste Verbindungsstück (68a, 70a; 68b) und das zweite Verbindungsstück (72a, 74a; 74b) bei oder nach einem Ineinanderschieben des ersten Verbindungsstücks (68a, 70a; 68b) und des zweiten Verbindungsstücks (72a, 74a; 74b) in Verbindungsrichtung (78a; 78b) zumindest im Wesentlichen selbstständig aneinander zu befestigen, wobei die Koppeleinheit (80a; 80b) dazu vorgesehen ist, bei oder nach dem Ineinanderschieben des ersten Verbindungsstücks (68a, 70a; 68b) und des zweiten Verbindungsstücks (72a, 74a; 74b) in Verbindungsrichtung (78a; 78b) zumindest im Wesentlichen selbstständig in den gekoppelten Zustand überzugehen.

## Beschreibung

### Stand der Technik

Es ist bereits eine Verbindungsvorrichtung für eine Werkzeugmaschine und/oder für ein Werkzeugmaschinensystem vorgeschlagen worden, mit zumindest einem ersten Verbindungsstück, mit zumindest einem zweiten Verbindungsstück, mit zumindest einer Befestigungseinheit, die dazu vorgesehen ist, das zweite Verbindungsstück über eine Bewegung entlang einer zumindest im Wesentlichen geradlinigen Verbindungsrichtung an dem ersten Verbindungsstück zu befestigen, und mit zumindest einer Koppeleinheit, die zumindest in einem gekoppelten Zustand dazu vorgesehen ist, eine Antriebskraft zumindest im Wesentlichen parallel zur Verbindungsrichtung von dem ersten Verbindungsstück an das zweite Verbindungsstück zu übertragen.

### Offenbarung der Erfindung

Die Erfindung geht aus von einer Verbindungsvorrichtung für eine, insbesondere stabgebundene, Werkzeugmaschine und/oder für ein Werkzeugmaschinensystem, mit zumindest einem ersten Verbindungsstück, welches insbesondere als Teil einer Grundeinheit der Werkzeugmaschine oder als Teil eines Verlängerungsstücks oder Adapterstücks ausgebildet ist, und mit zumindest einem zweiten Verbindungsstück, welches insbesondere als Teil eines Verlängerungsstücks oder Adapterstücks oder als Teil eines Werkzeugaufsatzes für die Werkzeugmaschine ausgebildet ist, mit zumindest einer Befestigungseinheit, die dazu vorgesehen ist, das zweite Verbindungsstück über eine Bewegung entlang einer zumindest im Wesentlichen geradlinigen Verbindungsrichtung an dem ersten Verbindungsstück zu befestigen, und mit zumindest einer Koppeleinheit, die zumindest in einem gekoppelten Zustand dazu vorgesehen ist, eine Antriebskraft zumindest im Wesentlichen parallel zur Verbindungsrichtung von dem ersten Verbindungsstück, insbesondere einem Koppelelement der Koppeleinheit, das als Teil des ersten Verbindungsstücks ausgebildet ist, an das zweite Verbindungsstück, insbesondere ein weiteres Koppelelement der Koppeleinheit, das als Teil des zweiten Verbindungsstücks ausgebildet ist, zu übertragen.

Es wird vorgeschlagen, dass die Befestigungseinheit dazu vorgesehen ist, das erste Verbindungsstück und das zweite Verbindungsstück bei oder nach einem Ineinanderschieben des ersten Verbindungsstücks und des zweiten Verbindungsstücks in Verbindungsrichtung zumindest im Wesentlichen selbstständig aneinander zu befestigen, wobei die Koppeleinheit dazu vorgesehen ist, bei oder nach dem Ineinanderschieben des ersten Verbindungsstücks und des zweiten Verbindungsstücks in Verbindungsrichtung zumindest im Wesentlichen selbstständig in den gekoppelten Zustand überzugehen. Unter "im Wesentlichen selbstständig" soll insbesondere verstanden werden, dass eine Baueinheit, insbesondere die Befestigungseinheit und/oder die Koppeleinheit, durch eine spezielle Betätigung oder Aktion, insbesondere bei oder nach einem Ineinanderschieben des ersten Verbindungsstücks und des zweiten Verbindungsstücks in Verbindungsrichtung, eine bestimmte Tätigkeit und/oder einen bestimmten Zustand, insbesondere eine Befestigung und/oder einen Übergang in den gekoppelten Zustand, ohne weitere Tätigkeiten oder Aktionen eines Benutzers ausführt und/oder einnimmt. Insbesondere ist zu einem Ausführen/Einnehmen der Tätigkeit/des Zustands keine weitere externe Krafteinwirkung nötig. Vorzugsweise ist die Befestigungseinheit dazu vorgesehen, bei oder nach dem Ineinanderschieben des ersten Verbindungsstücks und des zweiten Verbindungsstücks in Verbindungsrichtung das erste Verbindungsstück und das zweite Verbindungsstück ausschließlich über die Bewegung der zwei Verbindungsstücke relativ zueinander und/oder über eine für das Ineinanderschieben aufgewendete Kraft, insbesondere eines Benutzers, aneinander zu befestigen. Bevorzugt ist die Koppeleinheit dazu vorgesehen, bei dem Ineinanderschieben des ersten Verbindungsstücks und des zweiten Verbindungsstücks in Verbindungsrichtung ausschließlich über die Bewegung der zwei Verbindungsstücke relativ zueinander und/oder über eine für das Ineinanderschieben aufgewendete Kraft, insbesondere eines Benutzers, von einem entkoppelten Zustand in den gekoppelten Zustand überzugehen. Bevorzugt ist die Koppeleinheit dazu vorgesehen, insbesondere falls ein Übergang der Koppeleinheit in den gekoppelten Zustand nicht bei dem Ineinanderschieben der Verbindungsstücke erfolgt, nach einem Ineinanderschieben der zwei Verbindungsstücke, insbesondere unabhängig von der Befestigung der zwei Verbindungsstücke in den gekoppelten Zustand überzugehen. Insbesondere ist die Koppeleinheit dazu vorgesehen, nach einem Ineinanderschieben der zwei Verbindungsstücke, insbesondere bei einer die Antriebskraft umfassenden Anwendung der Werkzeugmaschine und/oder des Werkzeugmaschinensystems, bei einer, insbesondere über die Antriebskraft, angetriebenen Bewegung zumindest eines Koppelelements der Koppeleinheit zumindest im Wesentlichen selbstständig in den gekoppelten Zustand überzugehen.

Die zumindest im Wesentlichen geradlinige Verbindungsrichtung verläuft vorzugsweise vollständig zumindest im Wesentlichen parallel zu einer Achse, insbesondere einer Mittelachse der Verbindungsvorrichtung, insbesondere des ersten Verbindungsstücks und des zweiten Verbindungsstücks. Unter "im Wesentlichen parallel" soll insbesondere eine Ausrichtung einer Geraden, einer Ebene oder einer Richtung, insbesondere der Verbindungsrichtung, relativ zu einer anderen Geraden, einer anderen Ebene oder einer Bezugsrichtung, insbesondere der vorher genannten Achse, verstanden werden, wobei die Gerade, die Ebene oder die Richtung gegenüber der anderen Geraden, der anderen Ebene oder der Bezugsrichtung, insbesondere in einer Projektionsebene betrachtet, eine Abweichung von insbesondere kleiner als 8°, vorteilhaft kleiner als 5° und besonders vorteilhaft kleiner als 2°, aufweist. Bevorzugt umfasst die Koppeleinheit zumindest ein, insbesondere das vorher genannte, Koppelelement und zumindest ein, insbesondere das vorher genannte, weitere Koppelelement. Bevorzugt ist das Koppelelement dazu vorgesehen, in dem gekoppelten Zustand der Koppeleinheit die Antriebskraft direkt auf das weitere Koppelelement zu übertragen. Vorzugsweise ist die Koppeleinheit, insbesondere das Koppelelement und das weitere Koppelelement, dazu vorgesehen, die Antriebskraft über eine mechanische Kraftübertragung, insbesondere formschlüssig, zu übertragen.

Bevorzugt sind das erste Verbindungsstück und das zweite Verbindungsstück jeweils an zumindest einem Bauteil der Werkzeugmaschine und/oder des Werkzeugmaschinensystems angeordnet und vorzugsweise als Teil des jeweiligen Bauteils ausgebildet. Insbesondere ist die Verbindungsvorrichtung dazu vorgesehen, die Bauteile aneinander zu befestigen und zu einer Übertragung der Antriebskraft miteinander zu verbinden. Vorzugsweise umfasst das erste Verbindungsstück zumindest einen Grundkörper und das zumindest eine Koppelelement, welches insbesondere an dem Grundkörper angeordnet ist. Bevorzugt ist das Koppelelement an oder in dem Grundkörper des ersten Verbindungsstücks zumindest im Wesentlichen parallel zur Verbindungsrichtung geführt. Vorzugsweise ist das Koppelelement zumindest größtenteils innerhalb des Grundkörpers des ersten Verbindungsstücks angeordnet. Vorzugsweise umfasst das zweite Verbindungsstück zumindest einen Grundkörper und das zumindest eine weitere Koppelelement, welches insbesondere an dem Grundkörper angeordnet ist. Bevorzugt ist das weitere Koppelelement an oder in dem Grundkörper des zweiten Verbindungsstücks zumindest im Wesentlichen parallel zur Verbindungsrichtung geführt. Vorzugsweise ist das weitere Koppelelement zumindest größtenteils innerhalb des Grundkörpers des zweiten Verbindungsstücks angeordnet. Bevorzugt umfasst die Befestigungseinheit zumindest ein Befestigungselement, welches zumindest teilweise an dem Grundkörper des ersten Verbindungsstücks oder des zweiten Verbindungstücks angeordnet ist. Vorzugsweise umfasst die Befestigungseinheit zumindest ein Gegenbefestigungselement, welches dazu vorgesehen ist, zu einer Befestigung des ersten Verbindungsstücks und des zweiten Verbindungsstücks aneinander mit dem Befestigungselement zusammenzuwirken. Insbesondere ist das Gegenbefestigungselement an dem zweiten Verbindungsstück angeordnet, wobei das Befestigungselement an dem ersten Verbindungsstück angeordnet ist. Alternativ ist das Gegenbefestigungselement an dem ersten Verbindungsstück angeordnet, wobei das Befestigungselement an dem zweiten Verbindungsstück angeordnet ist.

Vorzugsweise umfasst die Verbindungsvorrichtung, insbesondere die Befestigungseinheit, zumindest eine Führungseinheit, welche dazu vorgesehen ist, das erste Verbindungsstück und das zweite Verbindungsstück bei dem Ineinanderschieben aneinander zu führen. Bevorzugt ist die Führungseinheit dazu vorgesehen, zum Ineinanderschieben des ersten Verbindungsstücks und des zweiten Verbindungsstücks eine Ausrichtung des ersten Verbindungsstücks und des zweiten Verbindungsstücks, insbesondere um eine zumindest im Wesentlichen parallel zur Verbindungsrichtung ausgerichtete Achse, relativ zueinander vorzugeben. Die Führungseinheit umfasst zumindest ein Führungselement, welches beispielsweise als ein Fortsatz, als eine Schiene o.dgl. ausgebildet ist und an dem ersten Verbindungsstück oder dem zweiten Verbindungsstück angeordnet ist. Bevorzugt umfasst die Führungseinheit zumindest eine Aufnahme, welche vorzugsweise von dem ersten Verbindungsstück oder dem zweiten Verbindungsstück begrenzt ist. Bevorzugt ist die zumindest eine Aufnahme der Führungseinheit dazu vorgesehen, das Führungselement beim Ineinanderschieben des ersten Verbindungsstücks und des zweiten Verbindungsstücks aufzunehmen und vorzugsweise entlang einer Längserstreckung der Aufnahme der Führungseinheit zu führen. Besonders bevorzugt ist die Führungseinheit derart ausgebildet, dass die Verbindungsvorrichtung zum Ineinanderschieben des ersten Verbindungsstücks und des zweiten Verbindungsstücks genau eine mögliche Ausrichtung des ersten Verbindungsstücks und des zweiten Verbindungsstücks, insbesondere um eine zumindest im Wesentlichen parallel zur Verbindungsrichtung ausgerichtete Achse, relativ zueinander aufweist. Es ist denkbar, dass das zumindest eine Führungselement und/oder die Aufnahme der Führungseinheit jeweils einteilig mit dem Grundkörper des ersten Verbindungsstücks oder des zweiten Verbindungsstücks ausgebildet sind. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Es ist auch denkbar, dass die Verbindungsvorrichtung, insbesondere die Befestigungseinheit, eine Mehrzahl von Führungselementen und/oder Aufnahmen umfasst. Bevorzugt entspricht eine Anzahl von Aufnahmen der Führungseinheit zumindest einer Anzahl von Führungselementen. Es ist auch denkbar, dass die Verbindungsvorrichtung, insbesondere die Befestigungseinheit, eine höhere Anzahl an Aufnahmen der Führungseinheit aufweist wie eine Anzahl von Führungselementen, bevorzugt falls die Führungseinheit mehrere mögliche Ausrichtungen des ersten Verbindungsstücks und des zweiten Verbindungsstücks relativ zueinander zum Ineinanderschieben ermöglicht.

Durch die erfindungsgemäße Ausgestaltung der Verbindungsvorrichtung kann eine vorteilhaft intuitive und schnelle Verbindung zweier Bauteile ermöglicht werden, insbesondere zu einer stabilen Verbindung und einer gleichzeitigen Übertragung einer Antriebskraft zwischen den Bauteilen. Es kann eine vorteilhaft hohe Benutzerfreundlichkeit ermöglicht werden. Insbesondere können/kann ungewollte Beschädigungen und/oder eine fehlerhafte Verbindung durch nutzerseitige Fehler beim Verbinden der Bauteile vorteilhaft verhindert werden. Es kann eine vorteilhaft einfache und kostengünstige Herstellung und Wartung ermöglicht werden, insbesondere da zusätzliche Betätigungs- und/oder Antriebselemente entfallen können.

Des Weiteren wird vorgeschlagen, dass die Befestigungseinheit zumindest ein, insbesondere das vorher genannte, Befestigungselement umfasst, welches zu einer zumindest im Wesentlichen selbstständigen Befestigung des ersten Verbindungsstücks und des zweiten Verbindungsstücks bei einem Ineinanderschieben des ersten Verbindungsstücks und des zweiten Verbindungsstücks vorgesehen ist, wobei die Koppeleinheit zumindest zwei Koppelelemente, insbesondere das vorher genannte Koppelelement und das vorher genannte weitere Koppelelement, umfasst, die im gekoppelten Zustand der Koppeleinheit ineinander eingreifen, wobei das Befestigungselement dazu vorgesehen ist, beim Ineinanderschieben des ersten Verbindungsstücks und des zweiten Verbindungsstücks ein Koppelelement der zwei Koppelelemente, insbesondere zumindest schräg zur Verbindungsrichtung, zu betätigen. Es kann eine vorteilhaft intuitive Befestigung und Kopplung erreicht werden, insbesondere ohne ein zusätzlich zum Ineinanderschieben benötigtes Betätigen eines Betätigungselements und/oder des Befestigungselements. Bevorzugt ist das Befestigungselement derart ausgebildet und/oder angeordnet, dass das Befestigungselement beim Ineinanderschieben des ersten Verbindungsstücks und des zweiten Verbindungsstücks zumindest im Wesentlichen selbstständig an dem Gegenbefestigungselement eingreift und/oder angeordnet wird. Bevorzugt ist das Befestigungselement als ein Rastelement, wie beispielsweise ein Rastfortsatz, eine Nut o. dgl., ausgebildet. Insbesondere weist das Befestigungselement zumindest eine Leitfläche auf, welche, insbesondere in einem Grundzustand des Befestigungselements, schräg zur Verbindungsrichtung und schräg zu einer senkrecht zur Verbindungsrichtung ausgerichteten Ebene ausgerichtet ist. Bevorzugt ist das Befestigungselement schräg zur Verbindungsrichtung elastisch verschwenkbar. Beispielsweise ist das Befestigungselement über einen Schwenkarm an dem Grundkörper des ersten Verbindungstücks oder des zweiten Verbindungsstücks angeordnet, insbesondere fixiert. Es ist denkbar, dass das Befestigungselement einteilig mit dem Schwenkarm und/oder mit dem Grundkörper des ersten Verbindungstücks oder des zweiten Verbindungsstücks ausgebildet ist. Bevorzugt ist das Gegenbefestigungselement als eine Ausnehmung ausgebildet, welche von dem ersten Verbindungsstück, insbesondere dem Grundkörper des ersten Verbindungsstücks, oder von dem zweiten Verbindungsstück, insbesondere dem Grundkörper des zweiten Verbindungsstücks, begrenzt ist. Vorzugsweise ist das Befestigungselement dazu vorgesehen, beim Ineinanderschieben des ersten Verbindungsstücks und des zweiten Verbindungsstücks, insbesondere über die Leitfläche, mit dem ersten Verbindungsstück, insbesondere dem Grundkörper des ersten Verbindungsstücks, oder dem zweiten Verbindungsstück, insbesondere dem Grundkörper des zweiten Verbindungsstücks, zusammenzuwirken, wobei insbesondere das Befestigungselement zumindest teilweise, vorzugsweise über den Schwenkarm, in eine quer zur Verbindungsrichtung ausgerichtete Richtung elastisch bewegt wird. Vorzugsweise ist das Befestigungselement dazu vorgesehen, während dem Ineinanderschieben des ersten Verbindungsstücks und des zweiten Verbindungsstücks über die Leitfläche entlang dem ersten Verbindungsstück, insbesondere dem Grundkörper des ersten Verbindungsstücks, oder dem zweiten Verbindungsstück, insbesondere dem Grundkörper des zweiten Verbindungsstücks, zu gleiten, vorzugsweise bis das Befestigungselement in Verbindungsrichtung das Gegenbefestigungselement erreicht. Vorzugsweise ist das Befestigungselement dazu vorgesehen, insbesondere nach oder bei einem vollständigen Ineinanderschieben des ersten Verbindungsstücks und des zweiten Verbindungsstücks, zur Befestigung des ersten Verbindungsstücks und des zweiten Verbindungsstücks aneinander über eine, insbesondere über den Schwenkarm bewirkte, Rückstellkraft zumindest im Wesentlichen selbstständig in das Gegenbefestigungselement einzugreifen. Bevorzugt ist das Befestigungselement dazu vorgesehen, beim Ineinanderschieben des ersten Verbindungsstücks und des zweiten Verbindungsstücks durch eine Bewegung in die quer zur Verbindungsrichtung ausgerichtete Richtung das Koppelelement oder das weitere Koppelelement mit einer schräg zur Verbindungsrichtung ausgerichteten Kraft zu beaufschlagen, wobei insbesondere das Koppelelement oder das weitere Koppelelement betätigt wird. Bevorzugt sind/ist das Befestigungselement und/oder der Schwenkarm derart ausgebildet und/oder angeordnet, dass das Befestigungselement beim Ineinanderschieben des ersten Verbindungsstücks und des zweiten Verbindungsstücks um mindestens 5°, vorzugsweise um mindestens 10°, und bevorzugt um mindestens 15°, und/oder höchstens um 45°, vorzugsweise um höchstens 30° und bevorzugt höchstens um 20°, um eine Schwenkachse des Befestigungselements bewegt wird, welche insbesondere senkrecht zur Verbindungsrichtung ausgerichtet ist. Bevorzugt weist die Schwenkachse des Befestigungselements zu dem Befestigungselement, insbesondere entlang des Schwenkarms, einen minimalen Abstand von mindestens 3 cm, vorzugsweise mindestens 4 cm und bevorzugt mindestens 5,5 cm, auf.

Zudem wird vorgeschlagen, dass die Koppeleinheit zumindest ein, insbesondere das vorher genannte, Koppelelement und zumindest ein weiteres Koppelelement, insbesondere das vorher genannte weitere Koppelelement, umfasst, wobei das Koppelelement und/oder das weitere Koppelelement zumindest eine Führungsfläche ausbildet/ausbilden, die schräg zur Verbindungsrichtung ausgerichtet ist und dazu vorgesehen ist, das weitere Koppelelement oder das Koppelelement bei einem zumindest im Wesentlichen parallel zur Verbindungsrichtung erfolgenden Aufeinanderbewegen der zwei Koppelelemente, insbesondere durch eine gegenseitige Verschwenkung der Koppelelemente jeweils um eine zumindest im Wesentlichen senkrecht zur Verbindungsrichtung ausgerichtete Achse, zumindest im Wesentlichen selbstständig in einen gekoppelten Zustand zu überführen. Unter "im Wesentlichen senkrecht" soll insbesondere eine Ausrichtung einer Geraden, einer Ebene oder einer Richtung, insbesondere der vorher genannten Achse, relativ zu einer anderen Geraden, einer anderen Ebene oder einer Bezugsrichtung, insbesondere der Verbindungsrichtung, verstanden werden, wobei die Gerade, die Ebene oder die Richtung und die andere Gerade, die andere Ebene oder die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2°, aufweist. Es kann eine vorteilhaft selbstständige und schnelle Kopplung erreicht werden. Vorzugsweise kann der gekoppelte Zustand der Koppeleinheit, insbesondere unabhängig von einer Position der Koppelelemente bei einem Befestigen der Verbindungsstücke aneinander, auch nach dem Befestigen der Verbindungsstücke aneinander durch ein Aufeinanderbewegen der Koppelelemente, insbesondere über eine angetriebene Bewegung des Koppelelements, erreicht werden. Bevorzugt weist das Koppelelement und das weitere Koppelelement jeweils zumindest eine Führungsfläche auf. Bevorzugt ist die zumindest eine Führungsfläche schräg zur Verbindungsrichtung ausgerichtet und/oder schräg zu einer senkrecht zur Verbindungsrichtung ausgerichteten Ebene oder Achse ausgerichtet. Bevorzugt ist die zumindest eine Führungsfläche zumindest teilweise rund ausgebildet. Bevorzugt ist zumindest eine an dem Koppelelement angeordnete Führungsfläche zumindest teilweise ebenflächig ausgebildet. Vorzugsweise spannt ein Normalenvektor der an dem Koppelelement angeordneten Führungsfläche mit einer zumindest im Wesentlichen parallel zur Verbindungsrichtung ausgerichteten Achse einen Führungswinkel von mindestens 5°, vorzugsweise mindestens 10°, und bevorzugt mindestens 15°, und/oder höchstens um 60°, vorzugsweise höchstens 45° und bevorzugt höchstens 35°, auf. Insbesondere ist/sind die Führungsfläche(n) dazu vorgesehen, die Koppeleinheit beim Aufeinanderbewegen des Koppelelements und des weiteren Koppelelements parallel zur Verbindungsrichtung, insbesondere auch unabhängig von einer Betätigung durch das Befestigungselement, zumindest im Wesentlichen selbstständig in den gekoppelten Zustand zu überführen. Bevorzugt ist/sind die Führungsfläche(n) dazu vorgesehen, das Koppelelement und das weitere Koppelelement beim Aufeinanderbewegen des Koppelelements und des weiteren Koppelelements parallel zur Verbindungsrichtung schräg, insbesondere quer, zur Verbindungsrichtung relativ zueinander zu bewegen, wobei insbesondere sich das Koppelelement und das weitere Koppelelement über die Führungsfläche(n) gegenseitig mit einer Kraft beaufschlagen. Alternativ ist denkbar, dass lediglich ein Koppelelement der Koppeleinheit, insbesondere das Koppelelement oder das weitere Koppelelement quer zur Verbindungsrichtung bewegbar ist, wobei das jeweils andere Koppelelement beim Aufeinanderbewegen des Koppelelements und des weiteren Koppelelements parallel zur Verbindungsrichtung über die Führungsfläche(n) quer zur Verbindungsrichtung an dem Koppelelement entlang bewegt wird.

Ferner wird vorgeschlagen, dass die Koppeleinheit zumindest ein, insbesondere das vorher genannte, Koppelelement und zumindest ein weiteres Koppelelement, insbesondere das vorher genannte weitere Koppelelement, umfasst, die jeweils einzeln als ein Blechteil ausgebildet sind und dazu vorgesehen sind, in dem gekoppelten Zustand zur Übertragung der Antriebskraft zumindest formschlüssig ineinanderzugreifen. Es kann eine vorteilhaft einfache Ausgestaltung der Koppelelemente erreicht werden. Es können vorteilhaft geringe Herstellungskosten der Verbindungsvorrichtung, insbesondere der Koppelelemente, ermöglicht werden. Vorzugsweise sind/ist das Koppelelement und/oder das weitere Koppelelement aus einem Metallblech ausgestanzt und/oder gebogen. Bevorzugt sind/ist das Koppelelement und/oder das weitere Koppelelement jeweils einteilig ausgebildet. Bevorzugt sind das Koppelelement und das weitere Koppelelement dazu vorgesehen, beim Aufeinanderbewegen parallel zur Verbindungsrichtung, insbesondere über die Führungsfläche(n), schräg, insbesondere quer, zur Verbindungsrichtung relativ zueinander bewegt zu werden, wobei das Koppelelement und das weitere Koppelelement formschlüssig ineinander greifen.

Des Weiteren wird vorgeschlagen, dass die Koppeleinheit zumindest ein Koppelelement umfasst, das zumindest in einem Koppelbereich der Koppeleinheit gegen zumindest eine Bewegung quer zur Verbindungsrichtung federelastisch ausgebildet ist, wobei ein unbelasteter Zustand des zumindest einen Koppelelements einer Grundposition des Koppelelements in dem gekoppelten Zustand entspricht. Es kann eine vorteilhaft flexible Anordnung des Koppelelements/der Koppelelemente erreicht werden. Es können ungewollte Beschädigungen der Koppelelemente bei einem Ineinanderschieben der Verbindungsstücke vorteilhaft verhindert werden. Es können Beschädigungen und/oder Materialermüdung der Koppelelemente vorteilhaft verhindert werden, insbesondere da diese im gekoppelten Zustand vorteilhaft unbelastet angeordnet werden können. Bevorzugt umfasst der Koppelbereich der Koppeleinheit einen Bereich des Koppelelements und des weiteren Koppelelements, in welchem sich das Koppelelement und das weitere Koppelelement in dem gekoppelten Zustand zur Übertragung der Antriebskraft bewegen. Bevorzugt erstreckt sich der Koppelbereich der Koppeleinheit von einer maximalen Auslenkung des Koppelelements zur Übertragung der Antriebskraft parallel zur Verbindungsrichtung bis zu einer minimalen Auslenkung des Koppelelements zur Übertragung der Antriebskraft parallel zur Verbindungsrichtung. Bevorzugt umfassen/umfasst das erste Verbindungsstück und/oder das zweite Verbindungstück zumindest ein Lagerelement, welches zu einem Halten des Koppelelements oder des weiteren Koppelelements gegen eine Bewegung quer zur Verbindungsrichtung vorgesehen ist. Bevorzugt ist das Lagerelement jeweils innerhalb des Grundkörpers des ersten Verbindungsstücks oder innerhalb des Grundkörpers des zweiten Verbindungsstücks angeordnet. Beispielsweise ist das Lagerelement als eine Verjüngung des Grundkörpers des ersten Verbindungsstücks oder des Grundkörpers des zweiten Verbindungsstücks ausgebildet, wobei das Koppelelement oder das weitere Koppelelement sich durch die Verjüngung erstreckt. Bevorzugt ist das Koppelelement oder das weitere Koppelelement parallel zur Verbindungsrichtung, insbesondere zumindest im Wesentlichen widerstandsfrei, relativ zu der Verjüngung bewegbar. In einer bevorzugten Ausgestaltung umfasst das erste Verbindungsstück und das zweite Verbindungsstück jeweils zumindest ein, insbesondere als Verjüngung ausgebildetes, Lagerelement, welche jeweils zu einem Halten des Koppelelements oder des weiteren Koppelelements vorgesehen sind. Bevorzugterweise sind/ist das Koppelelement und/oder das weitere Koppelelement über das/die Lagerelemente derart gehalten, dass jeweils ein, insbesondere dem Koppelbereich zugewandter, Endbereich des Koppelelements und/oder des weiteren Koppelelements quer zur Verbindungsrichtung elastisch verschwenkbar ist. Insbesondere weisen/weist das Koppelelement und das weitere Koppelelement jeweils zumindest eine Verschwenkachse auf, welche entlang der Verbindungsrichtung jeweils im Bereich eines Lagerelements angeordnet sind/ist. Insbesondere in einer Ausgestaltung des Koppelelements und/oder des weiteren Koppelelements als Blechteil(e) ist die Verschwenkachse jeweils zumindest im Wesentlichen parallel zu einer Haupterstreckungsebene des Koppelelements bzw. des weiteren Koppelelements ausgerichtet. Unter einer "Haupterstreckungsebene" einer Baueinheit, insbesondere des Koppelelements und/oder des weiteren Koppelelements, soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Bevorzugt verläuft die Verschwenkachse des Koppelelements bzw. des weiteren Koppelelements jeweils zumindest im Wesentlichen senkrecht zur Verbindungsrichtung und zu einer minimalen Quererstreckung des Koppelelements bzw. des weiteren Koppelelements, welche insbesondere zumindest im Wesentlichen senkrecht zur Verbindungsrichtung verläuft.

Zudem wird vorgeschlagen, dass die Koppeleinheit zumindest ein, insbesondere das vorher genannte, Koppelelement und zumindest ein weiteres Koppelelement, insbesondere das vorher genannte weitere Koppelelement, umfasst, die jeweils zumindest einen Formschlussfortsatz und jeweils zumindest eine Formschlussausnehmung aufweisen, wobei die Koppelelemente dazu vorgesehen sind, in dem gekoppelten Zustand der Koppeleinheit formschlüssig ineinanderzugreifen. Es kann eine vorteilhaft direkte Übertragung der Antriebskraft zwischen den Koppelelementen ermöglicht werden. Es kann eine vorteilhaft hohe Lebensdauer der Koppelelemente erreicht werden, insbesondere da eine schnelle Abnutzung der Koppelelemente wie bei überwiegend kraftschlüssigen Verbindungen vorteilhaft verhindert werden kann. Vorzugsweise ist der Formschlussfortsatz des Koppelelements dazu vorgesehen, in dem gekoppelten Zustand formschlüssig in die und/oder an der Formschlussausnehmung des weiteren Koppelelements ein-und/oder anzugreifen. Insbesondere ist der Formschlussfortsatz des Koppelelements dazu vorgesehen, die Antriebskraft in eine zumindest im Wesentlichen parallel zur Verbindungsrichtung und von dem weiteren Koppelelement zu dem Koppelelement ausgerichtete Richtung, insbesondere zu einem Ziehen des Koppelelements, von dem Koppelelement auf das weitere Koppelelement zu übertragen. Bevorzugt liegen der Formschlussfortsatz des Koppelelements und der Formschlussfortsatz des weiteren Koppelelements zu einer Übertragung der Antriebskraft, bevorzugterweise in die zumindest im Wesentlichen parallel zur Verbindungsrichtung und von dem weiteren Koppelelement zu dem Koppelelement ausgerichtete Richtung, insbesondere zu einem Ziehen des Koppelelements, aneinander an, vorzugsweise über Kraftübertragungsflächen des Koppelelements und des weiteren Koppelelements. Vorzugsweise ist der Formschlussfortsatz des weiteren Koppelelements dazu vorgesehen, in dem gekoppelten Zustand formschlüssig in die und/oder an der Formschlussausnehmung des Koppelelements ein- und/oder anzugreifen. Bevorzugt begrenzt der Formschlussfortsatz des Koppelelements zumindest teilweise die Formschlussausnehmung des Koppelelements, wobei vorzugsweise zumindest eine die Formschlussausnehmung des Koppelelements begrenzende Innenfläche des Koppelelements eine Seitenfläche des Formschlussfortsatzes des Koppelelements ausbildet, die bevorzugt als eine Kraftübertragungsfläche des Koppelelements ausgebildet ist. Vorzugsweise begrenzt der Formschlussfortsatz des weiteren Koppelelements zumindest teilweise die Formschlussausnehmung des weiteren Koppelelements, wobei vorzugsweise zumindest eine die Formschlussausnehmung des weiteren Koppelelements begrenzende Innenfläche des weiteren Koppelelements eine Seitenfläche des Formschlussfortsatzes des weiteren Koppelelements ausbildet, die bevorzugt als eine Kraftübertragungsfläche des weiteren Koppelelements ausgebildet ist. Vorzugsweise sind die Innenflächen des Koppelelements und des weiteren Koppelelements, welche insbesondere als Kraftübertragungsflächen des Koppelelements und des weiteren Koppelelements ausgebildet sind, kongruent zueinander ausgebildet. Insbesondere sind die Innenflächen des Koppelelements und des weiteren Koppelelements, welche insbesondere als Kraftübertragungsflächen des Koppelelements und des weiteren Koppelelements ausgebildet sind, dazu vorgesehen, in dem gekoppelten Zustand, insbesondere zur Übertragung der Antriebskraft in die zumindest im Wesentlichen parallel zur Verbindungsrichtung und von dem weiteren Koppelelement zu dem Koppelelement ausgerichtete Richtung, flächig aneinander anzuliegen. Bevorzugt sind/ist die Innenfläche(n) des Koppelelements und/oder des weiteren Koppelelements, welche insbesondere als Kraftübertragungsfläche(n) des Koppelelements und/oder des weiteren Koppelelements ausgebildet sind, zumindest im Wesentlichen ebenflächig ausgebildet. Vorzugsweise weist der Formschlussfortsatz des Koppelelements an einer von der Formschlussausnehmung des Koppelelements abgewandten Seite zumindest eine schräge, insbesondere abgerundete, Außenfläche auf, die bevorzugt als eine Führungsfläche des Koppelelements ausgebildet ist. Insbesondere ist die Außenfläche des Formschlussfortsatzes des Koppelelements schräg zur Verbindungsrichtung und schräg zu einer senkrecht zur Verbindungsrichtung ausgerichteten Ebene ausgebildet. Bevorzugt weist der Formschlussfortsatz des weiteren Koppelelements an einer von der Formschlussausnehmung des weiteren Koppelelements abgewandten Seite zumindest eine schräge, insbesondere abgerundete, Außenfläche auf, die bevorzugt als eine Führungsfläche des weiteren Koppelelements ausgebildet ist. Insbesondere ist die Außenfläche des Formschlussfortsatzes des weiteren Koppelelements schräg zur Verbindungsrichtung und schräg zu einer senkrecht zur Verbindungsrichtung ausgerichteten Ebene ausgebildet. Bevorzugt sind/ist der Formschlussfortsatz/die Formschlussfortsätze des Koppelelements und/oder des weiteren Koppelelements jeweils aus einem Material des als Blechteil ausgebildeten Koppelelements oder weiteren Koppelelements herausgebogen und/oder gedrückt. Bevorzugt sind/ist die Formschlussausnehmung/die Formschlussausnehmungen des Koppelelements und/oder des weiteren Koppelelements jeweils aus einem Material des als Blechteil ausgebildeten Koppelelements oder weiteren Koppelelements herausgestanzt, ausgeschnitten und/oder herausgedrückt.

Ferner wird vorgeschlagen, dass die Koppeleinheit zumindest ein, insbesondere das vorher genannte, Koppelelement und zumindest ein weiteres Koppelelement, insbesondere das vorher genannte weitere Koppelelement, umfasst, wobei das Koppelelement zumindest einen, insbesondere den vorher genannten, Formschlussfortsatz und zumindest einen Schiebefortsatz ausbildet, wobei der Formschlussfortsatz zu einer Übertragung der Antriebskraft auf das weitere Koppelelement in eine zumindest im Wesentlichen parallel zur Verbindungsrichtung ausgerichtete Zugrichtung vorgesehen ist und wobei der Schiebefortsatz zu einer Übertragung der Antriebskraft auf das weitere Koppelelement in eine zumindest im Wesentlichen parallel zur Verbindungsrichtung ausgerichtete und der Zugrichtung entgegengerichtete Schieberichtung vorgesehen ist. Es kann eine vorteilhaft vollständige formschlüssige Übertragung der Antriebskraft von dem Koppelelement auf das weitere Koppelelement ermöglicht werden, insbesondere in beide zumindest im Wesentlichen parallel zur Verbindungsrichtung ausgerichtete Richtungen. Vorzugsweise begrenzt der Schiebefortsatz die Formschlussausnehmung des Koppelelements zumindest teilweise, insbesondere an einer durch den Formschlussfortsatz und/oder durch die Kraftübertragungsfläche des Koppelelements begrenzten Seite der Formschlussausnehmung des Koppelelements. Insbesondere weist der Schiebefortsatz, insbesondere zumindest im Wesentlichen senkrecht zur Verbindungsrichtung und/oder zu einer Haupterstreckungsachse des Koppelelements, eine maximale Quererstreckung auf, welche zumindest im Wesentlichen einer maximalen Quererstreckung der Formschlussausnehmung des Koppelelements an der durch den Schiebefortsatz begrenzten Seite der Formschlussausnehmung des Koppelelements entspricht. Unter einer "Haupterstreckungsachse" eines Objekts, insbesondere des Koppelelements, soll insbesondere eine Achse verstanden werden, welche parallel zu einer längsten Kante eines kleinsten geometrischen Quaders verläuft, welcher das Objekt gerade noch vollständig umschließt und welche vorzugsweise durch einen Mittelpunkt des Quaders verläuft. Bevorzugt ist der Schiebefortsatz aus dem Material des als Blechteil ausgebildeten Koppelelements herausgebogen, vorzugsweise in eine senkrecht zu einer Haupterstreckungsebene des Koppelelements ausgerichtete Richtung, welche einer Erstreckungsrichtung des Formschlussfortsatzes des Koppelelements entspricht, in welche vorzugsweise der Formschlussfortsatz des Koppelelements aus dem Material des Koppelelements herausgebogen und/oder gedrückt ist. Vorzugsweise sind/ist der Formschlussfortsatz, die Formschlussausnehmung und/oder der Schiebefortsatz des Koppelelements in einem Endbereich des Koppelelements angeordnet, welcher bevorzugt über die Formschlussausnehmung eine Lasche ausbildet. Bevorzugt umfasst der Endbereich des Koppelelements entlang der Haupterstreckungsachse des Koppelelements ein Ende des Koppelelements. Vorzugsweise ist der Schiebefortsatz von dem Ende des Koppelelements aus betrachtet entlang der Haupterstreckungsachse des Koppelelements hinter der Formschlussausnehmung des Koppelelements angeordnet. Insbesondere ist der Formschlussfortsatz des Koppelelements von dem Ende des Koppelelements aus betrachtet entlang der Haupterstreckungsachse des Koppelelements vor der Formschlussausnehmung angeordnet, wobei insbesondere die den Formschlussfortsatz begrenzende Kraftübertragungsfläche des Koppelelements an einer dem Ende abgewandten Seite des Formschlussfortsatzes des Koppelelements ausgebildet ist. Vorzugsweise sind/ist der Formschlussfortsatz und/oder die Formschlussausnehmung des weiteren Koppelelements in einem Endbereich des weiteren Koppelelements angeordnet. Bevorzugt begrenzt der Endbereich des weiteren Koppelelements entlang der Haupterstreckungsachse des weiteren Koppelelements ein Ende des weiteren Koppelelements. Bevorzugt ist der Formschlussfortsatz des weiteren Koppelelements von dem Ende des weiteren Koppelelements aus betrachtet entlang der Haupterstreckungsachse des weiteren Koppelelements vor der Formschlussausnehmung des weiteren Koppelelements angeordnet. Besonders bevorzugt ist ein zumindest im Wesentlichen parallel zur Verbindungsrichtung und/oder zur Haupterstreckungsachse des weiteren Koppelelements ausgerichteter minimaler Abstand zwischen dem Ende des weiteren Koppelelements und der Formschlussausnehmung und/oder der Kraftübertragungsfläche des weiteren Koppelelements kleiner als ein zumindest im Wesentlichen parallel zur Verbindungsrichtung und/oder zur Haupterstreckungsachse des Koppelelements ausgerichteter minimaler Abstand zwischen der Formschlussausnehmung und/oder der Kraftübertragungsfläche des Koppelelements und dem Schiebefortsatz, welcher insbesondere einer maximalen Längserstreckung der Formschlussausnehmung des Koppelelements entspricht. Besonders bevorzugt beträgt eine Differenz zwischen dem zumindest im Wesentlichen parallel zur Verbindungsrichtung und/oder zur Haupterstreckungsachse des Koppelelements ausgerichteten minimalen Abstand zwischen der Formschlussausnehmung und/oder der Kraftübertragungsfläche des Koppelelements und dem Schiebefortsatz und dem zumindest im Wesentlichen parallel zur Verbindungsrichtung und/oder zur Haupterstreckungsachse des weiteren Koppelelements ausgerichteten minimalen Abstand zwischen dem Ende des weiteren Koppelelements und der Formschlussausnehmung und/oder der Kraftübertragungsfläche des weiteren Koppelelements mindestens 1 mm, vorzugsweise mindestens 2 mm und ebenfalls denkbar mindestens 3 mm.

Des Weiteren wird vorgeschlagen, dass das erste Verbindungsstück und das zweite Verbindungsstück jeweils zumindest im Wesentlichen stabförmig ausgebildet sind, wobei die Verbindungsrichtung, insbesondere in einem befestigten Zustand der Befestigungseinheit, zumindest im Wesentlichen parallel zu einer Längsachse des ersten Verbindungsstücks und/oder zu einer Längsachse des zweiten Verbindungsstücks ausgerichtet ist. Es kann eine vorteilhaft kompakte Ausgestaltung der Verbindungsvorrichtung, insbesondere zu einer Verwendung für eine stabgebundene Werkzeugmaschine, ermöglicht werden. Es kann ein vorteilhaft einfaches und intuitives Bedienen der Verbindungsvorrichtung ermöglicht werden, insbesondere zum Ineinanderschieben der zwei Verbindungsstücke. Unter "im Wesentlichen stabförmig" soll insbesondere ein Bauteil, insbesondere jeweils das erste Verbindungsstück und das zweite Verbindungsstück, verstanden werden, wobei eine längste Kante eines kleinsten geometrischen Quaders, welcher das Bauteil gerade noch vollständig umschließt, mindestens viermal, vorzugsweise mindestens fünfmal, bevorzugt mindestens sechsmal und ganz besonders bevorzugt mindestens siebenmal, so groß ist wie zwei senkrecht zueinander und jeweils senkrecht zu der längsten Kante ausgerichtete Kanten des Quaders. Bevorzugt weisen das erste Verbindungsstück und das zweite Verbindungsstück, insbesondere die Grundkörper des ersten Verbindungsstücks und des zweiten Verbindungsstücks, jeweils eine zylinderförmige Grundform auf. Vorzugsweise sind das erste Verbindungsstück und das zweite Verbindungsstück, insbesondere die Grundkörper des ersten Verbindungsstücks und des zweiten Verbindungsstücks, dazu vorgesehen, zu einer Befestigung über die Befestigungseinheit aneinander und/oder zu einem Übergang der Koppeleinheit in den gekoppelten Zustand über eine in Verbindungsrichtung ausgerichtete Bewegung ineinander geschoben zu werden. Es ist denkbar, dass das erste Verbindungsstück oder das zweite Verbindungsstück, insbesondere der Grundkörper des ersten Verbindungsstücks oder des zweiten Verbindungsstücks, eine Aufnahme begrenzen, welche dazu vorgesehen ist, zu einer Befestigung über die Befestigungseinheit aneinander und/oder zu einem Übergang der Koppeleinheit in den gekoppelten Zustand das jeweils andere Verbindungsstück zumindest im Wesentlichen parallel zur Verbindungsrichtung zumindest teilweise aufzunehmen. Insbesondere sind/ist das erste Verbindungsstück und/oder das zweite Verbindungsstück, insbesondere die/der Grundkörper des ersten Verbindungsstücks und/oder des zweiten Verbindungsstücks, zumindest teilweise als ein Hohlzylinder ausgebildet. Vorzugsweise erstrecken sich die Koppelelemente jeweils zumindest im Wesentlichen parallel zu der Längsachse des ersten Verbindungsstücks und/oder zu der Längsachse des zweiten Verbindungsstücks, vorzugsweise zumindest größtenteils innerhalb des Grundkörpers des ersten Verbindungsstücks oder des zweiten Verbindungsstücks. In einer bevorzugten Ausgestaltung begrenzt das erste Verbindungstück die Aufnahme, wobei das zweite Verbindungsstück dazu vorgesehen ist, zu einer Befestigung über die Befestigungseinheit aneinander und/oder zu einem Übergang der Koppeleinheit in den gekoppelten Zustand in Verbindungsrichtung zumindest teilweise in das erste Verbindungsstück eingeschoben zu werden. Bevorzugt ist das zweite Verbindungsstück dazu vorgesehen, über eine Bewegung in Verbindungsrichtung über die Befestigungseinheit zumindest im Wesentlichen selbstständig an dem ersten Verbindungsstück befestigt zu werden. Vorzugsweise ist die Koppeleinheit dazu vorgesehen, bei oder nach einem Einschieben des zweiten Verbindungsstück in das erste Verbindungsstück in Verbindungsrichtung zumindest im Wesentlichen selbstständig in den gekoppelten Zustand überzugehen, wobei vorzugsweise das Koppelelement und das weitere Koppelelement in einem von den Grundkörpern des ersten Verbindungsstücks und des zweiten Verbindungsstücks umschlossenen Bereich formschlüssig ineinander eingreifen. Insbesondere umfasst der Grundkörper des ersten Verbindungsstücks einen als Hohlzylinder ausgebildeten Abschnitt, welcher die Aufnahme begrenzt. Bevorzugt umfasst der Grundkörper des ersten Verbindungsstücks zumindest einen weiteren Abschnitt, welcher zumindest einen Anschlag für ein Einschieben des zweiten Verbindungsstücks in die Aufnahme ausbildet. Insbesondere ist der weitere Abschnitt zumindest im Wesentlichen hohlzylinderförmig ausgebildet und weist einen kleineren Innendurchmesser auf als der Abschnitt des Grundkörpers des ersten Verbindungsstücks. Es ist denkbar, dass der Grundkörper des ersten Verbindungsstücks zumindest zweiteilig ausgebildet ist. Bevorzugt ist der weitere Abschnitt zumindest teilweise innerhalb des Abschnitts angeordnet und/oder zumindest teilweise innerhalb des Abschnitts ausgeformt. Bevorzugt ist die Aufnahme dazu vorgesehen, das zweite Verbindungsstück, insbesondere über eine zumindest im Wesentlichen parallel zur Längsachse des zweiten Verbindungsstücks ausgebildete Erstreckung, derart aufzunehmen, dass zumindest das Befestigungselement, insbesondere Rastelement, in einem von dem ersten Verbindungsstück umschlossenen Bereich des zweiten Verbindungsstücks angeordnet ist.

Zudem wird vorgeschlagen, dass die Koppeleinheit zumindest ein Koppelelement, insbesondere das vorher genannte Koppelelement und/oder das vorher genannte weitere Koppelelement, umfasst, das/die, insbesondere zu einem Übergang in den gekoppelten Zustand oder in einen entkoppelten Zustand, jeweils in einem, insbesondere dem vorher genannten, Koppelbereich der Koppeleinheit um eine zumindest im Wesentlichen senkrecht zur Verbindungsrichtung ausgerichtete Achse, insbesondere die vorher genannte Verschwenkachse, die insbesondere in einem Nahbereich des das Koppelelement umfassenden Verbindungsstücks angeordnet ist, elastisch verschwenkbar ist/sind. Es kann eine vorteilhaft flexible Anordnung des Koppelelements/der Koppelelemente erreicht werden. Es können ungewollte Beschädigungen der Koppelelemente bei einem Ineinanderschieben der Verbindungsstücke vorteilhaft verhindert werden. Es können Beschädigungen und/oder Materialermüdung der Koppelelemente vorteilhaft verhindert werden, insbesondere da diese im gekoppelten Zustand vorteilhaft unbelastet angeordnet werden können. Es kann eine vorteilhaft flexible Lagerung und Führung des/der Koppelelemente/s an einem Grundkörper des/der Koppelelemente ermöglicht werden. Bevorzugt weist die Verschwenkachse des Koppelelements und/oder das Lagerelement des ersten Verbindungsstücks zu einem dem zweiten Verbindungstück zugewandten entlang der Längsachse des ersten Verbindungsstücks ausgebildeten Ende des ersten Verbindungsstücks einen zumindest parallel zur Längsachse des ersten Verbindungsstücks ausgerichteten minimalen Abstand von mindestens 8 cm, vorzugsweise mindestens 10 cm und bevorzugt mindestens 15 cm, auf. Vorzugsweise weist die Verschwenkachse des weiteren Koppelelements und/oder das Lagerelement des zweiten Verbindungsstücks zu einem dem ersten Verbindungstück zugewandten entlang der Längsachse des zweiten Verbindungsstücks ausgebildeten Ende des zweiten Verbindungsstücks einen zumindest parallel zur Längsachse des zweiten Verbindungsstücks ausgerichteten minimalen Abstand von mindestens 8 cm, vorzugsweise mindestens 10 cm und bevorzugt mindestens 15 cm, auf. Bevorzugt ist die Verschwenkachse des weiteren Koppelelements und/oder das Lagerelement des zweiten Verbindungsstücks von dem Ende des zweiten Verbindungsstücks und/oder dem Koppelbereich aus entlang der Längsachse des zweiten Verbindungsstücks hinter dem Befestigungselement und/oder hinter dem Schwenkarm angeordnet. Vorzugsweise ist das Befestigungselement und/oder der Schwenkarm als Teil des zweiten Verbindungsstücks ausgebildet.

Ferner wird vorgeschlagen, dass die Befestigungseinheit zumindest ein Rastelement, insbesondere das vorher genannte Befestigungselement, zu einer formschlüssigen Befestigung des zweiten Verbindungsstücks an dem ersten Verbindungsstück umfasst, wobei das Rastelement dazu vorgesehen ist, bei einer Bewegung des Rastelements zu einem Lösen der Befestigungseinheit zumindest ein Koppelelement, vorzugsweise das vorher genannte weitere Koppelelement, der Koppeleinheit, insbesondere zumindest im Wesentlichen direkt, zu betätigen, wobei die Koppeleinheit von dem gekoppelten Zustand in den entkoppelten Zustand übergeht. Es kann eine vorteilhaft einfache und direkte Kopplung der Befestigungseinheit und der Koppeleinheit ermöglicht werden. Vorzugsweise kann ein gleichzeitiges Trennen der Befestigungseinheit und der Koppeleinheit erreicht werden. Es kann ein ungewolltes Belasten und dadurch mögliche Beschädigungen an der Koppeleinheit, insbesondere der Koppelelemente, bei einem Trennen der Verbindungsstücke über die Befestigungseinheit vorteilhaft verhindert werden. Es kann eine vorteilhaft intuitive Trennung der Verbindungsvorrichtung erreicht werden. Bevorzugt umfasst die Befestigungseinheit zumindest einen Betätigungsfortsatz zu einem Betätigen des weiteren Koppelelements, welcher an dem Befestigungselement fixiert ist oder als Teil des Befestigungselements ausgebildet ist. Bevorzugt ist der Betätigungsfortsatz einteilig mit dem Befestigungselement und/oder dem Schwenkarm ausgebildet. Unter "im Wesentlichen direkt betätigen" soll insbesondere verstanden werden, dass das Befestigungselement eine auf das Befestigungselement einwirkende Kraft, beispielsweise eines Benutzers, zum Lösen der Befestigungseinheit über einen Formschluss zwischen dem Befestigungselement oder zwischen einem formschlüssig an dem Befestigungselement angeordneten Bauteil, insbesondere dem Betätigungsfortsatz, und dem zu betätigenden Koppelelement der Koppeleinheit, insbesondere dem weiteren Koppelelement, auf das Koppelelement der Koppeleinheit, insbesondere das weitere Koppelelement, überträgt. Vorzugsweise ist das Rastelement dazu vorgesehen, beim Ineinanderschieben des ersten Verbindungsstücks und des zweiten Verbindungsstücks über ein Zusammenwirken mit dem ersten Verbindungsstück, insbesondere dem Grundkörper des ersten Verbindungsstücks, in eine quer zur Verbindungsrichtung ausgerichtete Richtung, insbesondere hin zur Längsachse des zweiten Verbindungsstücks, bewegt zu werden, wobei vorzugsweise das weitere Koppelelement betätigt und um die Verschwenkachse in die quer zur Verbindungsrichtung ausgerichtete Richtung bewegt wird. Vorzugsweise ist das weitere Koppelelement dazu vorgesehen, bei einer Bewegung in die quer zur Verbindungsrichtung ausgerichtete Richtung von dem Koppelelement getrennt zu werden, wobei insbesondere die Koppeleinheit von dem gekoppelten Zustand in den entkoppelten Zustand übergeht.

Des Weiteren wird vorgeschlagen, dass die Koppeleinheit zumindest ein Koppelelement, insbesondere das vorher genannte Koppelelement, umfasst, das zumindest eine Kraftübertragungsfläche ausbildet, wobei die Koppeleinheit zumindest eine senkrecht zur Verbindungsrichtung ausgerichtete geradlinige Koppelrichtung aufweist, in die das Koppelelement in ein weiteres Koppelelement, insbesondere das vorher genannte weitere Koppelelement, eingreift, wobei die Koppelrichtung mit zumindest einer Flächennormalen der Kraftübertragungsfläche, insbesondere des Koppelelements, einen Winkel von größer als 90°, vorzugsweise von größer als 95° und bevorzugt von zumindest im Wesentlichen 100°, aufspannt. Es kann eine vorteilhaft robuste formschlüssige Verbindung der Koppelelemente erreicht werden. Es kann ein ungewolltes Trennen der Koppelelemente bei einer Belastung in eine zumindest im Wesentlichen parallel zur Verbindungsrichtung ausgerichtete Richtung vorteilhaft verhindert werden. Es kann eine vorteilhaft sichere Verbindungsvorrichtung erreicht werden. Es kann eine vorteilhaft vibrations- und/oder stoßresistente Verbindung der Koppelelemente erreicht werden, vorzugsweise gegenüber Bewegungen der Koppelelemente quer zur Verbindungsrichtung. Bevorzugt kann eine Fixierung der Koppelelemente in einem Koppelbereich relativ zu Grundkörpern der Verbindungsstücke vorteilhaft entfallen. Bevorzugt umfasst das weitere Koppelelement eine Kraftübertragungsfläche, wobei die Koppelrichtung mit zumindest einer Flächennormalen der Kraftübertragungsfläche des weiteren Koppelelements einen Winkel von kleiner als 85° und bevorzugt von zumindest im Wesentlichen 80°, aufspannt. Bevorzugt beträgt ein Winkel zwischen der Koppelrichtung und einer Haupterstreckungsebene des Schiebefortsatzes mehr als 0°, vorzugswese mehr als 3° und bevorzugt mindestens 5°. Bevorzugt sind die Kraftübertragungsflächen des Koppelelements und des weiteren Koppelelements derart angeordnet und/oder ausgebildet, dass diese gegen eine Bewegung des Koppelelements entgegen der Koppelrichtung und/oder gegen eine Bewegung des weiteren Koppelelements in Koppelrichtung zumindest teilweise über einen Formschluss aneinander anliegen.

Zudem wird vorgeschlagen, dass die Koppeleinheit und/oder die Befestigungseinheit zumindest ein Sicherungselement umfassen/umfasst, das dazu vorgesehen ist, in Abhängigkeit von einer Position eines Koppelelements der Koppeleinheit relativ zu dem Sicherungselement ein Lösen der Befestigungseinheit und/oder einen Übergang der Koppeleinheit in den entkoppelten Zustand zumindest im Wesentlichen zu verhindern. Es kann eine Trennung der Koppeleinheit bzw. ein Übergang in den entkoppelten Zustand sowie ein Lösen der Befestigungseinheit in einer von einer Grundposition verschiedenen Position der Koppelelemente vorteilhaft verhindert werden. Es kann vorteilhaft sichergestellt werden, dass die Koppelelemente bei einem Trennen der Befestigungseinheit und/oder der Koppeleinheit immer in der Grundposition angeordnet sind. Dadurch kann ein Übergang der Koppeleinheit in den gekoppelten Zustand direkt bei einem erneuten Ineinanderschieben der Verbindungsstücke sichergestellt werden. Bevorzugt sind das Koppelelement und das weitere Koppelelement in dem gekoppelten Zustand zusammen entlang einer zumindest im Wesentlichen parallel zur Verbindungsrichtung und/oder zu den Längsachsen der Verbindungsstücke ausgerichteten Achse bewegbar. Vorzugsweise ist das Koppelelement dazu vorgesehen, die Antriebskraft in Zugrichtung oder in Schieberichtung auf das weitere Koppelelement zu übertragen. Vorzugsweise ist das Sicherungselement dazu vorgesehen, ein Lösen der Befestigungseinheit und/oder einen Übergang der Koppeleinheit in den entkoppelten Zustand lediglich für eine Anordnung des Koppelelements und des weiteren Koppelelements in einem Entkoppelbereich freizuschalten und/oder zu ermöglichen. Bevorzugt erstreckt sich der Entkoppelbereich in einem befestigten Zustand der Befestigungseinheit entlang der Längsachsen der Verbindungsstücke zumindest teilweise innerhalb des ersten Verbindungsstücks und zumindest teilweise innerhalb des zweiten Verbindungsstücks. Vorzugsweise ist der Entkoppelbereich derart ausgebildet, dass das weitere Koppelelement entlang der Längsachse des zweiten Verbindungsstücks betrachtet zumindest teilweise an dem dem ersten Verbindungsstück zugewandten Ende des zweiten Verbindungsstücks angeordnet ist. In einer beispielhaften Ausgestaltung ist das Sicherungselement an dem Befestigungselement und/oder dem Schwenkarm angeordnet und dazu vorgesehen, eine Bewegung des Befestigungselements zu einem Lösen der Befestigungseinheit und/oder zu einem Überführen der Koppeleinheit in den entkoppelten Zustand über einen Formschluss mit dem Koppelelement und/oder dem weiteren Koppelelement in einer von dem Entkoppelbereich verschiedenen Anordnung des Koppelelements und des weiteren Koppelelements zumindest im Wesentlichen zu verhindern. Bevorzugt ist das Sicherungselement dazu vorgesehen, bei einer Anordnung des Koppelelements und des weiteren Koppelelements in dem Entkoppelbereich das Befestigungselement und/oder den Schwenkarm für eine Bewegung zum Lösen der Befestigungseinheit und/oder zu einem Überführen der Koppeleinheit in den entkoppelten Zustand freizugeben.

Ferner wird vorgeschlagen, dass die Befestigungseinheit zumindest ein, insbesondere das vorher genannte, Betätigungselement umfasst, welches zu einem Lösen der Befestigungseinheit vorgesehen ist, wobei das erste Verbindungsstück zumindest teilweise eine Handgriffeinheit ausbildet, wobei das Betätigungselement als Teil des zweiten Verbindungsstücks ausgebildet ist und, insbesondere zumindest im Wesentlichen unabhängig von einem Zustand der Befestigungseinheit, entlang einer Längsachse des zweiten Verbindungsstücks beabstandet von dem ersten Verbindungsstück angeordnet ist. Es kann vorzugsweise ein ungewolltes Lösen der Befestigungseinheit durch eine Betätigung des Betätigungselements bei einem Halten der Verbindungsvorrichtung an dem ersten Verbindungsstück vorteilhaft verhindert werden. Bevorzugt ist das Betätigungselement an dem Befestigungselement, insbesondere dem Rastelement, und/oder dem Schwenkarm angeordnet, insbesondere fixiert, und/oder einteilig mit dem Befestigungselement und/oder dem Schwenkarm ausgebildet. Vorzugsweise ist das Betätigungselement dazu vorgesehen, bei einem Betätigen das Befestigungselement und/oder den Schwenkarm quer zur Verbindungsrichtung zu bewegen, insbesondere hin zur Längsachse des zweiten Verbindungsstücks. Bevorzugt begrenzt der Grundkörper des zweiten Verbindungsstücks zumindest eine Ausnehmung, wobei das Betätigungselement zu einem Betätigen innerhalb der Ausnehmung geführt ist. Vorzugsweise begrenzt der Grundkörper des zweiten Verbindungsstücks zumindest eine weitere Ausnehmung, wobei das Befestigungselement bei einer Bewegung quer zur Verbindungsrichtung, insbesondere über den Schwenkarm, innerhalb der weiteren Ausnehmung geführt ist. Besonders bevorzugt ist die weitere Ausnehmung in einem vollständig ineinandergeschobenen Zustand des ersten Verbindungsstücks und des zweiten Verbindungsstücks entlang der Längsachsen der Verbindungsstücke zumindest im Wesentlichen auf einer Höhe mit dem Gegenbefestigungselement angeordnet. Bevorzugt greift das, insbesondere als Rastelement ausgebildete, Befestigungselement in dem befestigten Zustand der Befestigungseinheit durch die weitere Ausnehmung an dem Gegenbefestigungselement an/ein. Vorzugsweise ist das erste Verbindungsstück zumindest teilweise als eine Handgriffeinheit der Werkzeugmaschine, insbesondere einer Grundeinheit der Werkzeugmaschine, ausgebildet, wobei das Betätigungselement, insbesondere in einem an dem ersten Verbindungstück befestigten Zustand des zweiten Verbindungsstücks, beabstandet von der Handgriffeinheit angeordnet ist. Bevorzugt ist das Betätigungselement dazu vorgesehen, über eine in eine radial zur Längsachse des zweiten Verbindungsstücks ausgerichtete Richtung wirkende Kraft betätigt zu werden.

Des Weiteren wird vorgeschlagen, dass die Koppeleinheit zumindest ein, insbesondere das vorher genannte, Koppelelement und zumindest ein weiteres Koppelelement, insbesondere das vorher genannte weitere Koppelelement, umfasst, wobei das Koppelelement zumindest einen, insbesondere den vorher genannten, Schiebefortsatz ausbildet, der dazu vorgesehen ist, das weitere Koppelelement in dem gekoppelten Zustand der Koppeleinheit zur Übertragung der Antriebskraft in eine, insbesondere die vorher genannte, zumindest im Wesentlichen parallel zur Verbindungsrichtung ausgerichtete Schieberichtung zu schieben, wobei der Schiebefortsatz zumindest eine zumindest im Wesentlichen senkrecht zur Verbindungsrichtung verlaufende Außenkontur aufweist, die korrespondierend zu einer Außenkontur eines Formschlussfortsatzes des weiteren Koppelelements ausgebildet ist. Insbesondere kann ein von einem gekoppelten Zustand der Koppeleinheit verschiedenes Ineinandergreifen der Koppelelemente, insbesondere über den Schiebefortsatz und den Formschlussfortsatz, vorteilhaft verhindert werden. Es kann ein ungewolltes Eingreifen des Formschlussfortsatzes des weiteren Koppelelements an dem Schiebefortsatz des Koppelelements bei einem Ineinander- oder Aufeinanderbewegen des Koppelelements und des weiteren Koppelelements parallel zur Verbindungsrichtung vorteilhaft verhindert werden. Vorteilhafterweise kann nach einem übermäßigen Aufeinanderbewegen und anschließenden Ziehen des Koppelelements parallel zur Verbindungsrichtung ein Durchrutschen des weiteren Koppelelements durch den Schiebefortsatz ermöglicht werden. Dadurch kann vorteilhaft ein zumindest im Wesentlichen selbstständiges Ineinanderbewegen der Koppelelemente zu einem formschlüssigen Ineinandergreifen über die Formschlussfortsätze bzw. die Formschlussausnehmungen ermöglicht werden. Bevorzugt sind die Außenkontur des Schiebefortsatzes und die Außenkontur des Formschlussfortsatzes des weiteren Koppelelements rund, vorzugsweise kreisbogenförmig oder parabelförmig, ausgebildet. Bevorzugt weist der Schiebefortsatz über eine gesamte Erstreckung entlang der Haupterstreckungsachse des Koppelelements die Außenkontur auf, wobei insbesondere eine die Außenkontur des Schiebefortsatzes begrenzende Außenseite des Schiebefortsatzes zumindest im Wesentlichen parallel zur Haupterstreckungsachse des Koppelelements verläuft. Vorzugsweise weist der Formschlussfortsatz des weiteren Koppelelements in einer senkrecht zur Haupterstreckungsebene des weiteren Koppelelements angeordneten und/oder einer die Haupterstreckungsachse des weiteren Koppelelements umfassenden Schnittebene des weiteren Koppelelements an einer die Außenkontur des Formschlussfortsatzes des weiteren Koppelelements ausbildenden Seite des Formschlussfortsatzes des weiteren Koppelelements eine gebogene Grundform auf, welche insbesondere die/eine Führungsfläche des weiteren Koppelelements umfasst. Vorzugsweise begrenzt die Außenkontur des Formschlussfortsatzes des weiteren Koppelelements eine die Formschlussausnehmung des weiteren Koppelelements begrenzende Innenseite des weiteren Koppelelements und/oder des Formschlussfortsatzes des weiteren Koppelelements und/oder die Kraftübertragungsfläche des weiteren Koppelelements und/oder des Formschlussfortsatzes des weiteren Koppelelements. Besonders bevorzugt ist die Außenkontur des Formschlussfortsatzes des weiteren Koppelelements an einem der Formschlussausnehmung des weiteren Koppelelements zugewandten Ende des Formschlussfortsatzes des weiteren Koppelelements angeordnet. Bevorzugt sind die Außenkontur des Schiebefortsatzes und die Außenkontur des Formschlussfortsatzes des weiteren Koppelelements kongruent ausgebildet.

Außerdem wird ein Werkzeugmaschinensystem mit zumindest einer, insbesondere stabgebundenen, Werkzeugmaschine, mit zumindest einem Werkzeugaufsatz zu einer direkten oder indirekten Verbindung mit der Werkzeugmaschine, mit zumindest einem Verlängerungsstück oder Adapterstück, welches zwischen der Werkzeugmaschine und dem Werkzeugaufsatz anordenbar ist, mit zumindest einer erfindungsgemäßen Verbindungsvorrichtung vorgeschlagen, wobei die Verbindungsvorrichtung zu einer Verbindung der Werkzeugmaschine mit dem Verlängerungsstück oder Adapterstück oder mit dem Werkzeugaufsatz oder zu einer Verbindung des Verlängerungsstücks oder Adapterstücks mit dem Werkzeugaufsatz vorgesehen ist.

Vorzugsweise ist die Werkzeugmaschine als ein stabgebundenes Gartenwerkzeug ausgebildet. Insbesondere kann die Werkzeugmaschine als eine Stab-Gartenschere, insbesondere als eine Stab-Astschere, als eine Stab-Heckenschere, als ein Hochentaster, als eine Stab-Kettensäge oder als eine andere, einem Fachmann als sinnvoll erscheinende Werkzeugmaschine ausgebildet sein. Insbesondere ist die, insbesondere stabgebundene, Werkzeugmaschine zur Durchführung von Arbeiten, insbesondere von Schneidarbeiten, in höhergelegenen Bereichen als einer Körpergröße eines durchschnittlichen Benutzers der Werkzeugmaschine vorgesehen. Insbesondere ist die, insbesondere stabgebundene, Werkzeugmaschine dazu vorgesehen, Äste von Bäumen, Hecken o. dgl. zu schneiden, zu sägen und/oder zu trimmen.

Der Werkzeugaufsatz umfasst bevorzugt zumindest eine Bearbeitungseinheit. Die Bearbeitungseinheit umfasst vorzugsweise zumindest ein Bearbeitungswerkzeug. Das zumindest eine Bearbeitungswerkzeug kann insbesondere als eine Schneidklinge, insbesondere als eine Scherenklinge, als eine Trimmerklinge, als eine Sägekette, als Sägeschwert oder als ein anderes, einem Fachmann als sinnvoll erscheinendes Bearbeitungswerkzeug ausgebildet sein. Bevorzugt weist die Bearbeitungseinheit zumindest zwei Bearbeitungswerkzeuge, insbesondere Schneidklingen, auf, wobei zumindest eines der Bearbeitungswerkzeuge beweglich, insbesondere schwenkbar, gelagert ist, insbesondere relativ zu zumindest einem weiteren der Bearbeitungswerkzeuge. Die Werkzeugmaschine umfasst bevorzugt die zumindest eine Antriebseinheit. Vorzugsweise ist die Antriebseinheit dazu vorgesehen, das zumindest eine Bearbeitungswerkzeug zu einer Bewegung anzutreiben. Die Antriebseinheit umfasst insbesondere zumindest einen Motor, insbesondere einen Elektromotor. Vorzugsweise umfasst die, insbesondere stabgebundene, Werkzeugmaschine zumindest eine Energieversorgungseinheit, die dazu vorgesehen ist, zumindest der Antriebseinheit, insbesondere dem Motor, zu einem Betrieb Energie, insbesondere elektrische Energie, bereitzustellen. Bevorzugt ist die Energieversorgungseinheit zu einer netzunabhängigen Energieversorgung zumindest der Antriebseinheit vorgesehen. Insbesondere kann die Energieversorgungseinheit als ein, insbesondere wechselbarer, Akkumulator, als eine Batterie, als ein Speicherkondensator oder als eine andere, einem Fachmann als sinnvoll erscheinende netzunabhängige Energieversorgungseinheit ausgebildet sein. Alternativ oder zusätzlich ist vorstellbar, dass die Energieversorgungseinheit als eine netzabhängige Energieversorgungseinheit, insbesondere als ein Netzanschluss, ausgebildet ist. Bevorzugt ist die Antriebseinheit dazu vorgesehen, die Bearbeitungseinheit, insbesondere das zumindest eine Bearbeitungswerkzeug, des Werkzeugaufsatzes in einem verbundenen Zustand der Verbindungsvorrichtung, insbesondere in dem gekoppelten Zustand der Koppeleinheit der Verbindungsvorrichtung, zu einer diskontinuierlichen Bewegung anzutreiben. Vorzugsweise umfasst die Antriebseinheit zumindest ein Getriebe, über das der Motor in dem gekoppelten Zustand der Koppeleinheit mit der zumindest einen Bearbeitungseinheit wirkverbunden ist. Bevorzugt umfasst die Werkzeugmaschine, insbesondere die Antriebseinheit, zumindest eine Kraftübertragungsvorrichtung zu einer Übertragung der Antriebskraft von dem Motor auf das Koppelelement der Verbindungsvorrichtung. Insbesondere ist die Kraftübertragungsvorrichtung als Teil des Getriebes ausgebildet. Bevorzugt ist die Kraftübertragungsvorrichtung als Teil der Antriebseinheit ausgebildet. Bevorzugt ist der Motor dazu vorgesehen, eine Gewindestange der Kraftübertragungsvorrichtung, insbesondere in einer Bewegung um eine Längsachse der Gewindestange, anzutreiben. Bevorzugt ist die Kraftübertragungsvorrichtung dazu vorgesehen, eine Rotationsbewegung des Motors, vorzugsweise über eine an der Gewindestange angeordnete Spindelmutter, in eine lineare Bewegung umzuwandeln und an das Koppelelement zu übertragen. Es sind aber auch andere Ausgestaltungen der Kraftübertragungsvorrichtung zu einer Übertragung der Antriebskraft parallel zur Verbindungsrichtung an das Koppelelement denkbar. Vorzugsweise ist die Verbindungsvorrichtung dazu vorgesehen, die Antriebskraft über das Koppelelement und das weitere Koppelelement von der Werkzeugmaschine an das Verlängerungsstück oder Adapterstück und/oder an den Werkzeugaufsatz zu übertragen, vorzugsweise zu einem Bewegen eines Bearbeitungswerkzeugs.

Die Werkzeugmaschine weist vorzugsweise zumindest eine, insbesondere zumindest im Wesentlichen stabförmige, Grundeinheit auf, an und/oder in der die Antriebseinheit und die Energieversorgungseinheit angeordnet sind. Es ist denkbar, dass die Antriebseinheit und/oder die Energieversorgungseinheit abnehmbar ausgebildet sind. Vorzugsweise ist der Werkzeugaufsatz, insbesondere die Bearbeitungseinheit, über die Verbindungsvorrichtung entlang der Längsachse der Grundeinheit betrachtet an dem Endbereich der Grundeinheit anordenbar. Bevorzugt ist die Kraftübertragungsvorrichtung derart angeordnet, dass eine Längsachse der Gewindestange zumindest im Wesentlichen parallel zu einer Längsachse der Grundeinheit angeordnet ist. Vorzugsweise ist die Energieversorgungseinheit an dem, dem Endbereich entlang der Längsachse der Grundeinheit gegenüberliegenden weiteren Endbereich der Grundeinheit angeordnet. Bevorzugt bildet die Grundeinheit zumindest teilweise, insbesondere zumindest im Wesentlichen vollständig, ein Gehäuse der Werkzeugmaschine aus. Bevorzugt umfasst die Werkzeugmaschine zumindest eine Betätigungsvorrichtung, welche zumindest zwei entlang der Längsachse der Grundeinheit versetzt zueinander angeordnete Handgriffeinheiten umfasst. Eine der zwei Handgriffeinheiten ist als ein Betätigungselement ausgebildet. Vorzugsweise ist die Kraftübertragungsvorrichtung entlang der Längsachse der Grundeinheit zwischen den zwei Handgriffeinheiten angeordnet. Es sind aber auch andere Ausgestaltungen der Werkzeugmaschine denkbar. Insbesondere ist die Kraftübertragungsvorrichtung innerhalb der Grundeinheit angeordnet. Bevorzugt ist die Antriebseinheit zumindest größtenteils zwischen den zwei Handgriffeinheiten innerhalb der Grundeinheit angeordnet. Alternativ ist denkbar, dass die Antriebseinheit von einer weiteren Handgriffeinheit der zwei Handgriffeinheiten aus entlang der Längsachse der Grundeinheit hinter der Handgriffeinheit, insbesondere dem Betätigungselement, angeordnet ist. Die Werkzeugmaschine umfasst insbesondere eine Aufnahmevorrichtung zu einer Befestigung der Energieversorgungseinheit an der Grundeinheit. Es ist denkbar, dass die Energieversorgungseinheit bei einer Befestigung an der Aufnahmevorrichtung zumindest teilweise innerhalb der Grundeinheit angeordnet ist oder von der Grundeinheit aufgenommen wird. Vorzugsweise ist die Aufnahmevorrichtung an einem Endbereich der Grundeinheit angeordnet. Bevorzugt ist die Aufnahmevorrichtung von der weiteren Handgriffeinheit aus entlang der Längsachse der Grundeinheit hinter der Handgriffeinheit, insbesondere dem Betätigungselement, angeordnet. Alternativ ist denkbar, dass die Aufnahmevorrichtung entlang der Längsachse der Grundeinheit zwischen den zwei Handgriffeinheiten angeordnet ist. Insbesondere erstreckt sich die Koppeleinheit entlang der Längsachse der Grundeinheit von der Antriebseinheit und/oder der Kraftübertragungsvorrichtung bis zu der Bearbeitungseinheit, wobei insbesondere die Koppeleinheit, insbesondere das Koppelelement, entlang der Längsachse der Grundeinheit betrachtet in einem Bereich der Grundeinheit innerhalb der Grundeinheit angeordnet ist. Bevorzugt ist die Kraftübertragungsvorrichtung dazu vorgesehen, eine über den Motor angetriebene um die Längsachse der Gewindestange erfolgende Bewegung in eine zumindest im Wesentlichen parallel zur Verbindungsrichtung und/oder zur Längsachse der Grundeinheit ausgerichtete Bewegung umzuwandeln, welche insbesondere dazu vorgesehen ist, über die Koppeleinheit der Verbindungsvorrichtung auf die Bearbeitungseinheit übertragen zu werden. Vorzugsweise ist die Kraftübertragungseinheit und/oder die Koppeleinheit dazu vorgesehen, über die zumindest im Wesentlichen parallel zur Längsachse der Gewindestange und/oder zur Längsachse der Grundeinheit ausgerichtete Bewegung eine Antriebskraft an die Bearbeitungseinheit zu übertragen, wobei vorzugsweise die zwei Bearbeitungswerkzeuge mittels der Antriebskraft relativ zueinander bewegt werden.

In einer bevorzugten Ausgestaltung umfasst das Werkzeugmaschinensystem die Verbindungsvorrichtung. Bevorzugt ist ein erstes Verbindungsstück an der Werkzeugmaschine, insbesondere der Grundeinheit, angeordnet, insbesondere einteilig mit der Werkzeugmaschine, insbesondere der Grundeinheit, ausgebildet. Bevorzugt ist ein weiteres erstes Verbindungsstück an dem Verlängerungsstück oder Adapterstück angeordnet. Vorzugsweise ist ein zweites Verbindungsstück an dem Werkzeugaufsatz angeordnet. Bevorzugt ist ein weiteres zweites Verbindungsstück an dem Verlängerungsstück oder Adapterstück angeordnet, vorzugsweise an einer dem weiteren ersten Verbindungsstück abgewandten Seite des Verlängerungsstücks oder Adapterstücks. Bevorzugt ist das erste Verbindungsstück zu einer Befestigung und einer Kopplung der Werkzeugmaschine mit dem Werkzeugaufsatz mit dem zweiten Verbindungsstück verbindbar und zu einer Befestigung und einer Kopplung der Werkzeugmaschine mit dem Verlängerungsstück oder Adapterstück mit dem weiteren zweiten Verbindungsstück verbindbar. Vorzugsweise ist das weitere erste Verbindungsstück zu einer Befestigung und einer Kopplung des Verlängerungsstücks oder Adapterstücks mit dem Werkzeugaufsatz mit dem zweiten Verbindungsstück verbindbar.

Vorzugsweise umfasst das Verlängerungsstück oder Adapterstück ein Koppelelement und ein weiteres Koppelelement einer Verbindungsvorrichtung, welche zumindest parallel zur Verbindungsrichtung form- und/oder kraftschlüssig miteinander verbunden sind. Bevorzugt sind das Koppelelement und das weitere Koppelelement, welche als Teil des Verlängerungsstücks oder Adapterstücks ausgebildet sind, einteilig ausgebildet. Insbesondere erstrecken sich das Koppelelement und das weitere Koppelelement, welche als Teil des Verlängerungsstücks oder Adapterstücks ausgebildet sind, zusammen über eine zumindest im Wesentlichen vollständige Längserstreckung des Verlängerungsstücks oder Adapterstücks. Bevorzugt werden das Koppelelement und das weitere Koppelelement, welche als Teil des Verlängerungsstücks oder Adapterstücks ausgebildet sind, insbesondere entlang der Längserstreckung des Verlängerungsstücks oder Adapterstücks um eine Längsachse des Verlängerungsstücks oder Adapterstücks zumindest im Wesentlichen vollständig von einem Grundkörper des Verlängerungsstücks oder Adapterstücks, welches insbesondere einen Grundkörper des weiteren ersten Verbindungsstücks und einen Grundkörper des weiteren zweiten Verbindungsstücks umfasst, umschlossen. Bevorzugt ist das Verlängerungsstück oder Adapterstück dazu vorgesehen, in einem über die Verbindungsvorrichtung mit der Werkzeugmaschine und dem Werkzeugaufsatz verbundenen Zustand des Verlängerungsstücks oder Adapterstücks eine Antriebskraft, insbesondere über eine mechanische Kraftübertragung bzw. eine formschlüssige Verbindung, von einem als Teil des ersten Verbindungsstücks ausgebildeten Koppelelement über das Koppelelement und das weitere Koppelelement, welche als Teil des Verlängerungsstücks oder Adapterstücks ausgebildet sind, an ein als Teil des zweiten Verbindungsstücks ausgebildetes weiteres Koppelelement zu übertragen. Es ist auch denkbar, den Werkzeugaufsatz über die zumindest eine Verbindungsvorrichtung, insbesondere über ein Ineinanderschieben des ersten Verbindungsstücks und des zweiten Verbindungsstücks, direkt mit der Werkzeugmaschine zu verbinden.

Bevorzugt umfassen verschiedene Führungseinheiten der Verbindungsvorrichtung zumindest zwei unterschiedlich ausgebildete Führungselemente. Bevorzugt ist zumindest ein Führungselement an dem zweiten Verbindungsstück oder dem ersten Verbindungsstück angeordnet ist. Vorzugsweise ist zumindest ein weiteres, insbesondere von dem Führungselement verschieden ausgebildetes, Führungselement an dem weiteren ersten Verbindungsstück oder dem weiteren zweiten Verbindungsstück angeordnet. Insbesondere umfassen die Führungseinheiten der Verbindungsvorrichtung zumindest zwei unterschiedlich ausgebildete Aufnahmen zu einer Aufnahme der Führungselemente bei einem Ineinanderschieben der Verbindungsstücke. Bevorzugt ist zumindest eine Aufnahme einer der Führungseinheiten an dem zweiten Verbindungsstück oder dem ersten Verbindungsstück angeordnet ist. Vorzugsweise ist zumindest eine weitere, insbesondere von der Aufnahme verschiedene, Aufnahme einer der Führungseinheiten an dem weiteren ersten Verbindungsstück oder dem weiteren zweiten Verbindungsstück angeordnet. Bevorzugt ist die Aufnahme der Führungseinheit über das erste Verbindungsstück an der Werkzeugmaschine angeordnet und zu einer Aufnahme eines der zwei unterschiedlich ausgebildeten Führungselemente vorgesehen. Vorzugsweise ist die weitere Aufnahme einer weiteren Führungseinheit der Verbindungsvorrichtung über das weitere erste Verbindungsstück an dem Verlängerungsstück oder Adapterstück angeordnet und zu einer Aufnahme des, insbesondere an dem Werkzeugaufsatz angeordneten, Führungselements vorgesehen. Insbesondere weisen die zwei Führungselemente unterschiedliche Querschnittsflächen und/oder Quererstreckungen auf. Besonders bevorzugt weist das Führungselement eine kleinere Querschnittsfläche und/oder Quererstreckung auf als das weitere Führungselement. Vorzugsweise weist das weitere Führungselement eine größere Querschnittsfläche und/oder Quererstreckung auf als die weitere Aufnahme der Führungseinheiten. Bevorzugt sind die Führungseinheiten, insbesondere die Führungselemente und die Aufnahmen, derart ausgebildet, dass über die Verbindungsvorrichtung zwischen das Verlängerungsstück oder Adapterstück und den Werkzeugaufsatz oder zwischen die Werkzeugmaschine und das Verlängerungsstück oder Adapterstück kein, insbesondere zumindest im Wesentlichen baugleich zu dem das Verlängerungsstück oder Adapterstück ausgebildetes, weiteres Verlängerungsstück oder Adapterstück angeordnet werden kann.

Durch die erfindungsgemäße Ausgestaltung des Werkzeugmaschinensystems kann eine vorteilhaft intuitive und schnelle Verbindung der Werkzeugmaschine mit dem Werkzeugaufsatz oder dem Verlängerungsstück oder Adapterstück und/oder des Verlängerungsstücks oder Adapterstücks mit dem Werkzeugaufsatz ermöglicht werden, insbesondere zu einer stabilen Verbindung und einer gleichzeitigen Übertragung einer Antriebskraft zwischen den entsprechenden Bauteilen. Es kann eine vorteilhaft hohe Benutzerfreundlichkeit ermöglicht werden. Insbesondere können/kann ungewollte Beschädigungen und/oder eine fehlerhafte Verbindung durch nutzerseitige Fehler beim Verbinden der Werkzeugmaschine, des Verlängerungsstücks oder Adapterstücks und/oder dem Werkzeugaufsatz vorteilhaft verhindert werden. Es kann eine vorteilhaft einfache und kostengünstige Herstellung und Wartung ermöglicht werden, insbesondere da zusätzliche Betätigungs- und/oder Antriebselemente entfallen können. Vorzugsweise kann eine vorteilhaft modulare Ausgestaltung des Werkzeugmaschinensystems ermöglicht werden, wobei insbesondere weitere Adapter o. dgl. zu einem optionalen Anordnen des Verlängerungsstücks oder Adapterstücks zwischen der Werkzeugmaschine und dem Werkzeugaufsatz vorteilhaft entfallen können.

Die erfindungsgemäße Verbindungsvorrichtung und/oder das erfindungsgemäße Werkzeugmaschinensystem sollen/soll hierbei nicht auf die oben beschriebene Anwendung und Ausführungsform beschränkt sein. Insbesondere können/kann die erfindungsgemäße Verbindungsvorrichtung und/oder das erfindungsgemäße Werkzeugmaschinensystem zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Werkzeugmaschinensystem mit einer stabgebundenen Werkzeugmaschine, welche eine erfindungsgemäße Verbindungsvorrichtung umfasst, mit einem Werkzeugaufsatz und mit einem Verlängerungsstück, welches über eine Haltevorrichtung an der Werkzeugmaschine verstaut ist, in einer schematischen perspektivischen Darstellung,
- Fig. 2: eine schematische perspektivische Darstellung des erfindungsgemäßen Werkzeugmaschinensystems in einem zwischen der Werkzeugmaschine und dem Werkzeugaufsatz montierten Zustand des Verlängerungsstücks,
- Fig. 3: eine schematische Darstellung einer geschnittenen Seitenansicht des erfindungsgemäßen Werkzeugmaschinensystems in einem Bereich der erfindungsgemäßen Verbindungsvorrichtung, insbesondere zwischen der Werkzeugmaschine und dem Werkzeugaufsatz,
- Fig. 4: eine schematische Darstellung einer geschnittenen Seitenansicht des erfindungsgemäßen Werkzeugmaschinensystems in dem Bereich der erfindungsgemäßen Verbindungsvorrichtung bei einem Ineinanderschieben zweier Verbindungsstücke der Verbindungsvorrichtung,
- Fig. 5: eine schematische Darstellung einer geschnittenen Seitenansicht des erfindungsgemäßen Werkzeugmaschinensystems in dem Bereich der erfindungsgemäßen Verbindungsvorrichtung bei einem Lösen der Verbindungsvorrichtung bzw. einem Trennen der zwei Verbindungsstücke der Verbindungsvorrichtung,
- Fig. 6: eine schematische Darstellung einer Seitenansicht eines Koppelbereichs eines Koppelelements und eines weiteren Koppelelements einer Koppeleinheit der erfindungsgemäßen Verbindungsvorrichtung in einem gekoppelten Zustand der Koppeleinheit,
- Fig. 7: eine schematische Darstellung einer perspektivischen Ansicht des Koppelbereichs des Koppelelements und des weiteren Koppelelements der Koppeleinheit in dem gekoppelten Zustand der Koppeleinheit,
- Fig. 8: eine schematische Darstellung einer perspektivischen Ansicht der zwei Verbindungsstücke der erfindungsgemäßen Verbindungsvorrichtung in einem getrennt voneinander angeordneten Zustand der Verbindungsstücke und
- Fig. 9: eine schematische Darstellung eines Querschnitts durch eine erfindungsgemäße Verbindungsvorrichtung senkrecht zu einer Verbindungsrichtung der Verbindungsvorrichtung mit einer alternativen Ausgestaltung eines Koppelelements einer Koppeleinheit der Verbindungsvorrichtung.

### Beschreibung der Ausführungsbeispiele

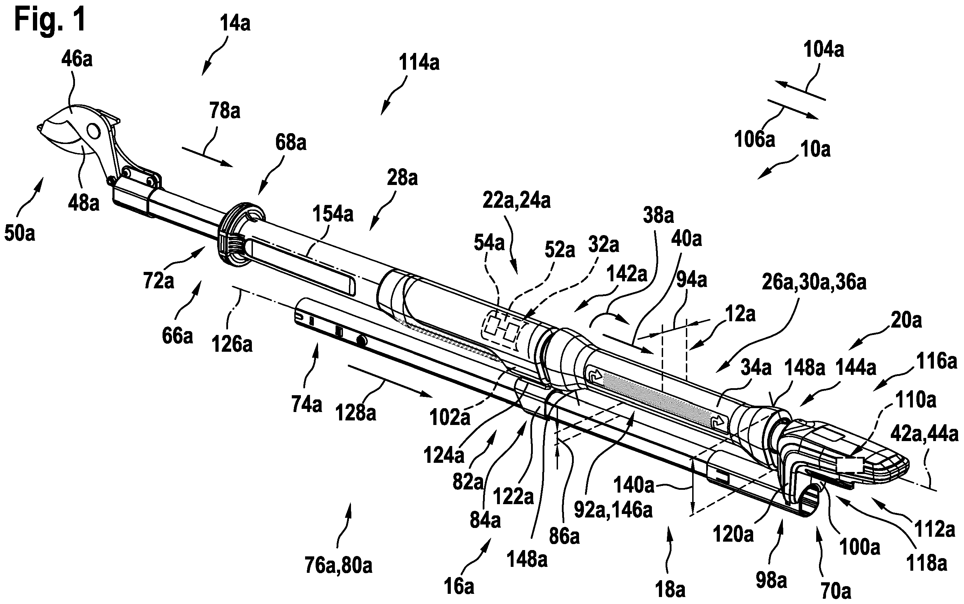

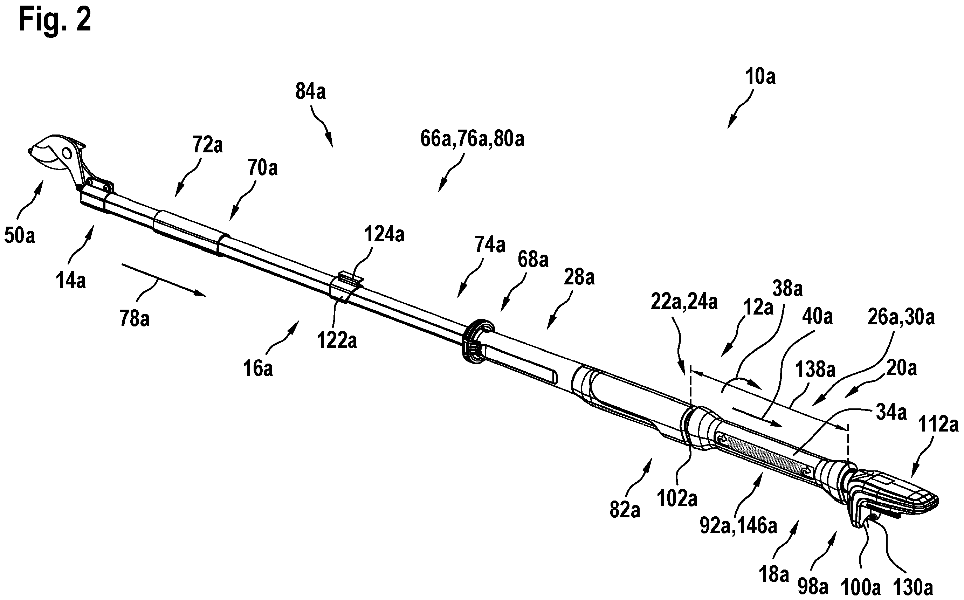

Figuren 1 und 2 zeigen ein Werkzeugmaschinensystem 10a mit einer stabgebundenen Werkzeugmaschine 12a, mit einem Werkzeugaufsatz 14a und mit einem Verlängerungsstück oder Adapterstück 16a. Die Werkzeugmaschine 12a ist als ein Hochentaster ausgebildet. Es sind aber auch andere Ausgestaltungen der Werkzeugmaschine 12a denkbar, beispielsweise als eine Stab-Gartenschere, insbesondere als eine Stab-Astschere, als eine Stab-Heckenschere, als eine Stab-Kettensäge oder als eine andere, einem Fachmann als sinnvoll erscheinende Werkzeugmaschine. Das Verlängerungsstück oder Adapterstück 16a ist insbesondere als Zwischenstück zur Verlängerung einer Reichweite des Werkzeugmaschinensystems 10a, insbesondere eines Abstands des Werkzeugaufsatzes 14a und der Werkzeugmaschine 12a, ausgebildet. Bevorzugt ist das Verlängerungsstück oder Adapterstück 16a dazu vorgesehen, zwischen der Werkzeugmaschine 12a und dem Werkzeugaufsatz 14a angeordnet zu werden. Das Werkzeugmaschinensystem 10a umfasst eine Haltevorrichtung 18a zu einem Verstauen des Verlängerungsstücks oder Adapterstücks 16a an der Werkzeugmaschine 12a. In Figur 1 ist das Verlängerungsstück oder Adapterstück 16a in einem über die Haltevorrichtung 18a an der Werkzeugmaschine 12a angeordneten, insbesondere befestigten, Zustand gezeigt.

Die Werkzeugmaschine 12a umfasst eine Betätigungsvorrichtung 20a zu einem Halten und Bedienen der Werkzeugmaschine 12a und/oder des Werkzeugmaschinensystems 10a. Die Werkzeugmaschine 12a umfasst eine Grundeinheit 22a, welche zumindest teilweise ein Gehäuse 24a der Werkzeugmaschine 12a ausbildet. Die Grundeinheit 22a bildet insbesondere einen Teil der Betätigungsvorrichtung 20a aus. Die Grundeinheit 22a ist zumindest im Wesentlichen stabförmig ausgebildet. Die Betätigungsvorrichtung 20a umfasst zwei zumindest im Wesentlichen koaxial zueinander angeordnete und beabstandet voneinander angeordnete Handgriffeinheiten 26a, 28a, die jeweils dazu vorgesehen sind, von zumindest einer Hand eines Benutzers zumindest größtenteils umgriffen zu werden. Die zwei Handgriffeinheiten 26a, 28a sind jeweils an der Grundeinheit 22a angeordnet oder zumindest teilweise als Teil der Grundeinheit 22a ausgebildet. Die Betätigungsvorrichtung 20a umfasst eine Schalteinheit 30a zu einer Steuerung von zumindest einer Funktion, insbesondere einer Mehrzahl von Funktionen, der Werkzeugmaschine 12a. Bevorzugt sind die über die Schalteinheit 30a steuerbaren Funktionen der Werkzeugmaschine 12a als ein Freischalten einer Energieversorgung der Werkzeugmaschine 12a, insbesondere einer Antriebseinheit 32a der Werkzeugmaschine 12a, und als eine Ansteuerung der Antriebseinheit 32a der Werkzeugmaschine 12a ausgebildet. Eine Handgriffeinheit 26a der zwei Handgriffeinheiten 26a, 28a ist an der Grundeinheit 22a angeordnet. Die Handgriffeinheit 22a ist als Betätigungselement 34a der Schalteinheit 30a ausgebildet, welches die Grundeinheit 22a in einem Bereich 36a der Grundeinheit 22a, in dem das Betätigungselement 34a angeordnet ist, röhrenartig umschließt. Eine weitere Handgriffeinheit 28a der zwei Handgriffeinheiten 26a, 28a ist als Teil der Grundeinheit 22a ausgebildet. Das Betätigungselement 34a ist relativ zur Grundeinheit 22a und/oder relativ zu der weiteren Handgriffeinheit 28a der zwei Handgriffeinheiten 26a, 28a entlang von zumindest zwei unterschiedlichen Bewegungspfaden 38a, 40a beweglich gelagert, wobei zumindest ein Bewegungspfad 38a der zwei unterschiedlichen Bewegungspfade 38a, 40a einer Rotationsbewegung, insbesondere um eine Längsachse 42a der Grundeinheit 22a und/oder um eine Längsachse 44a des Betätigungselements 34a, folgt.

Die Werkzeugmaschine 12a umfasst die Antriebseinheit 32a, welche dazu vorgesehen ist, eine Antriebskraft für eine angetriebene Bewegung zumindest eines Bearbeitungswerkzeugs 46a, 48a einer Bearbeitungseinheit 50a des Werkzeugaufsatzes 14a zur Verfügung zu stellen. Die Antriebseinheit 32a umfasst einen Motor 52a, welcher insbesondere als ein Elektromotor ausgebildet ist. Es ist denkbar, dass der Motor 52a als ein bürstenloser Gleichstrommotor ausgebildet ist. Alternativ sind auch andere Ausgestaltungen des Motors 52a denkbar. Die Werkzeugmaschine 12a, insbesondere die Antriebseinheit 32a, umfasst eine Kraftübertragungsvorrichtung 54a. Die Kraftübertragungsvorrichtung 54a ist bevorzugt zu einer Umwandlung und/oder gerichteten Übertragung einer von dem Motor 52a erzeugten Kraft vorgesehen. Insbesondere ist die Kraftübertragungsvorrichtung 54a dazu vorgesehen, eine Rotationsbewegung eines Abtriebselements des Motors 52a (in Figuren 1 und 2 nicht gezeigt), welches vorzugsweise als eine Antriebswelle ausgebildet ist, in eine zumindest im Wesentlichen parallel zu einer Längsachse 42a der Werkzeugmaschine 12a, insbesondere der Grundeinheit 22a, ausgerichtete Bewegung umzuwandeln. Insbesondere umfasst die Längsachse 42a der Grundeinheit 22a die Längsachse der Werkzeugmaschine. Die Kraftübertragungsvorrichtung umfasst eine Gewindestange (in Figuren 1 und 2 nicht gezeigt), welche mit der Antriebswelle des Motors 52a verbunden ist, eine Spindelmutter (in Figuren 1 und 2 nicht gezeigt) zu einer Anordnung an der Gewindestange und eine Vielzahl von Kugeln (in Figuren 1 und 2 nicht gezeigt) zu einer Kraftübertragung zwischen der Gewindestange und der Spindelmutter. Die Gewindestange und die Spindelmutter begrenzen zusammen um die Gewindestange zumindest einen Führungskanal, insbesondere genau zwei Führungskanäle, zum Führen der Kugeln. Insbesondere sind die Kugeln dazu vorgesehen, über eine Bewegung entlang des zumindest einen Führungskanals eine Rotationsbewegung der Gewindestange in eine translatorische Bewegung der Spindelmutter umzuwandeln. Die Spindelmutter ist aus zumindest zwei, insbesondere genau drei, Teilstücken gebildet. Jeder der zwei Führungskanäle ist an jeder Stelle entlang einer Führungsstrecke des jeweiligen Führungskanals um die Gewindestange jeweils zumindest teilweise von jeweils zwei Teilstücken der drei Teilstücke begrenzt. Es sind aber auch andere Ausgestaltungen der Kraftübertragungsvorrichtung 54a denkbar, beispielsweise mit einer einteiligen Spindelmutter und/oder mit einer verschiedenen Anzahl an Führungskanälen für Lagerelemente.

Das Werkzeugmaschinensystem 10a umfasst eine Verbindungsvorrichtung 66a zu einem Verbinden der Werkzeugmaschine 12a mit dem Verlängerungsstück oder Adapterstück 16a oder dem Werkzeugaufsatz 14a und/oder zu einem Verbinden des Werkzeugaufsatzes 14a mit dem Verlängerungsstück oder Adapterstück 16a. In Figur 1 ist der Werkzeugaufsatz 14a über die Verbindungsvorrichtung 66a mit der Werkzeugmaschine 12a verbunden. Es ist aber auch denkbar, dass der Werkzeugaufsatz 14a über die Verbindungsvorrichtung 66a mit dem Verlängerungsstück oder Adapterstück 16a verbunden wird, welches dann über die Verbindungsvorrichtung 66a mit der Werkzeugmaschine 12a verbunden wird/verbindbar ist (vgl. Figur 2). Die Verbindungsvorrichtung 66a umfasst zumindest ein erstes Verbindungsstück 68a, 70a, bevorzugt genau zwei erste Verbindungsstücke 68a, 70a, insbesondere ein erstes Verbindungsstück 68a und ein weiteres erstes Verbindungsstück 70a, welche insbesondere jeweils als Teil der Grundeinheit 22a der Werkzeugmaschine 12a oder als Teil des Verlängerungsstücks oder Adapterstücks 16a ausgebildet sind. Das erste Verbindungsstück 68a ist als Teil der Werkzeugmaschine 12a ausgebildet. Insbesondere ist das erste Verbindungsstück 68a an der Grundeinheit 22a befestigt. Das weitere erste Verbindungsstück 70a ist als Teil des Verlängerungsstücks oder Adapterstücks 16a ausgebildet, insbesondere an einem Grundkörper des Verlängerungsstücks oder Adapterstücks 16a befestigt. Die Verbindungsvorrichtung 66a umfasst zumindest ein zweites Verbindungsstück 72a, 74a, bevorzugt genau zwei zweite Verbindungsstücke 72a, 74a, insbesondere ein zweites Verbindungsstück 72a und ein weiteres zweites Verbindungsstück 74a, welche insbesondere jeweils als Teil des Verlängerungsstücks oder Adapterstücks 16a oder als Teil des Werkzeugaufsatzes 14a ausgebildet sind. Das zweite Verbindungsstück 72a ist als Teil des Werkzeugaufsatzes 14a ausgebildet, insbesondere an einem Grundkörper des Werkzeugaufsatzes 14a befestigt. Das weitere zweite Verbindungsstück 74a ist als Teil des Verlängerungsstücks oder Adapterstücks 16a ausgebildet, insbesondere an dem Grundkörper des Verlängerungsstücks oder Adapterstücks 16a befestigt. Vorzugsweise sind das erste Verbindungsstück 68a und das weitere erste Verbindungsstück 70a jeweils mit dem zweiten Verbindungsstück 72a und dem weiteren zweiten Verbindungsstück 74a verbindbar. Insbesondere sind das erste Verbindungsstück 68a und das weitere erste Verbindungsstück 70a jeweils in jedem Betriebszustand der Verbindungsvorrichtung 66a höchstens mit einem der zwei zweiten Verbindungsstücke 72a, 74a verbunden. Die Verbindungsvorrichtung 66a umfasst eine Befestigungseinheit 76a, die dazu vorgesehen ist, eines der zwei zweiten Verbindungsstücke 72a, 74a, insbesondere das zweite Verbindungsstück 72a oder das weitere zweite Verbindungsstück 74a, jeweils über eine Bewegung entlang einer zumindest im Wesentlichen geradlinigen Verbindungsrichtung 78a an einem der zwei ersten Verbindungsstücke 68a, 70a, insbesondere dem ersten Verbindungsstück 68a oder dem weiteren ersten Verbindungsstück 70a, zu befestigen. Die Verbindungsvorrichtung 66a umfasst eine Koppeleinheit 80a, die zumindest in einem gekoppelten Zustand dazu vorgesehen ist, eine Antriebskraft zumindest im Wesentlichen parallel zur Verbindungsrichtung 78a von dem einen der ersten Verbindungsstücke 68a, 70a, insbesondere einem Koppelelement 87a, 88a der Koppeleinheit 80a (in Figuren 1 und 2 nicht gezeigt), das als Teil eines der ersten Verbindungsstücke 68a, 70a ausgebildet ist, an eines der zweiten Verbindungsstücke 72a, 74a, insbesondere ein weiteres Koppelelement 89a, 90a der Koppeleinheit 80a (in Figuren 1 und 2 nicht gezeigt), das als Teil eines der zweiten Verbindungsstücke 72a, 74a ausgebildet ist, zu übertragen. Die Befestigungseinheit 76a der Verbindungsvorrichtung 66a ist dazu vorgesehen, ein erstes Verbindungsstück 68a, 70a, insbesondere das erste Verbindungsstück 68a oder das weitere erste Verbindungsstück 70a, und ein zweites Verbindungsstück 72a, 74a, insbesondere das zweite Verbindungsstück 72a oder das weitere zweite Verbindungsstück 74a, bei oder nach einem Ineinanderschieben des jeweiligen ersten Verbindungsstücks 68a, 70a und des jeweiligen zweiten Verbindungsstücks 72a, 74a in Verbindungsrichtung 78a zumindest im Wesentlichen selbstständig aneinander zu befestigen. Die Koppeleinheit 80a ist dazu vorgesehen, bei oder nach dem Ineinanderschieben des jeweiligen ersten Verbindungsstücks 68a, 70a und des jeweiligen zweiten Verbindungsstücks 72a, 74a in Verbindungsrichtung 78a zumindest im Wesentlichen selbstständig in einen gekoppelten Zustand der Koppeleinheit 80a überzugehen. Insbesondere ist die Koppeleinheit 80a dazu vorgesehen, in dem gekoppelten Zustand, vorzugsweise über die Koppelelemente 87a, 88a, 89a, 90a, eine Antriebskraft von einem ersten Verbindungsstück 68a, 70a auf ein zweites Verbindungsstück 72a, 74a zu übertragen.

Das Verlängerungsstück oder Adapterstück 16a ist zumindest im Wesentlichen stabförmig ausgebildet. Das Verlängerungsstück oder Adapterstück 16a ist zu einer Anordnung und/oder einer Kraftübertragung zwischen der Werkzeugmaschine 12a und dem Werkzeugaufsatz 14a und/oder zu einer Befestigung des Werkzeugaufsatzes 14a an der Werkzeugmaschine 12a vorgesehen. Das Verlängerungsstück oder Adapterstück 16a ist über die Haltevorrichtung 18a an der Werkzeugmaschine 12a, insbesondere der Grundeinheit 22a, verstaubar, bevorzugt befestigbar. Die Haltevorrichtung 18a ist zumindest im Wesentlichen vollständig an einer Unterseite 82a der Werkzeugmaschine 12a angeordnet. Die Haltevorrichtung 18a umfasst eine Befestigungseinheit 84a zu einer Befestigung des Verlängerungsstücks oder Adapterstücks 16a an der Werkzeugmaschine 12a, insbesondere der Grundeinheit 22a. Die Handgriffeinheiten 26a, 28a der Werkzeugmaschine 12a, insbesondere der Betätigungsvorrichtung 20a, sind insbesondere stabförmig ausgebildet. Die Befestigungseinheit 84a der Haltevorrichtung 18a ist entlang der Längsachse 42a der Werkzeugmaschine 12a zwischen den zwei Handgriffeinheiten 26a, 28a angeordnet. Bevorzugt ist die Befestigungseinheit 84a der Haltevorrichtung 18a zumindest teilweise an der Grundeinheit 22a angeordnet, bevorzugt zumindest teilweise einteilig mit der Grundeinheit 22a, insbesondere einer an der Unterseite 82a der Werkzeugmaschine 12a angeordneten Außenwand der Grundeinheit 22a, ausgebildet. Vorzugsweise ist die Befestigungseinheit 84a der Haltevorrichtung 18a senkrecht zur Längsachse 42a der Werkzeugmaschine 12a betrachtet zumindest im Wesentlichen vollständig zwischen den zwei Handgriffelementen 26a, 28a angeordnet und insbesondere beabstandet von durch die Handgriffeinheiten 26a, 28a begrenzten Bereichen, welche sich um die Längsachse 42a der Werkzeugmaschine 12a erstrecken, angeordnet. Die Haltevorrichtung 18a und/oder die Grundeinheit 22a sind derart ausgebildet, dass das Verlängerungsstück oder Adapterstück 16a in einem an der Grundeinheit 22a befestigten Zustand, insbesondere zumindest im Wesentlichen senkrecht zu der Längsachse 42a der Werkzeugmaschine 12a, einen minimalen Abstand 86a zu zumindest einer der Handgriffeinheiten 26a, 28a, vorzugsweise zu einem Hauptgriffbereich 92a der Handgriffeinheit 26a, aufweist, der mindestens 1,5 cm, vorzugsweise mindestens 2 cm und bevorzugt mindestens 2,2 cm, beträgt und/oder dass ein Verhältnis des minimalen Abstands 86a des Verlängerungsstücks oder Adapterstücks 16a und zumindest einer der Handgriffeinheiten 26a, 28a, vorzugsweise dem Hauptgriffbereich 92a der Handgriffeinheit 26a, und einer maximalen Quererstreckung 94a der jeweiligen Handgriffeinheit 26a, 28a, insbesondere der Handgriffeinheit 26a, jeweils mindestens 0,35, vorzugsweise mindestens 0,4 und bevorzugt mindestens 0,45, beträgt.

Die Antriebseinheit 32a und die Kraftübertragungsvorrichtung 54a sind zumindest im Wesentlichen vollständig innerhalb der Grundeinheit 22a angeordnet und/oder von dem, insbesondere durch die Grundeinheit 22a ausgebildeten, Gehäuse 24a der Werkzeugmaschine 12a umschlossen. Die Schalteinheit 30a ist, insbesondere mit Ausnahme des Betätigungselements 34a, zumindest größtenteils innerhalb der Grundeinheit 22a angeordnet und/oder von dem, insbesondere durch die Grundeinheit 22a ausgebildeten, Gehäuse 24a der Werkzeugmaschine 12a umschlossen. Die Koppeleinheit 80a der Verbindungsvorrichtung 66a erstreckt sich zumindest im Wesentlichen vollständig innerhalb der Werkzeugmaschine 12a, insbesondere der Grundeinheit 22a, des Verlängerungsstücks oder Adapterstücks 16a und des Werkzeugaufsatzes 14a. Das erste Verbindungsstück 68a, das weitere erste Verbindungsstück 70a, das zweite Verbindungsstück 72a und das weitere zweite Verbindungsstück 74a sind jeweils zumindest im Wesentlichen stabförmig ausgebildet. Die Verbindungsrichtung 78a der Verbindungsvorrichtung 66a ist, insbesondere in einem befestigten Zustand der Befestigungseinheit 76a der Verbindungsvorrichtung 66a, zumindest im Wesentlichen parallel zu einer Längsachse 154a des ersten Verbindungsstücks 68a, des weiteren ersten Verbindungsstücks 70a, des zweiten Verbindungsstücks 72a und/oder des weiteren zweiten Verbindungsstücks 74a ausgerichtet. Vorzugsweise sind zumindest die Verbindungsstücke 68a, 70a, 72a, 74a der Verbindungsvorrichtung 66a, insbesondere in einem verbundenen Zustand und/oder in dem befestigten Zustand der Befestigungseinheit 76a der Verbindungsvorrichtung 66a, zumindest im Wesentlichen koaxial zueinander angeordnet (siehe Figur 2).

Die Haltevorrichtung 18a umfasst eine Fixiereinheit 98a zu einem Fixieren des an der Werkzeugmaschine 12a, insbesondere über die Befestigungseinheit 84a der Haltevorrichtung 18a, befestigten Verlängerungsstücks oder Adapterstücks 16a. Die Fixiereinheit 98a umfasst ein Fixierelement 100a, welches an der Werkzeugmaschine 12a, insbesondere der Grundeinheit 22a, angeordnet ist und zu einem Halten des Verlängerungsstücks oder Adapterstücks 16a vorgesehen ist. Die Befestigungseinheit 84a der Haltevorrichtung 18a umfasst ein als Aufnahmeausnehmung 102a ausgebildetes Befestigungselement, welches an der Grundeinheit 22a angeordnet und/oder einteilig mit der Grundeinheit 22a ausgebildet ist. Vorzugsweise begrenzt die Grundeinheit 22a das als Aufnahmeausnehmung 102a ausgebildete Befestigungselement der Befestigungseinheit 84a der Haltevorrichtung 18a. Die Handgriffeinheit 26a, welche als das Betätigungselement 34a ausgebildet ist, ist entlang der Längsachse 42a der Grundeinheit 22a der Betätigungsvorrichtung 20a zwischen der Befestigungseinheit 84a, insbesondere der Aufnahmeausnehmung 102a der Befestigungseinheit 84a, der Haltevorrichtung 18a und dem Fixierelement 100a angeordnet.

Die Bearbeitungseinheit 50a des Werkzeugaufsatzes 14a umfasst bevorzugt ein beweglich gelagertes Bearbeitungswerkzeug 46a, welches insbesondere ein Messer bzw. eine Schneide umfasst, und ein feststehendes weiteres Bearbeitungswerkzeug 48a, welches insbesondere ein Messer bzw. eine Schneide umfasst. Die Bearbeitungswerkzeuge 46a, 48a können insbesondere jeweils als eine Schneidklinge, wie beispielhaft im vorliegenden Ausführungsbeispiel, insbesondere als eine Scherenklinge, als eine Trimmerklinge, als eine Sägekette, als Sägeschwert oder als ein anderes, einem Fachmann als sinnvoll erscheinendes Bearbeitungswerkzeug ausgebildet sein. Bevorzugt ist das Bearbeitungswerkzeug 46a zu einem Schnitt und/oder zu einem Öffnen über die Antriebskraft relativ zu dem weiteren Bearbeitungswerkzeug 48a bewegbar. Bevorzugt sind/ist das Bearbeitungswerkzeug 46a und/oder das weitere Bearbeitungswerkzeug 48a derart ausgebildet und/oder gelagert, dass das Bearbeitungswerkzeug 46a und das weitere Bearbeitungswerkzeug 48a durch eine in eine Vorwärtsrichtung 104a und/oder in eine Schieberichtung 104a auf das Bearbeitungswerkzeug 46a wirkende Antriebskraft zu einem Schnitt aufeinander bewegt werden und durch eine in eine Rückwärtsrichtung 106a und/oder in eine Zugrichtung 106a auf das Bearbeitungswerkzeug 46a wirkende Antriebskraft zu einem Lösen, insbesondere zumindest in einem Schnittbereich, auseinander bewegt und/oder voneinander getrennt werden. Insbesondere sind die Vorwärtsrichtung 104a und/oder die Schieberichtung 104a und die Rückwärtsrichtung 106a und/oder die Zugrichtung 106a jeweils zumindest im Wesentlichen parallel zur Längsachse 42a der Grundeinheit 22a und/oder zur Verbindungsrichtung 78a ausgerichtet. Vorzugsweise ist die Antriebseinheit 32a dazu vorgesehen, insbesondere in einem mit dem Werkzeugaufsatz 14a verbundenen Zustand der Werkzeugmaschine 12a, das Bearbeitungswerkzeug 46a zu einer Bewegung anzutreiben. Bevorzugt ist die Antriebseinheit 32a dazu vorgesehen, die Bearbeitungseinheit 50a, insbesondere das Bearbeitungswerkzeug 46a, zu einer diskontinuierlichen Bewegung anzutreiben. Es sind auch andere Ausgestaltungen des Werkzeugaufsatzes 14a, insbesondere der Bearbeitungseinheit 50a, denkbar, beispielsweise mit mehr als einem antreibbaren und/oder beweglichen Bearbeitungswerkzeug 46a und/oder mit mehr oder weniger als zwei Bearbeitungswerkzeugen 46a, 48a.

Das Werkzeugmaschinensystem 10a und/oder die Werkzeugmaschine 12a umfassen/umfasst eine Energieversorgungseinheit (in Figuren 1 und 2 nicht gezeigt), die dazu vorgesehen ist, zumindest der Antriebseinheit 32a, insbesondere dem Motor 52a, und/oder der Schalteinheit 30a, insbesondere einer Elektronikeinheit 110a der Schalteinheit 30a, zu einem Betrieb Energie, insbesondere elektrische Energie, bereitzustellen. Die Energieversorgungseinheit ist zu einer netzunabhängigen Energieversorgung zumindest der Antriebseinheit 32a und/oder der Schalteinheit 30a vorgesehen. Die Energieversorgungseinheit ist als ein, insbesondere wechselbarer, Akkumulator ausgebildet. Es sind aber auch andere Ausgestaltungen der Energieversorgungseinheit denkbar, beispielsweise als eine Batterie, als ein Speicherkondensator oder als eine andere, einem Fachmann als sinnvoll erscheinende netzunabhängige Energieversorgungseinheit. Alternativ oder zusätzlich ist vorstellbar, dass die Energieversorgungseinheit als eine netzabhängige Energieversorgungseinheit, insbesondere als ein Netzanschluss, ausgebildet ist. Die Werkzeugmaschine 12a umfasst eine Aufnahmevorrichtung 112a zu einer Aufnahme der Energieversorgungseinheit. Insbesondere ist die Aufnahmevorrichtung 112a dazu vorgesehen, die Energieversorgungseinheit an der Werkzeugmaschine 12a, insbesondere der Grundeinheit 22a, zu befestigen und zumindest die Antriebseinheit 32a und/oder die Schalteinheit 30a elektrisch mit der Energieversorgungseinheit zu verbinden.

Vorzugsweise weist die Werkzeugmaschine 12a, insbesondere die Grundeinheit 22a, entlang der Längsachse 42a der Werkzeugmaschine 12a zwei voneinander abgewandte Endbereiche 114a, 116a auf. Insbesondere ist das erste Verbindungsstück 68a in einem Endbereich 114a der zwei Endbereiche 114a, 116a angeordnet, Vorzugsweise ist die Aufnahmevorrichtung 112a in einem weiteren Endbereich 116a der zwei Endbereiche 114a, 116a angeordnet. Bevorzugt ist die Fixiereinheit 98a entlang der Längsachse 42a der Werkzeugmaschine 12a und/oder der Grundeinheit 22a zwischen der Handgriffeinheit 26a, insbesondere dem Betätigungselement 34a, und der Aufnahmeausnehmung 102a angeordnet. Die weitere Handgriffeinheit 28a ist entlang der Längsachse 42a der Werkzeugmaschine 12a und/oder der Grundeinheit 22a zwischen dem ersten Verbindungsstück 68a und der Befestigungseinheit 84a der Haltevorrichtung 18a angeordnet. Es ist denkbar, dass das erste Verbindungsstück 68a zumindest teilweise die weitere Handgriffeinheit 28a, insbesondere einen Hauptgriffbereich der weiteren Handgriffeinheit 28a, ausgebildet. Die Grundeinheit 22a umfasst einen Aufnahmebereich 118a, welcher als Teil der Aufnahmevorrichtung 112a ausgebildet ist und zumindest teilweise das Gehäuse 24a der Werkzeugmaschine 12a ausbildet. Es ist auch denkbar, dass der Aufnahmebereich 118a die Aufnahmevorrichtung 112a zumindest teilweise begrenzt. Vorzugsweise ist die Fixiereinheit 98a der Haltevorrichtung 18a, insbesondere das Fixierelement 100a, einteilig mit dem Aufnahmebereich 118a ausgebildet und/oder in einem Nahbereich des Aufnahmebereichs 118a angeordnet. Die Grundeinheit 22a, insbesondere eine Gehäuseaußenwand 120a der Grundeinheit 22a, bildet den Aufnahmebereich 118a aus. Insbesondere grenzt die Gehäuseaußenwand 120a an die Aufnahmevorrichtung 112a. Die Grundeinheit 22a, insbesondere die Gehäuseaußenwand 120a der Grundeinheit 22a, deckt die Energieversorgungseinheit über den Aufnahmebereich 118a bzw. die Aufnahmevorrichtung 112 zumindest teilweise ab, insbesondere entlang einer zumindest im Wesentlichen parallel zur Längsachse 42a der Grundeinheit 22a von den Hangriffeinheiten 26a, 28a und/oder dem Werkzeugaufsatz 14a zu der Energieversorgungseinheit ausgerichteten Richtung betrachtet. Die Befestigungseinheit 84a der Haltevorrichtung 18a umfasst die Aufnahmeausnehmung 102a, ein Befestigungselement 122a und einen Fortsatz 124a, welcher über das Befestigungselement 122a der Befestigungseinheit 84a an dem Verlängerungsstück oder Adapterstück 16a angeordnet ist. Das Befestigungselement 122a der Befestigungseinheit 84a umschließt das Verlängerungsstück oder Adapterstück 16a, insbesondere eine Außenwand des Verlängerungsstücks oder Adapterstücks 16a, um eine Längsachse 126a des Verlängerungsstücks oder Adapterstücks 16a zumindest im Wesentlichen vollständig. Es sind auch Ausgestaltungen des Befestigungselements 122a der Befestigungseinheit 84a denkbar, wobei das Befestigungselement 122a das Verlängerungsstück oder Adapterstück 16a, insbesondere die Außenwand des Verlängerungsstücks oder Adapterstücks 16a, um die Längsachse 126a des Verlängerungsstücks oder Adapterstücks 16a lediglich größtenteils umschließt, vorzugsweise zu einer formschlüssigen Befestigung des Befestigungselements 122a und des Fortsatzes 124a an dem Verlängerungsstück oder Adapterstück 16a. Vorzugsweise ist das Verlängerungsstück oder Adapterstück 16a dazu vorgesehen, über die Befestigungseinheit 84a durch eine Bewegung relativ zu der Werkzeugmaschine 12a, entlang einer zumindest im Wesentlichen parallel zur Längsachse 42a der Werkzeugmaschine 12a und/oder der Grundeinheit 22a ausgerichteten Aufnahmerichtung 128a an der Werkzeugmaschine 12a, insbesondere der Grundeinheit 22a, befestigt zu werden, wobei insbesondere der Fortsatz 124a zumindest größtenteils in der Aufnahmeausnehmung 102a aufgenommen wird. Vorzugsweise ist das Verlängerungsstück oder Adapterstück 16a über den Fortsatz 124a und die Aufnahmeausnehmung 102a form- und/oder kraftschlüssig mit der Werkzeugmaschine 12a, insbesondere der Grundeinheit 22a, verbunden. Insbesondere ist die Fixiereinheit 98a dazu vorgesehen, das Verlängerungsstück oder Adapterstück 16a in einem über die Befestigungseinheit 84a der Haltevorrichtung 18a an der Werkzeugmaschine 12a, insbesondere der Grundeinheit 22a, befestigten Zustand des Verlängerungsstücks oder Adapterstücks 16a gegen eine Bewegung um oder gegen die Befestigungseinheit 84a, insbesondere die Aufnahmeausnehmung 102a, an der Werkzeugmaschine 12a, insbesondere der Grundeinheit 22a, zu fixieren und/oder zu halten. Bevorzugt ist die Fixiereinheit 98a, insbesondere das Fixierelement 100a, dazu vorgesehen, das Verlängerungsstück oder Adapterstück 16a gegen zumindest im Wesentlichen senkrecht zur Längsachse 126a des Verlängerungsstücks oder Adapterstücks 16a zumindest im Wesentlichen um die Befestigungseinheit 84a, insbesondere um eine durch das Befestigungselement 122a der Befestigungseinheit 84a der Haltevorrichtung 18a verlaufende und die Längsachse 126a des Verlängerungsstücks oder Adapterstücks 16a und/oder die Längsachse 42a der Grundeinheit 22a schneidende Achse, wirkende Kräfte form- und/oder kraftschlüssig an der Grundeinheit 22a zu halten. Die Fixiereinheit 98a ist von der Befestigungseinheit 84a der Haltevorrichtung 18a aus betrachtet entlang der Längsachse 42a der Werkzeugmaschine 12a hinter der Handgriffeinheit 26a angeordnet. Bevorzugt ist das Fixierelement 100a als ein Formbauteil ausgebildet, welches eine Formschlussaufnahme begrenzt, wobei das Verlängerungsstück oder Adapterstück 16a zu einer Fixierung an der Grundeinheit 22a, insbesondere in einem über die Haltevorrichtung 18a an der Werkzeugmaschine 12a befestigten Zustand des Verlängerungsstücks oder Adapterstücks 16a, zumindest teilweise von dem Fixierelement 100a, insbesondere innerhalb der Formschlussaufnahme, umfasst und/oder aufgenommen ist. Das Fixierelement 100a weist eine Anlegefläche 130a auf, welche die Formschlussaufnahme begrenzt. Insbesondere ist das Verlängerungsstück oder Adapterstück 16a dazu vorgesehen, für die Fixierung an der Werkzeugmaschine 12a über die Fixiereinheit 98a an der Anlegefläche 130a angelegt zu werden. Bevorzugterweise ist die Anlegefläche 130a entlang der Längsachse 126a des Verlängerungsstücks oder Adapterstücks 16a und/oder der Grundeinheit 22a betrachtet korrespondierend zu einer Außenkontur des Verlängerungsstücks oder Adapterstücks 16a ausgebildet.

Die Koppeleinheit 80a der Verbindungsvorrichtung 66a umfasst zumindest ein Koppelelement 87a, 88a, insbesondere genau zwei Koppelelemente 87a, 88a, vorzugsweise ein Koppelelement 87a und ein anderes Koppelelement 88a, und zumindest ein weiteres Koppelelement 89a, 90a, insbesondere genau zwei weitere Koppelelemente 89a, 90a, vorzugsweise ein weiteres Koppelelement 89a und ein anderes weiteres Koppelelement 90a (in Figuren 1 und 2 nicht gezeigt). Insbesondere ist das Koppelelement 87a als Teil des ersten Verbindungsstücks 68a ausgebildet und an der Werkzeugmaschine 12a angeordnet. Insbesondere ist das weitere Koppelelement 89a als Teil des zweiten Verbindungsstücks 72a ausgebildet und an dem Werkzeugaufsatz 14a angeordnet. Insbesondere ist das andere Koppelelement 88a als Teil des weiteren ersten Verbindungsstücks 70a ausgebildet und an dem Verlängerungsstück oder Adapterstück 16a angeordnet. Insbesondere ist das andere weitere Koppelelement 90a als Teil des weiteren zweiten Verbindungsstücks 74a ausgebildet und an dem Verlängerungsstück oder Adapterstück 16a angeordnet. Das Koppelelement 87a ist zumindest größtenteils von einem Grundkörper des ersten Verbindungstücks 68a und/oder von dem Gehäuse 24a der Werkzeugmaschine 12a, welches insbesondere Teil der Grundeinheit 22a ist, umschlossen. Es ist denkbar, dass das Koppelelement 87a in zumindest einem Betriebszustand, insbesondere in einem von dem Werkzeugaufsatz 14a und dem Verlängerungsstück oder Adapterstück 16a getrennten Zustand der Werkzeugmaschine 12a, zumindest teilweise aus einer Öffnung des Grundkörpers des ersten Verbindungstücks 68a und/oder des Gehäuses 24a der Werkzeugmaschine 12a, welches insbesondere Teil der Grundeinheit 22a ist, herausragt. Das Koppelelement 87a ist vorzugsweise dazu vorgesehen, zu einer Übertragung der Antriebskraft an den Werkzeugaufsatz 14a und/oder das Verlängerungsstück oder Adapterstück 16a form- und/oder kraftschlüssig mit dem weiteren Koppelelement 89a und/oder dem anderen weiteren Koppelelement 90a verbunden zu werden. In einem zwischen der Werkzeugmaschine 12a und dem Werkzeugaufsatz 14a angeordneten Zustand des Verlängerungsstücks oder Adapterstücks 16a (siehe Figur 2) ist vorzugsweise das andere weitere Koppelelement 90a dazu vorgesehen, die Antriebskraft auf das andere Koppelelement 88a zu übertragen. Insbesondere sind das andere weitere Koppelelement 90a und das andere Koppelelement 88a einteilig ausgebildet oder zumindest gegenüber einer zumindest im Wesentlichen parallel zur Längsachse 126a des Verlängerungsstücks oder Adapterstücks 16a und/oder zu der Verbindungsrichtung 78a der Verbindungsvorrichtung 66a ausgerichteten Bewegung form-und/oder kraftschlüssig miteinander verbunden. Bevorzugt erstrecken sich das andere weitere Koppelelement 90a und das andere Koppelelement 88a zusammen über eine gesamte Längserstreckung des Verlängerungsstücks oder Adapterstücks 16a. Insbesondere sind das andere weitere Koppelelement 90a und das andere Koppelelement 88a entlang der gesamten Längserstreckung des Verlängerungsstücks oder Adapterstücks 16a zumindest im Wesentlichen vollständig von der Außenwand des Verlängerungsstücks oder Adapterstücks 16a umschlossen. In dem zwischen der Werkzeugmaschine 12a und dem Werkzeugaufsatz 14a angeordneten Zustand des Verlängerungsstücks oder Adapterstücks 16a (siehe Figur 2) ist das andere Koppelelement 88a dazu vorgesehen, die Antriebskraft über eine form- und/oder kraftschlüssige Verbindung mit dem weiteren Koppelelement 89a auf das weitere Koppelelement 89a zu übertragen, insbesondere zu einer angetriebenen Bewegung des Bearbeitungswerkzeugs 46a.

Das Betätigungselement 34a umschließt entlang einer Längserstreckung 138a des Betätigungselements 34a die Grundeinheit 22a um die Längsachse 42a der Grundeinheit 22a zumindest im Wesentlichen vollständig. Insbesondere ist das Betätigungselement 34a als eine Betätigungshülse ausgebildet. Es ist auch denkbar, dass das Betätigungselement 34a die Grundeinheit 22a um die Längsachse 42a der Grundeinheit 22a lediglich größtenteils umschließt, wobei das Betätigungselement 34a beispielsweise zumindest bereichsweise entlang der Längserstreckung 138a des Betätigungselements 34a Ausnehmungen aufweist und/oder entlang der Längserstreckung 138a des Betätigungselements 34a betrachtet eine C-Förmige Grundform aufweist. Der Bewegungspfad 38a der zwei unterschiedlichen Bewegungspfade 38a, 40a des Betätigungselements 34a erstreckt sich vorzugsweise kreisbogenförmig um die Längsachse 42a der Grundeinheit 22a innerhalb einer zumindest im Wesentlichen senkrecht zur Längsachse 42a der Grundeinheit 22a ausgerichteten Ebene. Ein weiterer Bewegungspfad 40a der zwei unterschiedlichen Bewegungspfade 38a, 40a des Betätigungselements 34a folgt einer Linearbewegung und erstreckt sich zumindest im Wesentlichen parallel zur Längsachse 42a der Grundeinheit 22a und zumindest im Wesentlichen senkrecht zu dem Bewegungspfad 38a. Insbesondere grenzen die zwei unterschiedlichen Bewegungspfade 38a, 40a des Betätigungselements 34a jeweils an einem Ende der Bewegungspfade 38a, 40a aneinander an und/oder gehen ineinander über. Bevorzugt ist die Handgriffeinheit 26a, welche als das Betätigungselement 34a der Schalteinheit 30a ausgebildet ist, von der Verbindungsvorrichtung 66a, insbesondere dem ersten Verbindungsstück 68a, aus betrachtet hinter der weiteren Handgriffeinheit 28a der zumindest zwei Handgriffeinheiten 26a, 28a an der Grundeinheit 22a angeordnet. Das Betätigungselement 34a weist die maximale Längserstreckung 138a auf, welche, insbesondere in einem an der Grundeinheit 22a angeordneten Zustand des Betätigungselements 34a, zumindest im Wesentlichen parallel zu der Längsachse 42a der Grundeinheit 22a ausgerichtet ist, wobei die maximale Längserstreckung 138a des Betätigungselements 34a mindestens zweimal, vorzugsweise mindestens drei- bis sechsmal, so groß ist wie eine maximale Quererstreckung 140a des Betätigungselements 34a, welche insbesondere zumindest im Wesentlichen senkrecht zur maximalen Längserstreckung 138a des Betätigungselements 34a ausgerichtet ist. Das Betätigungselement 34a weist in zumindest einer die Längsachse 44a des Betätigungselements 34a umfassenden Schnittebene des Betätigungselements 34a, insbesondere spiegelsymmetrisch zur Längsachse 44a des Betätigungselements 34a, eine zumindest im Wesentlichen hantelförmige Grundform auf. Insbesondere weist das Betätigungselement 34a in zwei entlang der Längserstreckung 138a des Betätigungselements 34a ausgebildeten Endbereichen 142a, 144a des Betätigungselements 34a senkrecht zur Längserstreckung 138a des Betätigungselements 34a eine größere maximale Quererstreckung 140a auf wie in einem zwischen den zwei Endbereichen 142a, 144a angeordneten Zwischenbereich 146a des Betätigungselements 34a. Vorzugsweise bildet das Betätigungselement 34a in dem Zwischenbereich 146a eine Verjüngung aus. Bevorzugt ist eine maximale Erstreckung des Zwischenbereichs 146a entlang der maximalen Längserstreckung 138a des Betätigungselements 34a wesentlich größer, insbesondere mindestens doppelt so groß, vorzugsweise mindestens dreimal so groß und bevorzugt mindestens viermal so groß, wie eine maximale Längserstreckung der einzelnen Endbereiche 142, 144a entlang der maximalen Längserstreckung 138a des Betätigungselements 34a. Bevorzugt weist das Betätigungselement 34a in Übergangsbereichen jeweils zwischen den Endbereichen 142a, 144a und dem Zwischenbereich 146a des Betätigungselements 34a zumindest eine schräg zur Längsachse 44a des Betätigungselements 34a ausgerichtete Außenfläche 148a auf. Insbesondere weist die Außenfläche 148a des Betätigungselements 34a zur Längsachse 44a des Betätigungselements 34a einen Winkel zwischen 10° und 80°, vorzugsweise zwischen 20° und 70° und bevorzugt zwischen 30° und 60°, auf. Es ist denkbar, dass das Betätigungselement 34a Einbuchtungen, insbesondere Fingerrillen, einen rutschhemmenden, insbesondere gummierten, Einsatz, die Oberflächenstrukturierung und/oder eine Oberflächenbeschichtung zur Realisierung einer hohen Griffigkeit des Betätigungselements 34a in dem Zwischenbereich 146a des Betätigungselements 34a, an den Außenflächen 148a und/oder in den Endbereichen 142a, 144a des Betätigungselements 34a aufweist. Vorzugsweise ist der Zwischenbereich 146a des Betätigungselements 34a als der Hauptgriffbereich 92a des Betätigungselements 34a ausgebildet. Alternativ ist denkbar, dass das Betätigungselement 34a, insbesondere in dem Zwischenbereich 146a, in einer senkrecht zur Längsachse 44a des Betätigungselements 34a ausgerichteten Querschnittsebene eine zumindest teilweise eckige Grundform aufweist. Beispielsweise weist das Betätigungselement 34a an einer Oberseite parallel zur Längsachse 44a des Betätigungselements 34a zwei Kanten auf und ist an einer Unterseite rund, insbesondere kreisbogenförmig, ausgebildet. Zusätzlich ist denkbar, dass die weitere Handgriffeinheit 28a zumindest teilweise eine asymmetrische oder eckige Grundform aufweist. Insbesondere weist das Betätigungselement 34a in einem der weiteren Handgriffeinheit 28a zugewandten Endbereich 142a der zwei Endbereiche 142a, 144a des Betätigungselements 34a eine maximale Quererstreckung 140a auf, die zumindest im Wesentlichen einer maximalen Quererstreckung der Grundeinheit 22a in einem entlang der Längsachse 42a der Grundeinheit 22a an den Endbereich 142a angrenzenden Bereich der Grundeinheit 22a entspricht. Insbesondere schließt sich das Betätigungselement 34a in dem der weiteren Handgriffeinheit 28a zugewandten Endbereich 142a des Betätigungselements 34a mit Ausnahme eines Spalts zur Bewegung des Betätigungselements 34a zumindest im Wesentlichen bündig an die Grundeinheit 22a an.

In Figur 2 ist das Werkzeugmaschinensystem 10a in einem über das Verlängerungsstück oder Adapterstück 16a verlängerten Zustand gezeigt. Das Verlängerungsstück oder Adapterstück 16a ist über die Verbindungsvorrichtung 66a zwischen der Werkzeugmaschine 12a und dem Werkzeugaufsatz 14a angeordnet. Insbesondere ist das erste Verbindungsstück 68a, insbesondere in dem verlängerten Zustand des Werkzeugmaschinensystems 10a, mit dem weiteren zweiten Verbindungsstück 74a verbunden, wobei insbesondere das erste Verbindungsstück 68a an dem weiteren zweiten Verbindungsstück 74a befestigt ist und eine Antriebskraft, insbesondere über das Koppelelement 87a und das andere weitere Koppelelement 90a, von der Werkzeugmaschine 12a, insbesondere dem ersten Verbindungsstück 68a, an das Verlängerungsstück oder Adapterstück 16a, insbesondere das weitere zweite Verbindungsstück 74a, übertragbar ist. Insbesondere ist das weitere erste Verbindungsstück 70a, insbesondere in dem verlängerten Zustand des Werkzeugmaschinensystems 10a, mit dem zweiten Verbindungsstück 72a verbunden, wobei insbesondere das weitere erste Verbindungsstück 70a an dem zweiten Verbindungsstück 72a befestigt ist und eine Antriebskraft, insbesondere über das andere Koppelelement 88a und das weitere Koppelelement 89a, von dem Verlängerungsstück oder Adapterstück 16a, insbesondere dem weiteren ersten Verbindungsstück 72a, an den Werkzeugaufsatz 14a, insbesondere das zweite Verbindungsstück 72a bzw. das Bearbeitungswerkzeug 48a, übertragbar ist.

Es sind auch andere Ausgestaltungen der Werkzeugmaschine 12a, insbesondere der Grundeinheit 22a, der Antriebseinheit 32a und/oder der Aufnahmevorrichtung 112a, des Verlängerungsstücks oder Adapterstücks 16a, der Verbindungsvorrichtung 66a und/oder der Haltevorrichtung 18a denkbar. Beispielsweise ist denkbar, dass die Aufnahmevorrichtung 112a zur Aufnahme der Energieversorgungseinheit entlang der Längsachse 42a der Werkzeugmaschine 12a zwischen den zwei Handgriffeinheiten 46a, 48a angeordnet ist und/oder dass die Antriebseinheit 32a entlang der Längsachse 42a der Werkzeugmaschine 12a zwischen dem das erste Verbindungsstück 68a umfassenden Endbereich 114a der Werkzeugmaschine 12a, insbesondere der Grundeinheit 22a, und der weiteren Handgriffeinheit 28a angeordnet ist. Alternativ ist denkbar, dass die Antriebseinheit 32a entlang der Längsachse 42a der Werkzeugmaschine 12a von der weiteren Handgriffeinheit 28a aus hinter der Handgriffeinheit 26a, insbesondere dem Betätigungselement 34a, angeordnet ist, vorzugsweise an der Aufnahmevorrichtung 112a. Es ist denkbar, dass die einzelnen Bauteile der Werkzeugmaschine 12a, insbesondere die Antriebseinheit 32a, die Kraftübertragungsvorrichtung 54a, die Aufnahmevorrichtung 112a usw., von der Grundeinheit 22a abnehmbar und/oder wechselbar ausgebildet sind.

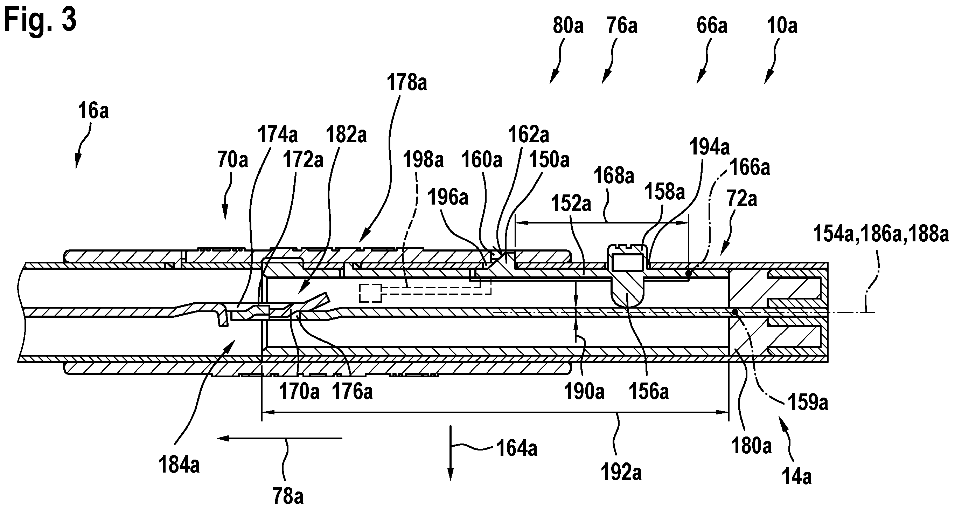

In den Figuren 3 bis 9 ist jeweils eine Verbindungsstelle der Verbindungsvorrichtung 66a gezeigt, wobei jeweils eines der ersten Verbindungsstücke 68a, 70a mit einem der zweiten Verbindungsstücke 72a, 74a verbunden wird. Die gezeigte Verbindungsstelle ist zumindest im Wesentlichen unabhängig von den zu verbindenden Bauteilen der Verbindungsvorrichtung 66a, also beispielsweise einer Verbindung der Werkzeugmaschine 12a mit dem Werkzeugaufsatz 14a oder mit dem Verlängerungsstück oder Adapterstück 16a. In den Figuren 3 bis 9 sind jeweils die im Bereich der gezeigten Verbindungsstelle angeordneten Bauteile beschrieben, welche auf jede Verbindungsstelle der Verbindungsvorrichtung 66a des Werkzeugmaschinensystems 10a übertragen werden können. Bevorzugterweise wird in den Figuren 3 bis 9 die Verbindungsstelle zwischen dem Verlängerungsstück oder Adapterstück 16a und dem Werkzeugaufsatz 14a gezeigt (vgl. Figur 2). Die Verbindungsstellen zwischen der Werkzeugmaschine 12a und dem Verlängerungsstück oder Adapterstück 16a oder der Werkzeugmaschine 12a und dem Werkzeugaufsatz 14a sind jedoch jeweils zumindest im Wesentlichen analog dazu ausgebildet.

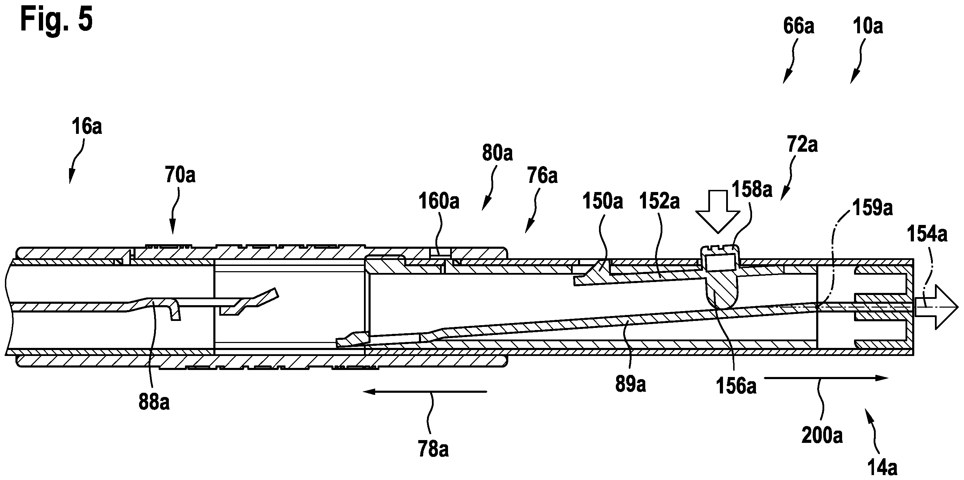

In den Figuren 3 bis 5 ist eine geschnittene Seitenansicht der Verbindungsvorrichtung 66a, insbesondere in einem Bereich der Verbindungsstelle, gezeigt. Figur 3 zeigt die Verbindungsvorrichtung 66a in einem befestigten Zustand der Befestigungseinheit 76a und dem gekoppelten Zustand der Koppeleinheit 80a, wobei insbesondere das weitere erste Verbindungsstück 70a, im Folgenden erstes Verbindungsstück, mit dem zweiten Verbindungsstück 72a verbunden ist. Die Befestigungseinheit 76a der Verbindungsvorrichtung 66a umfasst ein als Rastelement 150a ausgebildetes Befestigungselement, welches zu einer zumindest im Wesentlichen selbstständigen Befestigung des ersten Verbindungsstücks 70a und des zweiten Verbindungsstücks 72a bei einem Ineinanderschieben des ersten Verbindungsstücks 70a und des zweiten Verbindungsstücks 72a vorgesehen ist. Die Befestigungseinheit 76a umfasst das Rastelement 150a zu einer formschlüssigen Befestigung des zweiten Verbindungsstücks 72a an dem ersten Verbindungsstück 70a, wobei das Rastelement 150a dazu vorgesehen ist, bei einer Bewegung des Rastelements 150a zu einem Lösen der Befestigungseinheit 76a zumindest ein Koppelelement 87a, 88a der Koppeleinheit 80a, insbesondere zumindest im Wesentlichen direkt, zu betätigen, wobei die Koppeleinheit 80a von dem gekoppelten Zustand in den entkoppelten Zustand übergeht (vgl. Figur 5). Das Rastelement 150a ist insbesondere in einem Bereich des weiteren Koppelelements 89a an dem zweiten Verbindungsstück 72a angeordnet und dazu vorgesehen, bei einer Bewegung des Rastelements 150a zum Lösen der Befestigungseinheit 76a das weitere Koppelelement 89a der Koppeleinheit 80a, insbesondere zumindest im Wesentlichen direkt, zu betätigen. Das Rastelement 150a ist über einen Schwenkarm 152a mit einem Grundkörper des zweiten Verbindungsstücks 72a verbunden und an dem Grundkörper des zweiten Verbindungsstücks 72a befestigt. Insbesondere ist das Rastelement 150a über den Schwenkarm 152a quer zur Verbindungsrichtung 78a elastisch bewegbar, vorzugsweise in eine von einer Innenseite des Grundkörpers des zweiten Verbindungsstücks 72a zu einer Längsachse 154a des zweiten Verbindungsstücks 72a hin ausgerichteten Richtung 164a. Das Rastelement 150a ist über den Schwenkarm 152a an einer Stelle, insbesondere stoffschlüssig oder zumindest kraft-und/oder formschlüssig, mit dem Grundkörper des zweiten Verbindungsstücks 72a verbunden. Insbesondere ist der Schwenkarm 152a biegeelastisch ausgebildet und stoffschlüssig mit dem Grundkörper des zweiten Verbindungsstücks 72a und mit dem Rastelement 150a verbunden. Es sind aber auch andere Ausgestaltungen des Schwenkarms 152a denkbar, beispielsweise mit einer Lagerung am Grundkörper des zweiten Verbindungsstücks 72a o. dgl.

Die Befestigungseinheit 76a umfasst einen Betätigungsfortsatz 156a zu einem Betätigen des weiteren Koppelelements 89a, welcher an dem Rastelement 150a und dem Schwenkarm 152a fixiert ist. Bevorzugt ist der Betätigungsfortsatz 156a einteilig mit dem Rastelement 150a und dem Schwenkarm 152a ausgebildet. Das Rastelement 150a ist dazu vorgesehen, eine auf das Rastelement 150a, beispielsweise über ein Betätigungselement 158a der Befestigungseinheit 76a, einwirkende Kraft, beispielsweise eines Benutzers, zum Lösen der Befestigungseinheit 76a über einen Formschluss zwischen dem Rastelement 150a oder zwischen einem formschlüssig an dem Rastelement 150a angeordneten Bauteil, insbesondere dem Betätigungsfortsatz 156a, und dem zu betätigenden weiteren Koppelelement 89a der Koppeleinheit 80a auf das weitere Koppelelement 89a zu übertragen. Vorzugsweise ist das Rastelement 150a dazu vorgesehen, beim Ineinanderschieben des ersten Verbindungsstücks 70a und des zweiten Verbindungsstücks 72a über ein Zusammenwirken mit dem ersten Verbindungsstück 70a, insbesondere einem Grundkörper des ersten Verbindungsstücks 70a, in eine quer zur Verbindungsrichtung 78a ausgerichtete Richtung 164a, insbesondere hin zur Längsachse 154a des zweiten Verbindungsstücks 72a, bewegt zu werden, wobei vorzugsweise das weitere Koppelelement 89a betätigt und um eine Verschwenkachse 159a des weiteren Koppelelements 89a in die quer zur Verbindungsrichtung 78a ausgerichtete Richtung 164a bewegt wird. Vorzugsweise ist das weitere Koppelelement 89a dazu vorgesehen, bei einer Bewegung in die quer zur Verbindungsrichtung 78a ausgerichtete Richtung 164a von dem anderen Koppelelement 88a getrennt zu werden, wobei insbesondere die Koppeleinheit 80a von dem gekoppelten Zustand in den entkoppelten Zustand übergeht. Die Koppeleinheit 80a umfasst die zwei Koppelelemente 87a, 88a und die zwei weiteren Koppelelemente 89a, 90a, die im gekoppelten Zustand der Koppeleinheit 80a jeweils ineinander eingreifen, wobei das Rastelement 150a dazu vorgesehen ist, beim Ineinanderschieben des ersten Verbindungsstücks 70a und des zweiten Verbindungsstücks 72a das weitere Koppelelement 89a bzw. das andere weitere Koppelelement 90a, insbesondere zumindest schräg zur Verbindungsrichtung 78a, zu betätigen. Es sind auch andere Ausgestaltungen des Befestigungselements der Befestigungseinheit 76a der Verbindungsvorrichtung 66a denkbar, insbesondere von einem Rastelement 150a verschiedene Ausgestaltungen.

Bevorzugt ist das Rastelement 150a derart ausgebildet und/oder angeordnet, dass das Rastelement 150a beim Ineinanderschieben des ersten Verbindungsstücks 70a und des zweiten Verbindungsstücks 72a zumindest im Wesentlichen selbstständig an einem als Gegenrastelement bzw. als eine eine Ausnehmung begrenzende Innenwand ausgebildeten Gegenbefestigungselement 160a der Befestigungseinheit 76a eingreift und/oder angeordnet wird. Insbesondere weist das Rastelement 150a zumindest eine Leitfläche 162a auf, welche, insbesondere in einem Grundzustand des Rastelements 150a, schräg zur Verbindungsrichtung 78a und schräg zu einer senkrecht zur Verbindungsrichtung 78a ausgerichteten Ebene ausgerichtet ist. Bevorzugt ist das Gegenbefestigungselement 160a als Teil des Grundkörpers des ersten Verbindungsstücks 70a ausgebildet und begrenzt zumindest eine Ausnehmung, die zu einer Aufnahme des Rastelements 150a vorgesehen ist. Die durch das Gegenbefestigungselement 160a begrenzte Ausnehmung ist von dem ersten Verbindungsstück 70a, insbesondere dem Grundkörper des ersten Verbindungsstücks 70a, begrenzt. Vorzugsweise ist das Rastelement 150a dazu vorgesehen, beim Ineinanderschieben des ersten Verbindungsstücks 70a und des zweiten Verbindungsstücks 72a, insbesondere über die Leitfläche 162a, mit dem ersten Verbindungsstück 70a, insbesondere dem Grundkörper des ersten Verbindungsstücks 70a, zusammenzuwirken, wobei insbesondere das Rastelement 150a zumindest teilweise, vorzugsweise über den Schwenkarm 152a, in eine quer zur Verbindungsrichtung 78a ausgerichtete Richtung 164a elastisch bewegt wird. Vorzugsweise ist das Rastelement 150a dazu vorgesehen, während dem Ineinanderschieben des ersten Verbindungsstücks 70a und des zweiten Verbindungsstücks 72a über die Leitfläche 162a entlang des ersten Verbindungsstücks 70a, insbesondere des Grundkörpers des ersten Verbindungsstücks 70a, zu gleiten, vorzugsweise bis das Rastelement 150a in Verbindungsrichtung 78a das Gegenbefestigungselement 160a erreicht. Vorzugsweise ist das Rastelement 150a dazu vorgesehen, insbesondere nach oder bei einem vollständigen Ineinanderschieben des ersten Verbindungsstücks 70a und des zweiten Verbindungsstücks 72a, zur Befestigung des ersten Verbindungsstücks 70a und des zweiten Verbindungsstücks 72a aneinander über eine, insbesondere über den Schwenkarm 152a bewirkte, Rückstellkraft zumindest im Wesentlichen selbstständig in das Gegenbefestigungselement 160a einzugreifen. Bevorzugt ist das Rastelement 150a dazu vorgesehen, beim Ineinanderschieben des ersten Verbindungsstücks 70a und des zweiten Verbindungsstücks 72a durch eine Bewegung in die quer zur Verbindungsrichtung 78a ausgerichtete Richtung 164a das weitere Koppelelement 89a mit einer schräg zur Verbindungsrichtung 78a ausgerichteten Kraft zu beaufschlagen, wobei insbesondere das weitere Koppelelement 89a betätigt wird. Bevorzugt sind/ist das Rastelement 150a und/oder der Schwenkarm 152a derart ausgebildet und/oder angeordnet, dass das Rastelement 150a beim Ineinanderschieben des ersten Verbindungsstücks 70a und des zweiten Verbindungsstücks 72a um mindestens 5°, vorzugsweise um mindestens 10°, und bevorzugt um mindestens 15°, und/oder höchstens um 45°, vorzugsweise um höchstens 30° und bevorzugt höchstens um 20°, um eine Schwenkachse 166a des Rastelements 150a bewegt wird, welche insbesondere senkrecht zur Verbindungsrichtung 78a ausgerichtet ist. Bevorzugt weist die Schwenkachse 166a des Rastelements 150a zu dem Rastelement 150a, insbesondere entlang des Schwenkarms 152a, einen minimalen Abstand 168a von mindestens 3 cm, vorzugsweise mindestens 4 cm und bevorzugt mindestens 5,5 cm, auf.

Die Koppelelemente 87a, 88a, 89a, 90a der Koppeleinheit 80a, insbesondere das Koppelelement 87a, das andere Koppelelement 88a, das weitere Koppelelement 89a und/oder das andere weitere Koppelelement 90a, sind jeweils einzeln als ein Blechteil ausgebildet und dazu vorgesehen, in dem gekoppelten Zustand der Koppeleinheit 80a zur Übertragung der Antriebskraft zumindest formschlüssig ineinanderzugreifen, insbesondere in ein jeweils anderes Koppelelement 87a, 88a, 89a, 90a der Koppeleinheit 80a einzugreifen. In der Figur 3 ist die Verbindungsstelle der Verbindungsvorrichtung 66a in dem gekoppelten Zustand der Koppeleinheit 80a gezeigt, wobei das andere Koppelelement 88a und das weitere Koppelelement 89a zu einer Verbindung des weiteren ersten Verbindungsstücks 70a und des zweiten Verbindungsstücks 72a zumindest formschlüssig ineinandergreifen. Die Koppelelemente 87a, 88a, 89a, 90a der Koppeleinheit 80a, insbesondere das Koppelelement 87a, das andere Koppelelement 88a, das weitere Koppelelement 89a und/oder das andere weitere Koppelelement 90a, weisen jeweils zumindest einen Formschlussfortsatz 170a, 172a und jeweils zumindest eine Formschlussausnehmung 174a, 176a auf. Bevorzugt sind die Koppelelemente 87a, 88a, 89a, 90a dazu vorgesehen, in dem gekoppelten Zustand jeweils über den Formschlussfortsatz 170a, 172a des jeweiligen Koppelelements 87a, 88a, 89a, 90a in die Formschlussausnehmung 174a, 176a eines anderen Koppelelements 87a, 88a, 89a, 90a einzugreifen. In Figur 3 ist der gekoppelte Zustand der Koppeleinheit 80a gezeigt, wobei das andere Koppelelement 88a über einen Formschlussfortsatz 170a des anderen Koppelelements 88a in eine Formschlussausnehmung 176a des weiteren Koppelelements 89a eingreift und wobei das weitere Koppelelement 89a über einen Formschlussfortsatz 172a des weiteren Koppelelements 89a in eine Formschlussausnehmung 174a des anderen Koppelelements 88a eingreift.

Die Koppelelemente 87a, 88a, 89a, 90a der Koppeleinheit 80a, insbesondere das Koppelelement 87a, das andere Koppelelement 88a, das weitere Koppelelement 89a und das andere weitere Koppelelement 90a, sind jeweils zumindest in einem Koppelbereich 178a der Koppeleinheit 80a gegen zumindest eine Bewegung quer zur Verbindungsrichtung 78a federelastisch ausgebildet, wobei ein unbelasteter Zustand der Koppelelemente 87a, 88a, 89a, 90a jeweils einer Grundposition des jeweiligen Koppelelements 87a, 88a, 89a, 90a in dem gekoppelten Zustand entspricht. Die Koppelelemente 87a, 88a, 89a, 90a sind, insbesondere zu einem Übergang in den gekoppelten Zustand oder in einen entkoppelten Zustand, jeweils in dem Koppelbereich 178a der Koppeleinheit 80a um eine zumindest im Wesentlichen senkrecht zur Verbindungsrichtung ausgerichtete Verschwenkachse 159a, die insbesondere in einem Nahbereich des das jeweilige Koppelelement 87a, 88a, 89a, 90a umfassenden Verbindungsstücks 78a, 70a, 72a, 74a angeordnet ist, elastisch verschwenkbar. Bevorzugt umfassen die Verbindungsstücke 78a, 70a, 72a, 74a der Verbindungsvorrichtung 66a, insbesondere das in den Figuren 3 bis 5 gezeigte weitere erste Verbindungsstück 70a und das zweite Verbindungstück 72a, jeweils ein Lagerelement 180a, welches zu einem Halten eines Koppelelements 87a, 88a, 89a, 90a gegen eine Bewegung quer zur Verbindungsrichtung 78a vorgesehen ist. Die Lagerelemente 180a sind jeweils innerhalb des Grundkörpers der Verbindungsstücke 78a, 70a, 72a, 74a angeordnet. Die Lagerelemente 180a sind als eine Verjüngung der Grundkörper der Verbindungsstücke 78a, 70a, 72a, 74a ausgebildet, wobei sich das jeweils an dem Verbindungsstück 78a, 70a, 72a, 74a angeordnete Koppelelement 87a, 88a, 89a, 90a durch die Verjüngung erstreckt. Die Grundkörper der Verbindungsstücke 78a, 70a, 72a, 74a sind jeweils zumindest im Wesentlichen hülsenartig ausgebildet und/oder weisen jeweils eine zumindest im Wesentlichen hohlzylindrische Grundform auf. Das weitere erste Verbindungsstück 70a ist vorzugsweise form- und/oder kraftschlüssig an einem Grundkörper des Verlängerungsstücks oder Adapterstücks 16a befestigt. Es ist auch denkbar, dass ein erstes Verbindungsstück 68a, 70a einteilig mit dem Verlängerungsstück oder Adapterstück 16a oder mit der Werkzeugmaschine 12a ausgebildet ist. Bevorzugt sind die Koppelelemente 87a, 88a, 89a, 90a jeweils in eine parallel zur Verbindungsrichtung 78a ausgerichtete Richtung, insbesondere zumindest im Wesentlichen widerstandsfrei, relativ zu den Lagerelementen 180a bewegbar. Bevorzugterweise sind die Koppelelemente 87a, 88a, 89a, 90a, insbesondere das andere Koppelelement 88a und das weitere Koppelelement 89a, über die Lagerelemente 180a, insbesondere das Lagerelement 180a des weiteren ersten Verbindungsstücks 70a bzw. das Lagerelement 180a des zweiten Verbindungsstücks 72a, derart gehalten, dass jeweils ein, insbesondere dem Koppelbereich 178a zugewandter, Endbereich 182a, 184a der Koppelelemente 87a, 88a, 89a, 90a quer zur Verbindungsrichtung 78a elastisch verschwenkbar ist. Insbesondere weisen die Koppelelemente 87a, 88a, 89a, 90a jeweils eine Verschwenkachse 159a auf, welche entlang der Verbindungsrichtung 78a jeweils im Bereich eines der Lagerelemente 180a angeordnet sind. Die Verschwenkachsen 159a der Koppelelemente 87a, 88a, 89a, 90a sind jeweils zumindest im Wesentlichen parallel zu einer Haupterstreckungsebene 186a der einzelnen Koppelelemente 87a, 88a, 89a, 90a und bevorzugt zumindest im Wesentlichen senkrecht zu einer Haupterstreckungsachse 188a der einzelnen Koppelelemente 87a, 88a, 89a, 90a ausgerichtet. Bevorzugt verlaufen die Verschwenkachsen 159a der Koppelelemente 87a, 88a, 89a, 90a jeweils zumindest im Wesentlichen senkrecht zur Verbindungsrichtung 78a und zu einer Dicke 190a der einzelnen Koppelelemente 87a, 88a, 89a, 90a, welche insbesondere zumindest im Wesentlichen senkrecht zur Verbindungsrichtung 78a verläuft. Bevorzugt weisen die Verschwenkachsen 159a der Koppelelemente 87a, 88a, 89a, 90a und/oder die Lagerelemente 180a der Verbindungsstücke 68a, 70a, 72a, 74a jeweils entlang einer Längsachse 154a des jeweiligen Verbindungsstücks 68a, 70a, 72a, 74a zu einem entlang der Längsachse 154a ausgebildeten Ende des jeweiligen Verbindungsstücks 68a, 70a, 72a, 74a einen minimalen Abstand 192a von mindestens 8 cm, vorzugsweise mindestens 10 cm und bevorzugt mindestens 15 cm, auf. Bevorzugt ist die Verschwenkachse 159a des weiteren Koppelelements 89a und/oder das Lagerelement 180a des zweiten Verbindungsstücks 72a von einem Ende des zweiten Verbindungsstücks 72a und/oder dem Koppelbereich 178a aus entlang der Längsachse 154a des zweiten Verbindungsstücks 72a hinter dem Rastelement 150a und/oder hinter dem Betätigungselement 158a der Befestigungseinheit 76a angeordnet.

Die Befestigungseinheit 76a umfasst das Betätigungselement 158a, welches zu einem Lösen der Befestigungseinheit 76a vorgesehen ist. Das Betätigungselement 158a der Befestigungseinheit 76a ist einteilig mit dem Rastelement 150a und mit dem Schwenkarm 152a ausgebildet. Vorzugsweise ist das Betätigungselement 158a der Befestigungseinheit 76a dazu vorgesehen, bei einem Betätigen das Rastelement 150a und den Schwenkarm 152a quer zur Verbindungsrichtung 78a zu bewegen, insbesondere hin zur Längsachse 154a des zweiten Verbindungsstücks 72a. Der Grundkörper des zweiten Verbindungsstücks 72a begrenzt eine Ausnehmung 194a, wobei das Betätigungselement 158a der Befestigungseinheit 76a zu einem Betätigen innerhalb der Ausnehmung 194a geführt ist. Vorzugsweise begrenzt der Grundkörper des zweiten Verbindungsstücks 72a zumindest eine weitere Ausnehmung 196a, wobei das Rastelement 150a bei einer Bewegung quer zur Verbindungsrichtung 78a, insbesondere über den Schwenkarm 152a, innerhalb der weiteren Ausnehmung 196a geführt ist. Besonders bevorzugt ist die weitere Ausnehmung 196a in einem vollständig ineinandergeschobenen Zustand des ersten Verbindungsstücks 70a und des zweiten Verbindungsstücks 72a entlang der Längsachsen 154a der Verbindungsstücke 70a, 72a zumindest im Wesentlichen auf einer Höhe mit dem Gegenbefestigungselement 160a angeordnet. Bevorzugt greift das Rastelement 150a in dem befestigten Zustand der Befestigungseinheit 76a durch die von dem Grundkörper des zweiten Verbindungsstücks 72a begrenzte weitere Ausnehmung 196a an dem Gegenbefestigungselement 160a an/ein. Bevorzugt ist das Betätigungselement 158a der Befestigungseinheit 76a dazu vorgesehen, über eine in eine radial zur Längsachse 154a des zweiten Verbindungsstücks 72a ausgerichtete Richtung wirkende Kraft, welche insbesondere zumindest im Wesentlichen senkrecht zur Verbindungsrichtung 78a verläuft, betätigt zu werden.

Das erste Verbindungsstück 68a bildet zumindest teilweise die weitere Handgriffeinheit 28a der Betätigungsvorrichtung 20a der Werkzeugmaschine 12a aus (vgl. Figuren 1 und 2). Das/ein Betätigungselement 160a ist bevorzugt als Teil des zweiten Verbindungsstücks 72a und/oder des weiteren zweiten Verbindungsstücks 74a ausgebildet. Vorzugsweise sind/ist die/das Betätigungselement(e) 158a, insbesondere zumindest im Wesentlichen unabhängig von einem Zustand der Befestigungseinheit 76a, entlang einer Längsachse 154a des zweiten Verbindungsstücks 72a und/oder des weiteren zweiten Verbindungsstücks 74a in einem an dem ersten Verbindungsstück 68a angeordneten Zustand des zweiten Verbindungsstücks 72a und/oder des weiteren zweiten Verbindungsstücks 74a beabstandet von dem ersten Verbindungsstück 68a angeordnet.

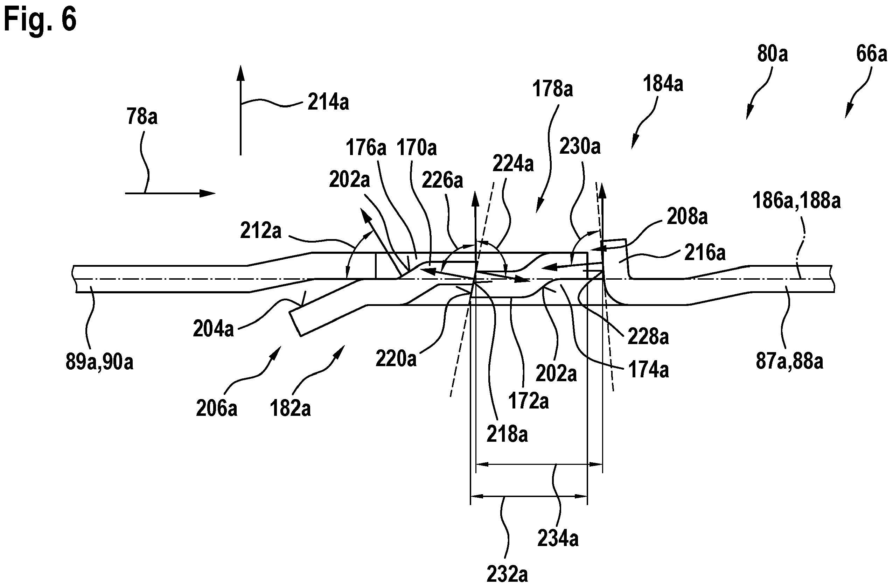

Vorzugsweise sind die Verbindungsstücke 68a, 70a, 72a, 74a unabhängig von einer Position des Bearbeitungswerkzeugs 46a, des Motors 52a und/oder der Kraftübertragungsvorrichtung 54a und damit der Koppelelemente 87a, 88a, 89a, 90a entlang der Verbindungsrichtung 78a miteinander verbindbar, insbesondere über die Befestigungseinheit 72a aneinander befestigbar. Beispielsweise ist denkbar, dass die Verbindungsstücke 68a, 70a, 72a, 74a miteinander verbunden werden, wobei insbesondere über die Befestigungseinheit 72a aneinander befestigt werden, ohne das die Koppeleinheit 80a zeitgleich in den gekoppelten Zustand übergeht, beispielsweise durch eine voneinander beabstandete Anordnung der zwei Koppelelemente 87a, 88a, 89a, 90a entlang einer parallel zur Verbindungsrichtung 78a ausgerichteten Achse. Vorzugsweise werden die Koppelelemente 87a, 88a, 89a, 90a nach einer Befestigung der Verbindungsstücke 68a, 70a, 72a, 74a über die Befestigungseinheit 72a über eine Bewegung des Koppelelements 87a, 88a durch die Antriebseinheit 32a und/oder über eine Bewegung des weiteren Koppelelements 89a, 90a durch eine Bewegung des Bearbeitungswerkzeugs 46a entlang der parallel zur Verbindungsrichtung 78a ausgerichteten Achse aufeinander bewegt. Bevorzugt sind die Koppelelemente 87a, 88a, 89a, 90a dazu vorgesehen, bei dem Aufeinanderbewegen entlang parallel zur Verbindungsrichtung 78a ausgerichteten Achse über Führungsflächen 202a, 204a (siehe Figur 6) zumindest im Wesentlichen selbstständig in den gekoppelten Zustand überzugehen, insbesondere ineinander einzugreifen.

Es ist denkbar, dass die Koppeleinheit 80a und/oder die Befestigungseinheit 76a zumindest ein Sicherungselement 198a umfassen/umfasst, das dazu vorgesehen ist, in Abhängigkeit von einer Position eines Koppelelements 87a, 88a, 89a, 90a der Koppeleinheit 80a relativ zu dem Sicherungselement 198a ein Lösen der Befestigungseinheit 76a und/oder einen Übergang der Koppeleinheit 80a in den entkoppelten Zustand zumindest im Wesentlichen zu verhindern. Das Sicherungselement ist in Figur 3 beispielhaft als ein Formschlusselement gezeigt, welches eine Beweglichkeit des Rastelements 150a über den Schwenkarm 152a an eine Position der Koppelelemente 88a, 89a entlang einer parallel zur Verbindungsrichtung 78a ausgerichteten Achse koppelt. Es sind aber auch andere Ausgestaltungen des Sicherungselements 198a denkbar, beispielsweise als ein reines Kraftschlusselement o. dgl.

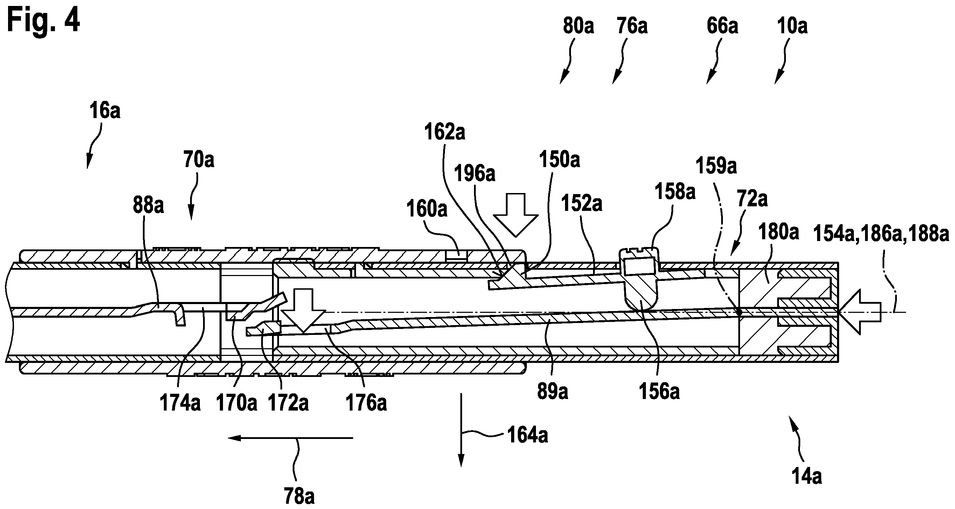

In Figur 4 ist die Verbindungsvorrichtung 66a, insbesondere die Verbindungsstelle, bei einem Ineinanderschieben der Verbindungsstücke 70a, 72a, insbesondere des weiteren ersten Verbindungsstücks 70a, im Folgenden erstes Verbindungsstück, und des zweiten Verbindungsstücks 72a, gezeigt. Das zweite Verbindungsstück 72a ist dazu vorgesehen, über eine Bewegung in Verbindungsrichtung 78a zumindest teilweise in das erste Verbindungsstück 70a, insbesondere den Grundkörper des ersten Verbindungsstücks 70a, eingeschoben zu werden. Insbesondere ist das Rastelement 150a dazu vorgesehen, beim Ineinanderschieben über ein Zusammenwirken mit dem Grundkörper des ersten Verbindungsstücks 70a quer zur Verbindungsrichtung 78a zur Längsachse 154a des zweiten Verbindungsstücks 72a hin bewegt zu werden. Vorzugsweise muss das Betätigungselement 158a der Befestigungseinheit 76a beim Ineinanderschieben der Verbindungsstücke 70a, 72a zu einem Übergang in den befestigten Zustand der Befestigungseinheit 76a nicht durch einen Benutzer betätigt werden. Durch die Bewegung des Rastelements 150a wird das weitere Koppelelement 89a über den Betätigungsfortsatz 156a betätigt und quer zur Verbindungsrichtung 78a bewegt, insbesondere um die Verschwenkachse 159a des weiteren Koppelelements 89a elastisch verformt/bewegt. Nach einem vollständigen Einschieben des zweiten Verbindungsstücks 72a, vorzugsweise bis zu einem Zusammenwirken mit einem durch das erste Verbindungsstück 70a ausgebildeten Anschlag, liegen die weitere Ausnehmung 196a des zweiten Verbindungsstücks 72a und das Gegenbefestigungselement 160a senkrecht zur Verbindungsrichtung 78a betrachtet übereinander, wobei das Rastelement 150a durch die weitere Ausnehmung 196a an dem Gegenbefestigungselement 160a angreift. Insbesondere ist das Rastelement 150a dazu vorgesehen, in dem befestigten Zustand der Befestigungseinheit 76a zumindest teilweise in eine durch das Gegenbefestigungselement 160a begrenzte Ausnehmung hinein bewegt zu werden. Insbesondere ist das Rastelement 150a dazu vorgesehen, in dem befestigten Zustand der Befestigungseinheit 76a formschlüssig mit zumindest einer die Ausnehmung begrenzenden Innenfläche des Gegenbefestigungselements 160a zusammenzuwirken. Das weitere Koppelelement 89a ist dazu vorgesehen, sich bei einer Bewegung des Rastelements 150a quer zur Verbindungsrichtung 78a an das Gegenbefestigungselement 160a, elastisch in eine Grundposition zurückzubewegen, in der das weitere Koppelelement 89a parallel zur Längsachse 154a des zweiten Verbindungsstücks 72a ausgerichtet ist, wobei vorzugsweise der Betätigungsfortsatz 156a ebenfalls quer zur Verbindungsrichtung 78a von dem weiteren Koppelelement 89a und/oder aus einer Mitte des Grundkörpers des zweiten Verbindungsstücks 72a wegbewegt wird. Vorzugsweise ist das weitere Koppelelement 89a dazu vorgesehen, bei einer Bewegung in die Grundposition, insbesondere über den Formschlussfortsatz 172a des weiteren Koppelelements 89a, in ein anderes Koppelelement 87a, 88a, insbesondere das Koppelelement 87a oder, wie in Figur 4 gezeigt, das andere Koppelelement 88a, einzugreifen, wobei insbesondere der Formschlussfortsatz 172a des weiteren Koppelelements 89a zumindest teilweise in die Formschlussausnehmung 174a des anderen Koppelelements 88a hinein bewegt wird.

In Figur 5 ist die Verbindungsvorrichtung 66a, insbesondere die Verbindungsstelle, bei einem Trennen der Verbindungsstücke 70a, 72a, insbesondere des weiteren ersten Verbindungsstücks 70a, im Folgenden erstes Verbindungsstück, und des zweiten Verbindungsstücks 72a, gezeigt. Das Betätigungselement 158a der Befestigungseinheit 76a ist dazu vorgesehen, zu einem Lösen der Befestigungseinheit 76a und zu einem Übergang der Koppeleinheit 80a von dem gekoppelten Zustand in den entkoppelten Zustand betätigt zu werden, wobei das Rastelement 150a über den Schwenkarm 152a quer zur Verbindungsrichtung 78a zu Längsachse 154a des zweiten Verbindungsstücks 72a hin von dem Gegenbefestigungselement 160a getrennt wird. Vorzugsweise ist das zweite Verbindungsstück 72a in einem betätigten Zustand des Betätigungselements 158a, wobei insbesondere das Rastelement 150a vollständig aus der durch das Gegenbefestigungselement 160a begrenzten Ausnehmung heraus bewegt ist, von dem ersten Verbindungsstück 70a trennbar, vorzugsweise in eine zumindest im Wesentlichen parallel zur Verbindungsrichtung 78a ausgerichtete und der Verbindungsrichtung 78a entgegengerichtete Richtung 200a. Bevorzugt ist das Betätigungselement 158a der Befestigungseinheit 76a dazu vorgesehen, beim Betätigen und/oder bei der Bewegung des Rastelements 150a und/oder des Schwenkarms 152a, vorzugsweise über den Betätigungsfortsatz 156a, das weitere Koppelelement 89a zu betätigten, wobei das weitere Koppelelement 89a quer zur Verbindungsrichtung 78a um die Verschwenkachse 159a bewegt wird. Das weitere Koppelelement 89a ist dazu vorgesehen, beim Betätigen durch das Betätigungselement 158a der Befestigungseinheit 76a, insbesondere über den Betätigungsfortsatz 156a, über eine Bewegung quer zur Verbindungsrichtung 78a um die Verschwenkachse 159a von dem anderen Koppelelement 88a, getrennt zu werden, wobei die Koppeleinheit 80a in den entkoppelten Zustand übergeht und/oder das weitere Koppelelement 89a in die zumindest im Wesentlichen parallel zur Verbindungsrichtung 78a ausgerichtete und der Verbindungsrichtung 78a entgegengerichtete Richtung 200a, insbesondere aus dem ersten Verbindungsstück 70a heraus, bewegt zu werden. Wird das Betätigungselement 158a der Befestigungseinheit 76a nicht mehr betätigt, bewegen sich das Rastelement 150a über den Schwenkarm 152a und das weitere Koppelelement 89a jeweils zumindest im Wesentlichen selbstständig elastisch zurück in eine Grundposition. Vorzugsweise ist ein Übergang von einem entkoppelten Zustand in einen gekoppelten Zustand und ein Übergang von dem gekoppelten Zustand in den entkoppelten Zustand der Koppeleinheit 80a für eine andere Verbindungsstelle, bevorzugt für eine Verbindung zwischen dem Koppelelement 87a und dem weiteren Koppelelement 89a oder dem anderen weiteren Koppelelement 90a, analog zu dem oben beschriebenen Verbinden des anderen Koppelelements 88a und des weiteren Koppelelements 89a ausgebildet.

In den Figuren 3 bis 5 sind die zwei Verbindungsstücke 70a, 72a jeweils in einem an dem Verlängerungsstück oder Adapterstück 16a bzw. an dem Werkzeugaufsatz 14a angeordneten Zustand gezeigt. Das weitere erste Verbindungsstück 70a weist insbesondere einen als Aufnahmehülse ausgebildeten Grundkörper auf, welche an dem Grundkörper des Verlängerungsstücks oder Adapterstücks 16a befestigt ist. Das zweite Verbindungsstück 16a weißt einen als Einschub ausgebildeten Grundkörper auf, welche insbesondere in oder an einem rohrartigen Endstück des Werkzeugaufsatzes 14a befestigt ist. Bevorzugt ist das zweite Verbindungsstück 72a dazu vorgesehen, zu einer Befestigung an dem weiteren ersten Verbindungsstück 70a und zu einem Übergang in den gekoppelten Zustand der Koppelelemente 88a, 89a zusammen mit dem rohrartigen Endstück des Werkzeugaufsatzes 14a in das weitere erste Verbindungsstück 70a eingeschoben zu werden. Alternativ sind auch andere Ausgestaltungen der Verbindungsstücke 68a, 70a, 72a, 74a denkbar, beispielsweise einteilige Ausgestaltung der einzelnen Verbindungsstücke 68a, 70a, 72a, 74a mit der Grundeinheit 22a der Werkzeugmaschine 12a, mit dem Grundkörper des Verlängerungsstücks oder Adapterstücks 16a und/oder mit dem Endstück des Werkzeugaufsatz 14a.

In Figur 6 ist eine schematische Seitenansicht zweier miteinander gekoppelter Koppelelemente 87a, 88a, 89a, 90a, insbesondere des Koppelelements 87a und des weiteren Koppelelements 89a, des Koppelelements 87a und des anderen weiteren Koppelelements 90a und/oder des anderen Koppelelements 88a und des weiteren Koppelelements 89a, gezeigt. Insbesondere sind das Koppelelement 87a und das andere Koppelelement 88a zumindest im Wesentlichen baugleich ausgebildet. Bevorzugt sind das weitere Koppelelement 89a und das andere weitere Koppelelement 90a zumindest im Wesentlichen baugleich ausgebildet. In Figur 6 ist ein gekoppelter Zustand der Koppeleinheit 80a gezeigt, wobei ein Koppelelement 87a, 88a und ein weiteres Koppelelement 89a, 90a formschlüssig ineinandergreifen. Die Koppelelemente 87a, 88a, insbesondere das Koppelelement 87a und das andere Koppelelement 88a, und die weiteren Koppelelemente 89a, 90a, insbesondere das weitere Koppelelement 89a und das andere weitere Koppelelement 90a, bilden jeweils zumindest eine Führungsfläche 202a aus, welche schräg zur Verbindungsrichtung 78a ausgerichtet sind und dazu vorgesehen sind, ein weiteres Koppelelement 89a, 90a oder ein Koppelelement 87a, 88a bei einem zumindest im Wesentlichen parallel zur Verbindungsrichtung 78a erfolgenden Aufeinanderbewegen von zwei Koppelelementen 87a, 88a, 89a, 90a, insbesondere durch eine gegenseitige Verschwenkung der Koppelelemente 87a, 88a, 89a, 90a jeweils um eine zumindest im Wesentlichen senkrecht zur Verbindungsrichtung 78a ausgerichtete Achse, zumindest im Wesentlichen selbstständig in einen gekoppelten Zustand zu überführen. Die Koppelelemente 87a, 88a, insbesondere das Koppelelement 87a und das andere Koppelelement 88a, bilden jeweils eine weitere Führungsfläche 204a aus, die an einem entlang der Haupterstreckungsachse 188a des jeweiligen Koppelelements 87a, 88a ausgebildeten Ende 206a des jeweiligen Koppelelements 87a, 88a angeordnet ist. Die Führungsflächen 202a sind jeweils an einem Formschlussfortsatz 170a, 172a der Koppelelemente 87a, 88a, 89a, 90a angeordnet, insbesondere an einer einem entlang der Haupterstreckungsachse 188a des jeweiligen Koppelelements 87a, 88a, 89a, 90a ausgebildeten Ende 206a, 208a des jeweiligen Koppelelements 87a, 88a, 89a, 90a zugewandten Außenseite des Formschlussfortsatzes 170a, 172a. Die weitere Führungsfläche 204a ist entlang einer Haupterstreckungsachse 188a des Koppelelements 87a, 88a zwischen einem entlang der Haupterstreckungsachse 188a des Koppelelements 87a, 88a ausgebildeten Ende 206a des Koppelelements 87a, 88a und dem Formschlussfortsatz 170a des Koppelelements 87a, 88a angeordnet. Insbesondere begrenzt die weitere Führungsfläche 204a das entlang der Haupterstreckungsachse 188a des Koppelelements 87a, 88a ausgebildete Ende 206a des Koppelelements 87a, 88a. In der in Figur 6 gezeigten Ausgestaltung des Koppelelements 87a, 88a sind die Führungsfläche 202a des Koppelelements 87a, 88a und die weitere Führungsfläche 204a des Koppelelements 87a, 88a über einen zumindest im Wesentlichen parallel zur Verbindungsrichtung 78a verlaufenden Flächenabschnitt getrennt voneinander angeordnet. Alternativ ist denkbar, dass die Führungsfläche 202a und die weitere Führungsfläche 204a des Koppelelements 87a, 88a einteilig ausgebildet sind und/oder bündig ineinander übergehen. Ein die weitere Führungsfläche 204a ausbildender Bereich des Koppelelements 87a, 88a ist vorzugsweise durch ein Umbiegen ausgeformt. Die Formschlussfortsätze 170a, 172a der Koppelelemente 87a, 88a, 89a, 90a der Koppeleinheit 80a sind jeweils durch ein Herausbiegen und/oder ein Herausdrücken eines Materials der als Blechteil ausgebildeten Koppelelemente 87a, 88a, 89a, 90a ausgeformt. Die Formschlussausnehmungen 174a, 176a der Koppelelemente 87a, 88a, 89a, 90a der Koppeleinheit 80a sind jeweils durch ein Herausstanzen, ein Ausschneiden und/oder ein Herausdrücken eines Materials der als Blechteil ausgebildeten Koppelelemente 87a, 88a, 89a, 90a ausgeformt. Die Führungsflächen 202a und die weiteren Führungsflächen 204a sind jeweils schräg zur Verbindungsrichtung 78a ausgerichtet und schräg zu einer senkrecht zur Verbindungsrichtung 78a ausgerichteten Ebene oder Achse ausgerichtet. Bevorzugt sind die Führungsflächen 202a und die weiteren Führungsflächen 204a jeweils zumindest größtenteils ebenflächig ausgebildet. Insbesondere sind die Führungsflächen 202a und die weiteren Führungsflächen 204a an einem entlang der Verbindungsrichtung 78a ausgebildeten Randbereich der Führungsflächen 202a und/oder der weiteren Führungsflächen 204a abgerundet, wobei die Führungsflächen 202a und/oder die weiteren Führungsflächen 204a stetig in zumindest eine zumindest im Wesentlichen parallel zur Verbindungsrichtung 78a ausgerichtete Außenfläche des Koppelelements 87a, 88a, 89a, 90a, an dem die jeweilige Führungsfläche 202a und/oder die jeweilige weitere Führungsfläche 204a angeordnet sind/ist, übergehen. Vorzugsweise spannt ein Normalenvektor einer an einem Koppelelement 87a, 88a, 89a, 90a angeordneten Führungsfläche 202a, 204a mit einer zumindest im Wesentlichen parallel zur Verbindungsrichtung 78a ausgerichteten Achse einen Führungswinkel 212a von mindestens 5°, vorzugsweise mindestens 10°, und bevorzugt mindestens 15°, und/oder von höchstens 60°, vorzugsweise höchstens 45° und bevorzugt höchstens 35°, auf. Insbesondere sind die Führungsflächen 202a und die weiteren Führungsflächen 204a dazu vorgesehen, die Koppeleinheit 80a beim Aufeinanderbewegen eines Koppelelements 87a, 88a und eines weiteren Koppelelements 89a, 90a parallel zur Verbindungsrichtung 78a, insbesondere auch unabhängig von einer Betätigung durch die Befestigungseinheit 76a, zumindest im Wesentlichen selbstständig in den gekoppelten Zustand zu überführen. Bevorzugt sind die Führungsflächen 202a und die weiteren Führungsflächen 204a dazu vorgesehen, das Koppelelement 87a, 88a und das weitere Koppelelement 89a, 90a beim Aufeinanderbewegen des Koppelelements 87a, 88a und des weiteren Koppelelements 89a, 90a parallel zur Verbindungsrichtung 78a schräg, insbesondere quer, zur Verbindungsrichtung 78a relativ zueinander zu bewegen, wobei sich insbesondere das Koppelelement 87a, 88a und das weitere Koppelelement 89a, 90a über die Führungsflächen 202a, 204a gegenseitig mit einer Kraft beaufschlagen. Alternativ ist denkbar, dass lediglich ein Koppelelement 87a, 88a, 89a, 90a der Koppeleinheit 80a, insbesondere das Koppelelement 87a, 88a oder das weitere Koppelelement 89a, 90a quer zur Verbindungsrichtung 78a bewegbar ist, wobei das jeweils andere Koppelelement 87a, 88a, 89a, 90a beim Aufeinanderbewegen der Koppelelemente 87a, 88a, 89a, 90a parallel zur Verbindungsrichtung 78a über die Führungsfläche(n) 202a, 204a quer zur Verbindungsrichtung 78a an dem Koppelelement 87a, 88a, 89a, 90a entlang bewegt wird.

Die Koppeleinheit 80a weist eine senkrecht zur Verbindungsrichtung 78a ausgerichtete geradlinige Koppelrichtung 214a auf, wobei das Koppelelement 87a, 88a dazu vorgesehen ist, in Koppelrichtung 214a in das weitere Koppelelement 89a, 90a einzugreifen. Insbesondere ist das weitere Koppelelement 89a, 90a dazu vorgesehen, zum Lösen von dem Koppelelement 87a, 88a und/oder bei dem Ineinanderschieben der Verbindungsstücke 68a, 70a, 72a, 74a in eine der Koppelrichtung 214a entgegengerichtete Richtung bewegt zu werden (vgl. Figuren 3 bis 5). Das Koppelelement 87a und das andere Koppelelement 88a bilden jeweils einen Formschlussfortsatz 170a und einen Schiebefortsatz 216a aus, wobei der Formschlussfortsatz 170a zu einer Übertragung der Antriebskraft auf eines der weiteren Koppelelemente 89a, 90a in eine zumindest im Wesentlichen parallel zur Verbindungsrichtung 78a ausgerichtete Zugrichtung vorgesehen ist und wobei der Schiebefortsatz 216a zu einer Übertragung der Antriebskraft auf eines der weiteren Koppelelemente 89a, 90a in eine zumindest im Wesentlichen parallel zur Verbindungsrichtung 78a ausgerichtete und der Zugrichtung entgegengerichtete Schieberichtung vorgesehen ist. Der Formschlussfortsatz 170a und der Schiebefortsatz 216a erstrecken sich, insbesondere entlang einer Haupterstreckungsebene 186a des Koppelelements 87a, 88a betrachtet (vgl. Figur 6), von der Haupterstreckungsebene 186a des Koppelelements 87a, 88a aus in die Koppelrichtung 214a. Insbesondere erstreckt sich der Formschlussfortsatz 172a des weiteren Koppelelements 89a, 90a, insbesondere entlang einer Haupterstreckungsebene 186a des weiteren Koppelelements 89a, 90a betrachtet (vgl. Figur 6), von der Haupterstreckungsebene 186a des weiteren Koppelelements 89a, 90a aus in die der Koppelrichtung 214a entgegengerichtete Richtung.

Die Koppelelemente 87a, 88a der Koppeleinheit 80a, insbesondere das Koppelelement 87a und das andere Koppelelement 88a, bilden jeweils zumindest eine Kraftübertragungsfläche 218a aus, wobei die Koppelrichtung 214a mit zumindest einer Flächennormalen der Kraftübertragungsfläche 218a einen Winkel 224a von größer als 90°, vorzugsweise größer als 90° und bevorzugt zumindest im Wesentlichen 100°, aufspannt. Bevorzugt bilden die weiteren Koppelelemente 89a, 90a jeweils zumindest eine Kraftübertragungsfläche 220a aus, wobei die Koppelrichtung 214a mit zumindest einer Flächennormalen der Kraftübertragungsfläche 220a des weiteren Koppelelements 89a, 90a einen Winkel 226a von kleiner als 85° und bevorzugt von zumindest im Wesentlichen 80°, aufspannt. Bevorzugt beträgt ein Winkel zwischen der Koppelrichtung 214a und einer Haupterstreckungsebene des Schiebefortsatzes mehr als 0°, vorzugsweise mehr als 3° und bevorzugt mindestens 5°. Bevorzugt sind die Kraftübertragungsflächen 218a, 220a des Koppelelements 87a, 88a und des weiteren Koppelelements 89a, 90a derart angeordnet und/oder ausgebildet, dass diese gegen eine Bewegung des Koppelelements 87a, 88a entgegen der Koppelrichtung 214a und/oder gegen eine Bewegung des weiteren Koppelelements 89a, 90a in Koppelrichtung 214a zumindest teilweise über einen Formschluss aneinander anliegen. Vorzugsweise bilden das Koppelelement 87a und das andere Koppelelement 88a jeweils eine weitere Kraftübertragungsfläche 228a aus, welche zu einer Kraftübertragung von dem jeweiligen Koppelelement 87a, 88a auf eines der weiteren Koppelelemente 89a, 89a in Schieberichtung vorgesehen ist. Die weitere Kraftübertragungsfläche 228a ist an dem Schiebefortsatz 216a angeordnet. Die weitere Kraftübertragungsfläche 228a ist an einer die Formschlussausnehmung 174a des Koppelelements 87a, 88a begrenzenden Innenseite des Schiebefortsatzes 216a angeordnet. Die weitere Kraftübertragungsfläche 228a weist eine Flächennormale auf, welche mit der Koppelrichtung 214a, insbesondere entlang einer Haupterstreckungsebene 186a des Koppelelements 87a, 88a betrachtet (vgl. Figur 6), einen Winkel 230a von mehr als 90°, bevorzugt mindestens 95° und insbesondere zumindest im Wesentlichen 95°, aufspannt. Die weitere Kraftübertragungsfläche 228a und die Haupterstreckungsebene 186a des Koppelelements 87a, 88a spannen, insbesondere entlang der Haupterstreckungsebene 186a des Koppelelements 87a, 88a betrachtet (vgl. Figur 6), einen Winkel von weniger als 90°, bevorzugt höchstens 85° und insbesondere zumindest im Wesentlichen 85°, auf.

Vorzugsweise begrenzt der Schiebefortsatz 216a die Formschlussausnehmung 174a des Koppelelements 87a, 88a zumindest teilweise, insbesondere an einer durch den Formschlussfortsatz 170a und/oder durch die Kraftübertragungsfläche 218a des Koppelelements 87a, 88a begrenzten Seite der Formschlussausnehmung 174a des Koppelelements 87a, 88a. Bevorzugt ist der Schiebefortsatz 216a aus dem Material des als Blechteil ausgebildeten Koppelelements 87a, 88a herausgebogen, vorzugsweise in eine senkrecht zu einer Haupterstreckungsebene 186a des Koppelelements 87a, 88a ausgerichtete Richtung, welche einer Erstreckungsrichtung des Formschlussfortsatzes 170a des Koppelelements 87a, 88a entspricht, in welche vorzugsweise der Formschlussfortsatz 170a des Koppelelements 87a, 88a aus dem Material des Koppelelements 87a, 88a herausgebogen und/oder gedrückt ist. Der Formschlussfortsatz 170a, die Formschlussausnehmung 174a und der Schiebefortsatz 216a des Koppelelements 87a, 88a sind in einem Endbereich 182a des Koppelelements 87a, 88a angeordnet, welcher bevorzugt über die Formschlussausnehmung 174a eine Lasche ausbildet. Bevorzugt umfasst der Endbereich 182a des Koppelelements 87a, 88a entlang der Haupterstreckungsachse 188a des Koppelelements 87a, 88a das entlang der Haupterstreckungsachse 188a des Koppelelements 87a, 88a ausgebildete Ende 206a des Koppelelements 87a, 88a. Der Schiebefortsatz 216a ist von dem Ende 206a des Koppelelements 87a, 88a aus betrachtet entlang der Haupterstreckungsachse 188a des Koppelelements 87a, 88a hinter der Formschlussausnehmung 174a des Koppelelements 87a, 88a angeordnet. Der Formschlussfortsatz 170a des Koppelelements 87a, 88a ist von dem Ende 206a des Koppelelements 87a, 88a aus betrachtet entlang der Haupterstreckungsachse 188a des Koppelelements 87a, 88a vor der Formschlussausnehmung 174a angeordnet, wobei insbesondere die den Formschlussfortsatz 170a begrenzende Kraftübertragungsfläche 218a des Koppelelements 87a, 88a an einer dem Ende 206a abgewandten Seite des Formschlussfortsatzes 170a des Koppelelements 87a, 88a ausgebildet ist. Vorzugsweise sind/ist der Formschlussfortsatz 172a und/oder die Formschlussausnehmung 176a des weiteren Koppelelements 89a, 90a in einem Endbereich 184a des weiteren Koppelelements 89a, 90a angeordnet. Der Endbereich 184a des weiteren Koppelelements 89a, 90a begrenzt entlang der Haupterstreckungsachse 188a des weiteren Koppelelements 89a, 90a ein Ende 208a des weiteren Koppelelements 89a, 90a. Bevorzugt ist der Formschlussfortsatz 172a des weiteren Koppelelements 89a, 90a von dem Ende 208a des weiteren Koppelelements 89a, 90a aus betrachtet entlang der Haupterstreckungsachse 188a des weiteren Koppelelements 89a, 90a vor der Formschlussausnehmung 176a des weiteren Koppelelements 89a, 90a angeordnet. Ein zumindest im Wesentlichen parallel zur Verbindungsrichtung 78a und/oder zur Haupterstreckungsachse 188a des weiteren Koppelelements 89a, 90a ausgerichteter minimaler Abstand 232a zwischen dem Ende 208a des weiteren Koppelelements 89a, 90a und der Formschlussausnehmung 176a und/oder der Kraftübertragungsfläche 220a des weiteren Koppelelements 89a, 90a ist kleiner als ein zumindest im Wesentlichen parallel zur Verbindungsrichtung 78a und/oder zur Haupterstreckungsachse 188a des Koppelelements 87a, 88a ausgerichteter minimaler Abstand 234a zwischen der Formschlussausnehmung 174a und/oder der Kraftübertragungsfläche 218a des Koppelelements 87a, 88a und dem Schiebefortsatz 216a, welcher insbesondere einer maximalen Längserstreckung der Formschlussausnehmung 174a des Koppelelements 87a, 88a entspricht. Besonders bevorzugt beträgt eine Differenz zwischen dem minimalen Abstand 234a zwischen der Formschlussausnehmung 174a und/oder der Kraftübertragungsfläche 218a des Koppelelements 87a, 88a und dem Schiebefortsatz 216a und dem minimalen Abstand 232a zwischen dem Ende 208a des weiteren Koppelelements 89a, 90a und der Formschlussausnehmung 176a und/oder der Kraftübertragungsfläche 220a des weiteren Koppelelements 89a, 90a mindestens 1 mm, vorzugsweise mindestens 2 mm und ebenfalls denkbar mindestens 3 mm.

Die Fortsätze 164a der Koppelelemente 88a, 89a weisen jeweils entlang einer zumindest im Wesentlichen parallel zur Verbindungsrichtung 78a ausgerichteten Achse eine größere maximale Erstreckung auf wie entlang einer zumindest im Wesentlichen senkrecht zur Verbindungsrichtung 78a und/oder zur Haupterstreckungsebene 186a des jeweiligen Koppelelements 88a, 89a ausgerichteten Achse und/oder entlang einer zumindest im Wesentlichen parallel zur Koppelrichtung 214a ausgerichteten Achse. Insbesondere unterscheiden sich die Fortsätze 164a der Koppelelemente 88a, 89a jeweils von einem aus einem Blech, insbesondere dem Material der Koppelelemente 88a, 89a, herausgebogenen Fortsatz, wie beispielsweise einer in den Figuren gezeigten Ausgestaltung des Schiebefortsatzes 216a.

Es ist denkbar, dass die Antriebseinheit 32a dazu vorgesehen ist, die Bearbeitungswerkzeuge 46a, 48a bei einem Deaktivieren stets in einen geöffneten Zustand anzuordnen, wobei vorzugsweise die Koppelelemente 87a, 88a, 89a, 90a in einem unbelasteten Zustand angeordnet sind. Dadurch kann ein vorteilhaft einfaches Trennen der Koppelelemente 87a, 88a, 89a, 90a ermöglicht werden, insbesondere da die Kraftübertragungsflächen 202a, 204a vorteilhaft gering mit einer Kraft beaufschlagt sind. Alternativ ist denkbar, dass die Antriebseinheit 32a dazu vorgesehen ist, die Bearbeitungswerkzeuge 46a, 48a bei einem Deaktivieren zu einer sicheren Verstauung des Werkzeugmaschinensystems 10a stets in einen geschlossenen Zustand anzuordnen. Es ist denkbar, dass die Antriebseinheit 32a dazu vorgesehen ist, beim Deaktivieren, nach einem Bewegen des Bearbeitungswerkzeugs 46a in den geschlossenen Zustand der Bearbeitungswerkzeuge 46a, 48a das Koppelelement 87a kurzzeitig mit einer Rücksetzkraft anzutreiben, welche insbesondere dem Schließen der Bearbeitungswerkzeuge 46a, 48a entgegengerichtet ist, diese aber vorzugsweise nicht in einen geöffneten Zustand zurückführt. Dadurch kann eine Spannung der Koppelelemente 87a, 88a, 89a, 90a jeweils aufeinander vorteilhaft reduziert werden, wodurch die Koppelelemente 87a, 88a, 89a, 90a, insbesondere analog zu dem vorher beschriebenen Vorgehen zu einem Trennen der Koppelelemente 87a, 88a, 89a, 90a, vorteilhaft einfach voneinander getrennt werden können.

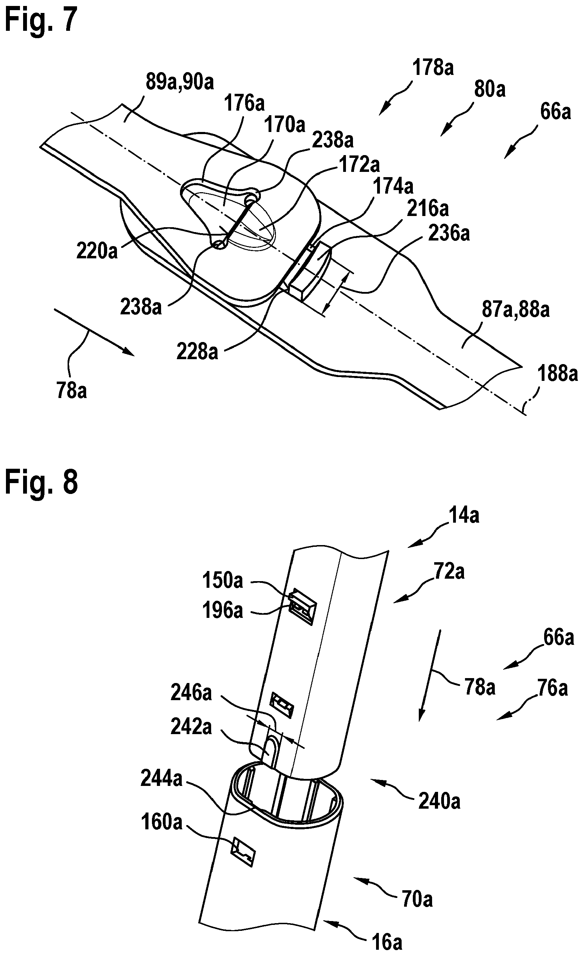

In Figur 7 ist eine perspektivische Ansicht des in der Figur 6 gezeigten Koppelbereichs 178a der Koppeleinheit 80a gezeigt. Die in der Figur 7 gezeigten Koppelelemente 87a, 88a, 89a, 90a der Koppeleinheit 80a sind in einem miteinander gekoppelten Zustand gezeigt. Der Schiebefortsatz 216a weist, insbesondere zumindest im Wesentlichen senkrecht zur Verbindungsrichtung 78a und/oder zu der Haupterstreckungsachse 188a des Koppelelements 87a, 88a, eine maximale Quererstreckung 236a auf, welche zumindest im Wesentlichen einer maximalen Quererstreckung der Formschlussausnehmung 174a des Koppelelements 87a, 88a an der durch den Schiebefortsatz 216a begrenzten Seite der Formschlussausnehmung 174a des Koppelelements 87a, 88a entspricht. An den Formschlussfortsätzen 170a, 172a zugewandten Seiten der Formschlussausnehmungen 174a, 176a des Koppelelements 87a, 88a und des weiteren Koppelelements 89a, 90a begrenzen das Koppelelement 87a, 88a und das weitere Koppelelement 89a, 90a jeweils runde Ausnehmungen 238a, die jeweils als Teil einer der Formschlussausnehmungen 174a, 176a ausgebildet sind. Die Ausnehmungen 238a der Koppelelemente 87a, 88a, 89a, 90a sind vorzugsweise dazu vorgesehen, eine auf das jeweilige Koppelelement 87a, 88a, 89a, 90a wirkende Spannungsbelastung vorteilhaft zu verteilen. Durch die Ausnehmungen 238a der Koppelelemente 87a, 88a, 89a, 90a kann ein ungewolltes Einreißen des Materials der Koppelelemente 87a, 88a, 89a, 90a in einem Bereich der Formschlussausnehmungen 174a, 176a vorteilhaft verhindert werden. Vorzugsweise erstrecken sich die Ausnehmungen 238a der Koppelelemente 87a, 88a, 89a, 90a jeweils senkrecht zu einer Haupterstreckungsachse 188a des jeweiligen Koppelelements 87a, 88a, 89a, 90a neben dem Formschlussfortsatz 170a, 172a. Insbesondere erstrecken sich die Ausnehmungen 238a der Koppelelemente 87a, 88a jeweils über eine vollständige Dicke des Materials des Koppelelements 87a, 88a und/oder des weiteren Koppelelements 89a, 90a.

Die Formschlussfortsätze 170a, 172a des Koppelelements 87a, 88a und des weiteren Koppelelements 89a, 90a weisen jeweils senkrecht zu der Haupterstreckungsebene 186a des Koppelelements 87a, 88a und/oder des weiteren Koppelelements 89a, 90a betrachtet eine parabelförmige Grundform auf, welche insbesondere über Schenkel einer gedachten Parabel in die jeweiligen Formschlussausnehmung 174a, 176a übergeht. Insbesondere erstrecken sich die Führungsflächen 202a, 204a jeweils senkrecht zu der Haupterstreckungsebene 186a des Koppelelements 87a, 88a und/oder des weiteren Koppelelements 89a, 90a betrachtet von einem Scheitelpunkt der gedachten Parabel der parabelförmige Grundform des jeweiligen Formschlussfortsatzes 170a, 172a bis zur jeweiligen Formschlussausnehmung 174a, 176a. Vorzugsweise sind die Kraftübertragungsflächen 218a, 220a des Koppelelements 87a, 88a und des weiteren Koppelelements 89a, 90a und/oder die weitere Kraftübertragungsfläche 228a des Koppelelements 87a, 88a, welche insbesondere an dem Schiebefortsatz 216a angeordnet ist, zumindest im Wesentlichen ebenflächig ausgebildet. Es sind aber auch andere Ausgestaltungen der Formschlussfortsätze 170a, 172a und/oder der Formschlussausnehmungen 174a, 176a denkbar.

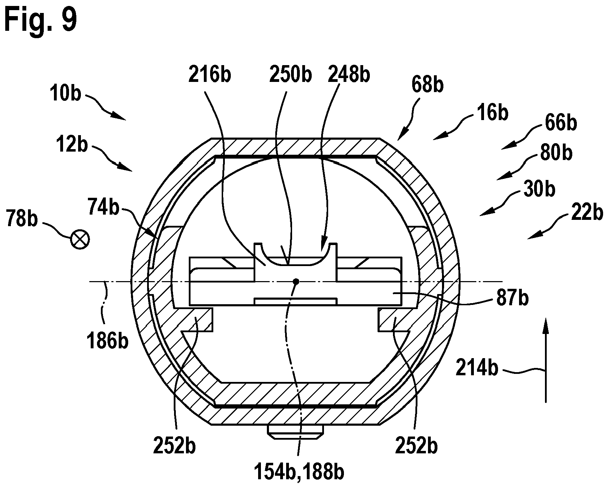

Es ist denkbar, dass der Schiebefortsatz 216a zumindest eine zumindest im Wesentlichen senkrecht zur Verbindungsrichtung 78a verlaufende Außenkontur aufweist, die korrespondierend zu einer Außenkontur eines Formschlussfortsatzes 170a, 172a des weiteren Koppelelements 89a, 90a ausgebildet ist (vgl. Figur 9).

In Figur 8 ist eine perspektivische Darstellung des in den Figuren 3 bis 5 gezeigten weiteren ersten Verbindungsstücks 70a, im Folgenden erstes Verbindungsstück, und des in den Figuren 3 bis 5 gezeigten zweiten Verbindungsstücks 72a in einem voneinander getrennten Zustand gezeigt. Die Verbindungsstücke 70a, 72a sind koaxial zueinander angeordnet, wobei die Verbindungsstücke 70a, 72a vorzugsweise über eine Bewegung des zweiten Verbindungsstücks 72a in Verbindungsrichtung 78a miteinander verbindbar sind. Die Verbindungsvorrichtung 66a, insbesondere die Befestigungseinheit 76a, umfasst eine Führungseinheit 240a, welche dazu vorgesehen ist, das erste Verbindungsstück 70a und das zweite Verbindungsstück 72a bei dem Ineinanderschieben aneinander zu führen. Bevorzugt ist die Führungseinheit 240a dazu vorgesehen, zum Ineinanderschieben des ersten Verbindungsstücks 70a und des zweiten Verbindungsstücks 72a eine Ausrichtung des ersten Verbindungsstücks 70a und des zweiten Verbindungsstücks 72a, insbesondere um eine zumindest im Wesentlichen parallel zur Verbindungsrichtung 78a ausgerichtete Achse, relativ zueinander vorzugeben. Die Führungseinheit 240a umfasst ein Führungselement 242a, welches als ein Fortsatz ausgebildet ist und an dem zweiten Verbindungsstück 72a angeordnet ist. Die Führungseinheit 240a umfasst eine Aufnahme 244a, welche vorzugsweise von dem ersten Verbindungsstück 70a begrenzt ist. Bevorzugt ist die zumindest eine Aufnahme 244a der Führungseinheit 240a dazu vorgesehen, das Führungselement 242a beim Ineinanderschieben des ersten Verbindungsstücks 70a und des zweiten Verbindungsstücks 72a aufzunehmen und vorzugsweise entlang einer Längserstreckung der Aufnahme 244a der Führungseinheit 240a entlang einer parallel zur Verbindungsrichtung 78a ausgerichteten Achse zu führen. Besonders bevorzugt ist die Führungseinheit 240a derart ausgebildet, dass die Verbindungsvorrichtung 66a zum Ineinanderschieben des ersten Verbindungsstücks 70a und des zweiten Verbindungsstücks 72a genau eine mögliche Ausrichtung des ersten Verbindungsstücks 70a und des zweiten Verbindungsstücks 72a, welche insbesondere in Figur 8 gezeigt ist, um eine zumindest im Wesentlichen parallel zur Verbindungsrichtung 78a ausgerichtete Achse relativ zueinander aufweist. Das Führungselement 242a ist einteilig mit dem zweiten Verbindungsstück 72a, insbesondere dem Grundkörper des zweiten Verbindungsstücks 72a, ausgebildet. Die Aufnahme 244a ist durch das erste Verbindungsstück 70a, insbesondere den Grundkörper des ersten Verbindungsstücks 70a, begrenzt. Es sind auch andere Ausgestaltungen der Führungseinheit 240a denkbar, beispielsweise mit separat ausgebildeten Führungselementen 242a und/oder mit mehr als einem Führungselement 242a und/oder mit mehr als einer Aufnahme 244a. Bevorzugt entspricht eine Anzahl von Aufnahmen 244a der Führungseinheit 240a zumindest einer Anzahl von Führungselementen 242a. Es ist auch denkbar, dass die Verbindungsvorrichtung 66a, insbesondere die Befestigungseinheit 76a, eine höhere Anzahl an Aufnahmen 244a der Führungseinheit 240a aufweist als eine Anzahl von Führungselementen 242a, bevorzugt falls die Führungseinheit 240a mehrere mögliche Ausrichtungen des ersten Verbindungsstücks 70a und des zweiten Verbindungsstücks 72a relativ zueinander zum Ineinanderschieben ermöglicht.

Bevorzugt umfasst die Verbindungsvorrichtung 66a des Werkzeugmaschinensystems 10a verschiedene Führungseinheiten 240a, welche unterschiedlich ausgebildete Führungselemente 242a umfassen. Bevorzugt ist das Führungselement 242a an dem zweiten Verbindungsstück 72a angeordnet ist. Vorzugsweise ist zumindest ein weiteres, insbesondere von dem Führungselement 242a verschieden ausgebildetes, Führungselement einer weiteren Führungseinheit der Verbindungsvorrichtung 66a an dem weiteren zweiten Verbindungsstück 74a angeordnet. Insbesondere umfassen die Führungseinheiten 240a der Verbindungsvorrichtung 66a unterschiedlich ausgebildete Aufnahmen 244a zu einer Aufnahme der Führungselemente 242a bei einem Ineinanderschieben der Verbindungsstücke 68a, 70a, 72a, 74a. Vorzugsweise ist die Aufnahme 244a der Führungseinheit 240a an dem weiteren ersten Verbindungsstück 70a angeordnet. Bevorzugt ist zumindest eine weitere Aufnahme der weiteren Führungseinheit an dem ersten Verbindungsstück 68a angeordnet. Bevorzugt ist die weitere Aufnahme über das erste Verbindungsstück 68a an der Werkzeugmaschine 12a angeordnet und zu einer Aufnahme eines der zwei unterschiedlich ausgebildeten Führungselemente 242a vorgesehen. Vorzugsweise ist die Aufnahme 244a der Führungseinheit 240a über das weitere erste Verbindungsstück 70a an dem Verlängerungsstück oder Adapterstück 16a angeordnet und zu einer Aufnahme des, insbesondere an dem Werkzeugaufsatz 14a angeordneten, Führungselements 242a vorgesehen. Insbesondere weisen die zwei Führungselemente 242a, insbesondere das Führungselement 242a und das weitere Führungselement, unterschiedliche Querschnittsflächen und/oder Quererstreckungen 246a auf (in Figur 8 beispielhaft für das Führungselement 242a gezeigt). Besonders bevorzugt weist das Führungselement 242a eine kleinere Querschnittsfläche und/oder Quererstreckung 246a auf als das weitere Führungselement. Vorzugsweise weist das weitere Führungselement eine größere Querschnittsfläche und/oder Quererstreckung auf als die Aufnahme 244a der Führungseinheit 240a. Bevorzugt sind die Führungseinheiten 240a, insbesondere die Führungselemente 242a und die Aufnahmen 244a, derart ausgebildet, dass über die Verbindungsvorrichtung 66a zwischen das Verlängerungsstück oder Adapterstück 16a und den Werkzeugaufsatz 14a oder zwischen die Werkzeugmaschine 12a und das Verlängerungsstück oder Adapterstück 16a kein, insbesondere zumindest im Wesentlichen baugleich zu dem das Verlängerungsstück oder Adapterstück 16a ausgebildetes, weiteres Verlängerungsstück oder Adapterstück angeordnet werden kann.

In Figur 9 ist ein weiteres Ausführungsbeispiel der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen vorherigen Ausführungsbeispiels, insbesondere der Figuren 1 bis 8, verwiesen werden kann. Zur Unterscheidung der Ausführungsbeispiele ist der Buchstabe a den Bezugszeichen des Ausführungsbeispiels in den Figuren 1 bis 8 nachgestellt. In dem Ausführungsbeispiel der Figur 9 ist der Buchstabe a durch den Buchstaben b ersetzt.

In Figur 9 ist eine alternative Ausgestaltung eines Koppelelements 87b einer Koppeleinheit 30b einer Verbindungsvorrichtung 66b für eine Werkzeugmaschine 12b und/oder für ein Werkzeugmaschinensystem 10b gezeigt. Die Verbindungsvorrichtung 66b umfasst zumindest ein erstes Verbindungsstück 68b, welches insbesondere als Teil einer Grundeinheit 22b der Werkzeugmaschine 12b oder als Teil eines Verlängerungsstücks oder Adapterstücks 16b ausgebildet ist, und zumindest ein zweites Verbindungsstück 74b, welches insbesondere als Teil eines Verlängerungsstücks oder Adapterstücks 16b oder als Teil eines Werkzeugaufsatzes für die Werkzeugmaschine 12b ausgebildet ist. Die Verbindungsvorrichtung 66b umfasst eine Befestigungseinheit, die dazu vorgesehen ist, das zweite Verbindungsstück 74b über eine Bewegung entlang einer zumindest im Wesentlichen geradlinigen Verbindungsrichtung 78b an dem ersten Verbindungsstück 68b zu befestigen, und eine Koppeleinheit 80b, die zumindest in einem gekoppelten Zustand dazu vorgesehen ist, eine Antriebskraft zumindest im Wesentlichen parallel zur Verbindungsrichtung 78b von dem ersten Verbindungsstück 68b, insbesondere ein Koppelelement 87b der Koppeleinheit 80b, das als Teil des ersten Verbindungsstücks 68b ausgebildet ist, an das zweite Verbindungsstück 74b, insbesondere ein weiteres Koppelelement der Koppeleinheit 80b (in Figur 9 nicht gezeigt), das als Teil des zweiten Verbindungsstücks 74b ausgebildet ist, zu übertragen. Die in der Figur 9 zumindest teilweise dargestellte Verbindungsvorrichtung 66b weist eine zumindest im Wesentlichen analoge Ausgestaltung zu der in der Beschreibung der Figuren 1 bis 8 beschriebenen Verbindungsvorrichtung 66a auf, so dass bezüglich einer Ausgestaltung der in der Figur 9 dargestellten Verbindungsvorrichtung 66b zumindest im Wesentlichen auf die Beschreibung der Figuren 1 bis 8 verwiesen werden kann. Im Unterschied zu der in der Beschreibung der Figuren 1 bis 8 beschriebenen Verbindungsvorrichtung 66a bildet das Koppelelement 67b der in der Figur 9 dargestellten Verbindungsvorrichtung 66b vorzugsweise einen Schiebefortsatz 216b aus, der dazu vorgesehen ist, das weitere Koppelelement in dem gekoppelten Zustand der Koppeleinheit 80b zur Übertragung der Antriebskraft in eine zumindest im Wesentlichen parallel zur Verbindungsrichtung 78b ausgerichtete Schieberichtung zu schieben, wobei der Schiebefortsatz 216b zumindest eine zumindest im Wesentlichen senkrecht zur Verbindungsrichtung 78b verlaufende Außenkontur 248b aufweist, die korrespondierend zu einer Außenkontur eines Formschlussfortsatzes des weiteren Koppelelements ausgebildet ist. Die Außenkontur 248b des Schiebefortsatzes 216b und die Außenkontur des Formschlussfortsatzes des weiteren Koppelelements (in Figur 9 nicht gezeigt) sind rund, vorzugsweise teilweise kreisbogenförmig, ausgebildet. Bevorzugt weist der Schiebefortsatz 216b über eine gesamte Erstreckung entlang einer Haupterstreckungsachse 188b des Koppelelements 67b die Außenkontur 248b auf, wobei insbesondere eine die Außenkontur 248b des Schiebefortsatzes 216b begrenzende Außenfläche 250b des Schiebefortsatzes 216b zumindest im Wesentlichen parallel zur Haupterstreckungsachse 188b des Koppelelements 67b verläuft. Vorzugsweise weist der Formschlussfortsatz des weiteren Koppelelements in einer senkrecht zur Haupterstreckungsebene 186b des weiteren Koppelelements angeordneten und/oder in einer eine Haupterstreckungsachse 188b des weiteren Koppelelements umfassenden Schnittebene des weiteren Koppelelements an einer die Außenkontur des Formschlussfortsatzes des weiteren Koppelelements ausbildenden Seite des Formschlussfortsatzes des weiteren Koppelelements eine gebogene Grundform auf, welche insbesondere eine Führungsfläche des weiteren Koppelelements umfasst. Vorzugsweise begrenzt die Außenkontur des Formschlussfortsatzes des weiteren Koppelelements eine eine Formschlussausnehmung des weiteren Koppelelements begrenzende Innenseite des weiteren Koppelelements und/oder des Formschlussfortsatzes des weiteren Koppelelements und/oder eine Kraftübertragungsfläche des weiteren Koppelelements und/oder des Formschlussfortsatzes des weiteren Koppelelements. Besonders bevorzugt ist die Außenkontur des Formschlussfortsatzes des weiteren Koppelelements an einem der Formschlussausnehmung des weiteren Koppelelements zugewandten Ende des Formschlussfortsatzes des weiteren Koppelelements angeordnet. Bevorzugt sind die Außenkontur 248b des Schiebefortsatzes 216b und die Außenkontur des Formschlussfortsatzes des weiteren Koppelelements kongruent ausgebildet. Das erste Verbindungsstück 68b umfasst insbesondere zwei Halteelemente 252b, welche sich entlang einer Längsachse 154b des ersten Verbindungsstücks 68b unterhalb des Koppelelements 87b erstrecken. Die Halteelemente 252b sind vorzugsweise dazu vorgesehen, eine Bewegung des Koppelelements 87b in eine einer Koppelrichtung 214b der Koppeleinheit 80b entgegengerichtete Richtung zu begrenzen. Insbesondere kann eine zu starke Relativbewegung der zwei zu verbindenden Koppelelemente 68b quer zur Verbindungsrichtung 78b vorteilhaft verhindert werden. Die von dem ersten Verbindungsstück 68b ausgebildeten Halteelemente 252b erstrecken sich entlang der Längsachse 154b des ersten Verbindungsstücks 68b betrachtet vorzugsweise von einer Innenwand eines Grundkörpers des ersten Verbindungsstücks 68b in eine zumindest im Wesentlichen senkrecht zur Längsachse 154b des ersten Verbindungsstücks 68b in einen von dem Grundkörper des ersten Verbindungsstücks 68b begrenzten Innenbereich hinein. Insbesondere sind die Halteelemente 252b jeweils als eine Nut ausgebildet, deren Haupterstreckungsachse zumindest im Wesentlichen parallel zur Längsachse 154b des ersten Verbindungsstücks 68b verläuft. Es sind aber auch andere Ausgestaltungen der Halteelemente 252b denkbar, beispielsweise als Fortsätze, als Steg o. dgl. und/oder mit einer von Zwei verschiedenen Anzahl. Vorzugsweise sind die Halteelemente 252b auch bei der in den Figuren 1 bis 8 beschriebenen Verbindungsvorrichtung 66a, insbesondere den ersten Verbindungsstücken 68a, 70a, denkbar.

## Patentansprüche

1. Verbindungsvorrichtung für eine, insbesondere stabgebundene, Werkzeugmaschine (12a; 12b) und/oder für ein Werkzeugmaschinensystem (10a; 10b), mit zumindest einem ersten Verbindungsstück (68a, 70a; 68b), welches insbesondere als Teil einer Grundeinheit (22a; 22b) der Werkzeugmaschine (12a; 12b) oder als Teil eines Verlängerungsstücks oder Adapterstücks (16a; 16b) ausgebildet ist, und mit zumindest einem zweiten Verbindungsstück (72a, 74a; 74b), welches insbesondere als Teil eines Verlängerungsstücks oder Adapterstücks (16a; 16b) oder als Teil eines Werkzeugaufsatzes (14a) für die Werkzeugmaschine (12a; 12b) ausgebildet ist, mit zumindest einer Befestigungseinheit (76a), die dazu vorgesehen ist, das zweite Verbindungsstück (72a, 74a; 74b) über eine Bewegung entlang einer zumindest im Wesentlichen geradlinigen Verbindungsrichtung (78a; 78b) an dem ersten Verbindungsstück (68a, 70a; 68b) zu befestigen, und mit zumindest einer Koppeleinheit (80a; 80b), die zumindest in einem gekoppelten Zustand dazu vorgesehen ist, eine Antriebskraft zumindest im Wesentlichen parallel zur Verbindungsrichtung (78a; 78b) von dem ersten Verbindungsstück (68a, 70a; 68b), insbesondere einem Koppelelement (87a, 88a; 87b) der Koppeleinheit (80a; 80b), das als Teil des ersten Verbindungsstücks (68a, 70a; 68b) ausgebildet ist, an das zweite Verbindungsstück (72a, 74a; 74b), insbesondere ein weiteres Koppelelement (89a, 90a) der Koppeleinheit (80a; 80b), das als Teil des zweiten Verbindungsstücks (72a, 74a; 74b) ausgebildet ist, zu übertragen, **dadurch gekennzeichnet, dass** die Befestigungseinheit (76a) dazu vorgesehen ist, das erste Verbindungsstück (68a, 70a; 68b) und das zweite Verbindungsstück (72a, 74a; 74b) bei oder nach einem Ineinanderschieben des ersten Verbindungsstücks (68a, 70a; 68b) und des zweiten Verbindungsstücks (72a, 74a; 74b) in Verbindungsrichtung (78a; 78b) zumindest im Wesentlichen selbstständig aneinander zu befestigen, wobei die Koppeleinheit (80a; 80b) dazu vorgesehen ist, bei oder nach dem Ineinanderschieben des ersten Verbindungsstücks (68a, 70a; 68b) und des zweiten Verbindungsstücks (72a, 74a; 74b) in Verbindungsrichtung (78a; 78b) zumindest im Wesentlichen selbstständig in den gekoppelten Zustand überzugehen.

2. Verbindungsvorrichtung nach Anspruch 1, **dadurch gekennzeichnet, dass** die Befestigungseinheit (76a) zumindest ein Befestigungselement (150a) umfasst, welches zu einer zumindest im Wesentlichen selbstständigen Befestigung des ersten Verbindungsstücks (68a, 70a; 68b) und des zweiten Verbindungsstücks (72a, 74a; 74b) bei einem Ineinanderschieben des ersten Verbindungsstücks (68a, 70a; 68b) und des zweiten Verbindungsstücks (72a, 74a; 74b) vorgesehen ist, wobei die Koppeleinheit (80a; 80b) zumindest zwei Koppelelemente (87a, 88a, 89a, 90a; 87b) umfasst, die im gekoppelten Zustand der Koppeleinheit (80a; 80b) ineinander eingreifen, wobei das Befestigungselement (150a) dazu vorgesehen ist, beim Ineinanderschieben des ersten Verbindungsstücks (68a, 70a; 68b) und des zweiten Verbindungsstücks (72a, 74a; 74b) ein Koppelelement (89a, 90a) der zwei Koppelelemente (87a, 88a, 89a, 90a; 87b), insbesondere zumindest schräg zur Verbindungsrichtung (78a; 78b), zu betätigen.

3. Verbindungsvorrichtung nach Anspruch 1 oder 2, **dadurch gekennzeichnet, dass** die Koppeleinheit (80a; 80b) zumindest ein Koppelelement (87a, 88a; 87b) und zumindest ein weiteres Koppelelement (89a, 90a) umfasst, wobei das Koppelelement (87a, 88a; 87b) und/oder das weitere Koppelelement (89a, 90a) zumindest eine Führungsfläche (202a, 204a) ausbildet/ausbilden, die schräg zur Verbindungsrichtung (78a; 78b) ausgerichtet ist und dazu vorgesehen ist, das weitere Koppelelement (89a, 90a) oder das Koppelelement (87a, 88a; 87b) bei einem zumindest im Wesentlichen parallel zur Verbindungsrichtung (78a; 78b) erfolgenden Aufeinanderbewegen der zwei Koppelelemente (87a, 88a, 89a, 90a; 87b), insbesondere durch eine gegenseitige Verschwenkung der Koppelelemente (87a, 88a, 89a, 90a; 87b) jeweils um eine zumindest im Wesentlichen senkrecht zur Verbindungsrichtung (78a; 78b) ausgerichtete Achse, zumindest im Wesentlichen selbstständig in einen gekoppelten Zustand zu überführen.

4. Verbindungsvorrichtung nach einem der vorhergehenden Ansprüche, **dadurch gekennzeichnet, dass** die Koppeleinheit (80a; 80b) zumindest ein Koppelelement (87a, 88a; 87b) und zumindest ein weiteres Koppelelement (89a, 90a) umfasst, die jeweils einzeln als ein Blechteil ausgebildet sind und dazu vorgesehen sind, in dem gekoppelten Zustand zur Übertragung der Antriebskraft zumindest formschlüssig ineinanderzugreifen.

5. Verbindungsvorrichtung nach einem der vorhergehenden Ansprüche, **dadurch gekennzeichnet, dass** die Koppeleinheit (80a; 80b) zumindest ein Koppelelement (87a, 88a, 89a, 90a; 87b) umfasst, das zumindest in einem Koppelbereich (178a) der Koppeleinheit (80a; 80b) gegen zumindest eine Bewegung quer zur Verbindungsrichtung (78a; 78b) federelastisch ausgebildet ist, wobei ein unbelasteter Zustand des zumindest einen Koppelelements (87a, 88a, 89a, 90a; 87b) einer Grundposition des Koppelelements (87a, 88a, 89a, 90a; 87b) in dem gekoppelten Zustand entspricht.

6. Verbindungsvorrichtung nach einem der vorhergehenden Ansprüche, **dadurch gekennzeichnet, dass** die Koppeleinheit (80a; 80b) zumindest ein Koppelelement (87a, 88a; 87b) und zumindest ein weiteres Koppelelement (89a, 90a) umfasst, die jeweils zumindest einen Formschlussfortsatz (170a, 172a) und jeweils zumindest eine Formschlussausnehmung (174a, 176a) aufweisen, wobei die Koppelelemente (87a, 88a, 89a, 90a; 87b) dazu vorgesehen sind, in dem gekoppelten Zustand der Koppeleinheit (80a; 80b) formschlüssig ineinanderzugreifen.

7. Verbindungsvorrichtung nach einem der vorhergehenden Ansprüche, **dadurch gekennzeichnet, dass** die Koppeleinheit (80a; 80b) zumindest ein Koppelelement (87a, 88a; 87b) und zumindest ein weiteres Koppelelement (89a, 90a) umfasst, wobei das Koppelelement (87a, 88a; 87b) zumindest einen Formschlussfortsatz (170a) und zumindest einen Schiebefortsatz (216a; 216b) ausbildet, wobei der Formschlussfortsatz (170a) zu einer Übertragung der Antriebskraft auf das weitere Koppelelement (89a, 90a) in eine zumindest im Wesentlichen parallel zur Verbindungsrichtung (78a; 78b) ausgerichtete Zugrichtung vorgesehen ist und wobei der Schiebefortsatz (216a; 216b) zu einer Übertragung der Antriebskraft auf das weitere Koppelelement (89a, 90a) in eine zumindest im Wesentlichen parallel zur Verbindungsrichtung (78a; 78b) ausgerichtete und der Zugrichtung entgegengerichtete Schieberichtung vorgesehen ist.

8. Verbindungsvorrichtung nach einem der vorhergehenden Ansprüche, **dadurch gekennzeichnet, dass** das erste Verbindungsstück (68a, 70a; 68b) und das zweite Verbindungsstück (72a, 74a; 74b) jeweils zumindest im Wesentlichen stabförmig ausgebildet sind, wobei die Verbindungsrichtung (78a; 78b), insbesondere in einem befestigten Zustand der Befestigungseinheit (76a), zumindest im Wesentlichen parallel zu einer Längsachse (154a; 154b) des ersten Verbindungsstücks (68a, 70a; 68b) und/oder zu einer Längsachse (154a; 154b) des zweiten Verbindungsstücks (72a, 74a; 74b) ausgerichtet ist.

9. Verbindungsvorrichtung nach einem der vorhergehenden Ansprüche, **dadurch gekennzeichnet, dass** die Koppeleinheit (80a; 80b) zumindest ein Koppelelement (87a, 88a, 89a, 90a; 87b) umfasst, das, insbesondere zu einem Übergang in den gekoppelten Zustand oder in einen entkoppelten Zustand, jeweils in einem Koppelbereich (178a) der Koppeleinheit (80a; 80b) um eine zumindest im Wesentlichen senkrecht zur Verbindungsrichtung (78a; 78b) ausgerichtete Achse, die insbesondere in einem Nahbereich des das Koppelelement (87a, 88a, 89a, 90a; 87b) umfassenden Verbindungsstücks (68a, 70a, 72a, 74a; 68b, 74b) angeordnet ist, elastisch verschwenkbar ist.

10. Verbindungsvorrichtung nach einem der vorhergehenden Ansprüche, **dadurch gekennzeichnet, dass** die Befestigungseinheit (76a) zumindest ein Rastelement (150a) zu einer formschlüssigen Befestigung des zweiten Verbindungsstücks (72a, 74a; 74b) an dem ersten Verbindungsstück (68a, 70a; 68b) umfasst, wobei das Rastelement (150a) dazu vorgesehen ist, bei einer Bewegung des Rastelements (150a) zu einem Lösen der Befestigungseinheit (76a) zumindest ein Koppelelement (89a, 90a) der Koppeleinheit (80a; 80b), insbesondere zumindest im Wesentlichen direkt, zu betätigen, wobei die Koppeleinheit (80a; 80b) von dem gekoppelten Zustand in den entkoppelten Zustand übergeht.

11. Verbindungsvorrichtung nach einem der vorhergehenden Ansprüche, **dadurch gekennzeichnet, dass** die Koppeleinheit (80a; 80b) zumindest ein Koppelelement (87a, 88a; 87b) umfasst, das zumindest eine Kraftübertragungsfläche (218a, 228a) ausbildet, wobei die Koppeleinheit (80a; 80b) zumindest eine senkrecht zur Verbindungsrichtung (78a; 78b) ausgerichtete geradlinige Koppelrichtung (214a; 214b) aufweist, in die das Koppelelement (87a, 88a; 87b) in ein weiteres Koppelelement (89a, 90a) eingreift, wobei die Koppelrichtung (214a; 214b) mit zumindest einer Flächennormalen der Kraftübertragungsfläche (218a, 228a) einen Winkel (224a, 230a) von größer als 90° aufspannt.

12. Verbindungsvorrichtung nach einem der vorhergehenden Ansprüche, **dadurch gekennzeichnet, dass** die Koppeleinheit (80a; 80b) und/oder die Befestigungseinheit (76a) zumindest ein Sicherungselement (198a) umfassen/umfasst, das dazu vorgesehen ist, in Abhängigkeit von einer Position eines Koppelelements (87a, 88a, 89a, 90a; 87b) der Koppeleinheit (80a; 80b) relativ zu dem Sicherungselement (198a) ein Lösen der Befestigungseinheit (76a) und/oder einen Übergang der Koppeleinheit (80a; 80b) in den entkoppelten Zustand zumindest im Wesentlichen zu verhindern.

13. Verbindungsvorrichtung nach einem der vorhergehenden Ansprüche, **dadurch gekennzeichnet, dass** die Befestigungseinheit (76a) zumindest ein Betätigungselement (158a) umfasst, welches zu einem Lösen der Befestigungseinheit (76a) vorgesehen ist, wobei das erste Verbindungsstück (68a, 70a; 68b) zumindest teilweise eine Handgriffeinheit (28a) ausbildet, wobei das Betätigungselement (158a) als Teil des zweiten Verbindungsstücks (72a, 74a; 74b) ausgebildet ist und, insbesondere zumindest im Wesentlichen unabhängig von einem Zustand der Befestigungseinheit (76a), entlang einer Längsachse (154a; 154b) des zweiten Verbindungsstücks (72a, 74a; 74b) beabstandet von dem ersten Verbindungsstück (68a, 70a; 68b) angeordnet ist.

14. Verbindungsvorrichtung nach einem der vorhergehenden Ansprüche, **dadurch gekennzeichnet, dass** die Koppeleinheit (80a; 80b) zumindest ein Koppelelement (87a, 88a; 87b) und zumindest ein weiteres Koppelelement (89a, 90a) umfasst, wobei das Koppelelement (87a, 88a; 87b) zumindest einen Schiebefortsatz (216a; 216b) ausbildet, der dazu vorgesehen ist, das weitere Koppelelement (89a, 90a) in dem gekoppelten Zustand der Koppeleinheit (80a; 80b) zur Übertragung der Antriebskraft in eine zumindest im Wesentlichen parallel zur Verbindungsrichtung (78a; 78b) ausgerichtete Schieberichtung zu schieben, wobei der Schiebefortsatz (216a; 216b) zumindest eine zumindest im Wesentlichen senkrecht zur Verbindungsrichtung (78a; 78b) verlaufende Außenkontur (248b) aufweist, die korrespondierend zu einer Außenkontur eines Formschlussfortsatzes (172a) des weiteren Koppelelements (89a, 90a) ausgebildet ist.

15. Werkzeugmaschinensystem mit zumindest einer, insbesondere stabgebundenen, Werkzeugmaschine (12a; 12b), mit zumindest einem Werkzeugaufsatz (14a) zu einer direkten oder indirekten Verbindung mit der Werkzeugmaschine (12a; 12b), mit zumindest einem Verlängerungsstück oder Adapterstück (16a; 16b), welches zwischen der Werkzeugmaschine (12a; 12b) und dem Werkzeugaufsatz (14a) anordenbar ist, mit zumindest einer Verbindungsvorrichtung (66a; 66a) nach einem der vorhergehenden Ansprüche, welche zu einer Verbindung der Werkzeugmaschine (12a; 12b) mit dem Verlängerungsstück oder Adapterstück (16a; 16b) oder mit dem Werkzeugaufsatz (14a) oder zu einer Verbindung des Verlängerungsstücks oder Adapterstücks (16a; 16b) mit dem Werkzeugaufsatz (14a) vorgesehen ist.
